# EUROPEAN PATENT APPLICATION

(11) **EP 4 531 463 A1**
(43) Date of publication of application: **02.04.2025**
(21) Application number: 24745608.0
(22) Date of filing: 03.07.2024
(51) Int. Cl.: H04W 48/16, H04W 76/14, H04W 8/00, H04W 84/12, H04W 84/20, H04L 67/104

(54) **ELECTRONIC DEVICE AND METHOD FOR WI-FI DIRECT COMMUNICATION**

(30) Priority: 11.08.2023 KR 20230105604; 24.11.2023 KR 20230165736
(71) Applicant: Samsung Electronics Co., Ltd., Suwon-si, Gyeonggi-do 16677 (KR)
(72) Inventor: LEE, Soonho, Suwon-si, Gyeonggi-do 16677 (KR); JUNG, Buseop, Suwon-si, Gyeonggi-do 16677 (KR); KIM, Junsung, Suwon-si, Gyeonggi-do 16677 (KR); JANG, Wonjun, Suwon-si, Gyeonggi-do 16677 (KR)
(74) Representative: HGF
(86) International application number: PCT/KR2024/009379
(87) International publication number: WO 2025/037752

(57) **Abstract**

An electronic device according to an embodiment may include a wireless communication circuit and a processor. The electronic device may include a memory storing instructions. The instructions may, when executed by the processor, cause the electronic device to establish a connection to an access point (AP) that is a dynamic frequency selection (DFS) owner in case extended bandwidth-based communication is required. The instructions may, when executed by the processor, cause the electronic device to establish a Wi-Fi Direct connection to an external electronic device connected to the AP or receiving a beacon from the AP based on a DFS channel. The instructions may, when executed by the processor, cause the electronic device to perform Wi-Fi Direct communication supporting a 160 megahertz (MHz) bandwidth of a 5 gigahertz (GHz) band with the external electronic device through the DFS channel.

## Description

### Technical Field

Embodiments of the present disclosure relate to an electronic device and a Wi-Fi Direct communication method.

### Description of Related Art

Wireless Fidelity (Wi-Fi) Direct, or Wi-Fi peer-to-peer (P2P), refers to a technology providing direct connections between multiple electronic devices using typical Wi-Fi interfaces. The Wi-Fi Direct technology may provide a direct connection between electronic devices without an access point (AP), an intermediary of an infrastructure network.

An electronic device may be wirelessly connected to other electronic devices through the Wi-Fi Direct technology. The electronic device may use, along with the other electronic devices, a function providing various services such as a data transfer service, a multimedia play service, a document printing service, a display service, a wireless docking service, or a wireless serial bus (WSB) service.

Multiple electronic devices may form a wireless communication group (e.g., a Wi-Fi Direct communication group) to use a Wi-Fi Direct service and, in this case, one of the multiple electronic devices in the group may operate as a group owner (GO), and the remaining electronic devices may each operate as a group client (GC).

An electronic device that is the group owner of the wireless communication group may function as an AP of a wireless local-area network (WLAN). An electronic device that is the group client of the wireless communication group may function as a station on the WLAN.

Using the Wi-Fi Direct technology, such a group may be generated through a one-to-one (1:1) connection and also through one-to-many (1:N) connections and, in this case, the number of group clients that may be accommodated may vary depending on the performance of the electronic device that is the group owner.

The preceding information may be provided as the background, or the related art, for the purpose of increasing the understanding of the present disclosure. No arguments or determinations are made as to whether any of the foregoing is applicable as the prior art to the present disclosure.

### Disclosure of the Invention

### Technical Solutions

According to an embodiment, an electronic device may include a wireless communication circuit and a processor. The electronic device may include a memory that stores instructions. When executed by the processor, the instructions may cause the electronic device to establish a connection to an access point (AP) that is a dynamic frequency selection (DFS) owner at a time when extended bandwidth-based communication is required. When executed by the processor, the instructions may cause the electronic device to establish a Wi-Fi Direct connection to an external electronic device that is connected to the AP or receives a beacon from the AP, based on a DFS channel. When executed by the processor, the instructions may cause the electronic device to perform Wi-Fi Direct communication supporting a 160 megahertz (MHz) bandwidth of a 5 gigahertz (GHz) band through the DFS channel with the external electronic device.

According to an embodiment, an operating method of an electronic device may include establishing a connection to an AP that is a DFS owner at a time when extended bandwidth-based communication is required. The operating method of the electronic device may include establishing a Wi-Fi Direct connection to an external electronic device that is connected to the AP or receives a beacon from the AP, based on a DFS channel. The operating method of the electronic device may include performing Wi-Fi Direct communication supporting a 160 MHz bandwidth of a 5 GHz band through the DFS channel with the external electronic device.

According to an embodiment, an electronic device may include a wireless communication circuit and a processor. The electronic device may include a memory that stores instructions. When executed by the processor, the instructions may cause the electronic device to establish a connection to an AP that is a DFS owner or receive a beacon from the AP at a time when extended bandwidth-based communication is required. When executed by the processor, the instructions may cause the electronic device to establish a Wi-Fi Direct connection to an external electronic device that is connected to the AP, based on a DFS channel. When executed by the processor, the instructions may cause the electronic device to perform Wi-Fi Direct communication supporting a 160 MHz bandwidth of a 5 GHz band through the DFS channel with the external electronic device.

According to an embodiment, an operating method of an electronic device may include establishing a connection to an AP that is a DFS owner or receiving a beacon from the AP at a time when extended bandwidth-based communication is required. The operating method of the electronic device may include establishing a Wi-Fi Direct connection to an external electronic device that is connected to the AP, based on a DFS channel. The operating method of the electronic device may include performing Wi-Fi Direct communication supporting a bandwidth of a 160 MHz bandwidth of a 5 GHz band through the DFS channel with the external electronic device.

### BRIEF DESCRIPTION OF THE DRAWINGS

The above and other aspects, features, and advantages of certain embodiments of the present disclosure will be more apparent from the following detailed description, taken in conjunction with the accompanying drawings, in which:
FIG. 1 is a diagram illustrating a network structure of a Wi-Fi Direct communication group, according to an embodiment;
FIG. 2 is a flowchart illustrating an operation of generating a Wi-Fi Direct communication group, according to an embodiment;
FIG. 3 is a diagram illustrating channel allocation of a 5 gigahertz (GHz) band;
FIG. 4 is a diagram illustrating a Wi-Fi Direct connection between electronic devices;
FIG. 5 is a diagram illustrating an available bandwidth in a 5 GHz band for Wi-Fi Direct communication between electronic devices;
FIG. 6 is a diagram illustrating channels and bandwidths used for Wi-Fi Direct communication between electronic devices;
FIG. 7 is a diagram illustrating a Wi-Fi Direct connection between electronic devices, according to an embodiment;
FIGS. 8 and 9 are schematic block diagrams illustrating an electronic device, according to an embodiment;
FIG. 10 is a diagram illustrating an available bandwidth in a 5 GHz band for Wi-Fi Direct communication between electronic devices, according to an embodiment;
FIG. 11 is a diagram illustrating channels and bandwidths used for Wi-Fi Direct communication between electronic devices, according to an embodiment;
FIGS. 12 through 20 are flowcharts illustrating a Wi-Fi Direct communication method, according to an embodiment;
FIGS. 21 through 24 are flowcharts illustrating a hotspot communication method, according to an embodiment;
FIG. 25 is a diagram illustrating neighbor awareness networking (NAN) communication, according to an embodiment;
FIGS. 26 and 27 are flowcharts illustrating a NAN communication method, according to an embodiment;
FIG. 28 is a flowchart illustrating an operating method of an electronic device, according to an embodiment;
FIG. 29 is a flowchart illustrating an operating method of an electronic device, according to an embodiment; and
FIG. 30 is a block diagram illustrating an electronic device in a network environment, according to an embodiment.

### DETAILED DESCRIPTION

Hereinafter, embodiments are described in detail with reference to the accompanying drawings. When describing the embodiments with reference to the accompanying drawings, like reference numerals refer to like components and a repeated description related thereto is omitted.

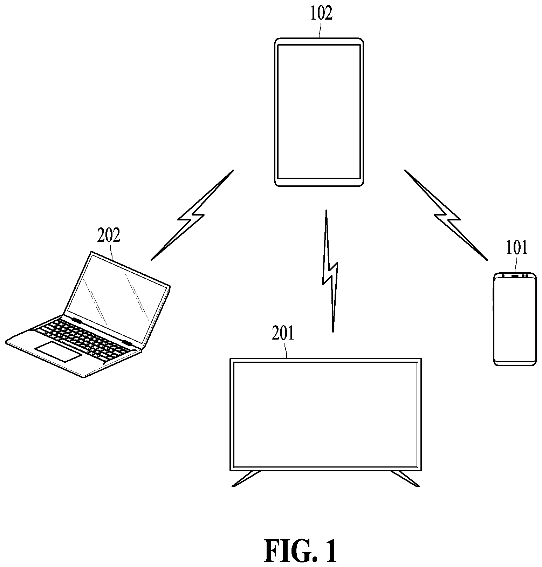

FIG. 1 is a diagram illustrating a network structure of a Wi-Fi Direct communication group, according to an embodiment.

Referring to FIG. 1, according to an embodiment, a Wi-Fi Direct communication group may include a plurality of electronic devices (e.g., 101, 102, 201, and/or 202). The plurality of electronic devices 101, 102, 201, and/or 202 may form a Wi-Fi Direct communication group in accordance with a Wi-Fi Direct-related protocol defined in the Institute of Electrical and Electronics Engineers (IEEE) 802.11 alliance standard (e.g., IEEE 802.11g and/or IEEE 802.11n).

According to an embodiment, any one of the electronic devices 101, 102, 201, and/or 202 may operate as a group owner (or GO) (e.g., the electronic device 102). The electronic device 102, which is the group owner, may establish a connection to the electronic devices 101, 201, and/or 202, which are group clients (or GCs), to form a direct group.

According to an embodiment, the electronic device 102 that is the group owner may function as an access point (AP) that constitutes a wireless local-area network (WLAN). The group owner may be determined during the formation of the Wi-Fi Direct communication group. The group owner may be determined through a group owner negotiation protocol during a one-to-one (1:1) connection between electronic devices.

According to an embodiment, the electronic device 102 that is the group owner may control connections between the electronic devices 101, 201, and/or 202 that are the clients. The electronic device 102 that is the group owner may be connected to the client electronic devices 101, 201 and/or 202 on a 1:1 or 1:N basis.

According to an embodiment, the electronic devices 101, 201, and/or 202 may be the same or different type of electronic device as or from the electronic device 102. For example, the electronic devices 101, 102, 201, and/or 202 may be terminals operating on a Wi-Fi peer-to-peer (P2P) network and may be general electronic devices, such as, for example, smart phones, portable terminals, mobile terminals, personal digital assistants (PDAs), portable multimedia player (PMP) terminals, laptop computers, or personal computers (PCs). The electronic devices 101, 102, 201 and/or 202 may be various electronic devices that support Wi-Fi Direct and provide data communication-based services, such as, for example, Bluetooth speakers, televisions (TVs), printers, or cameras.

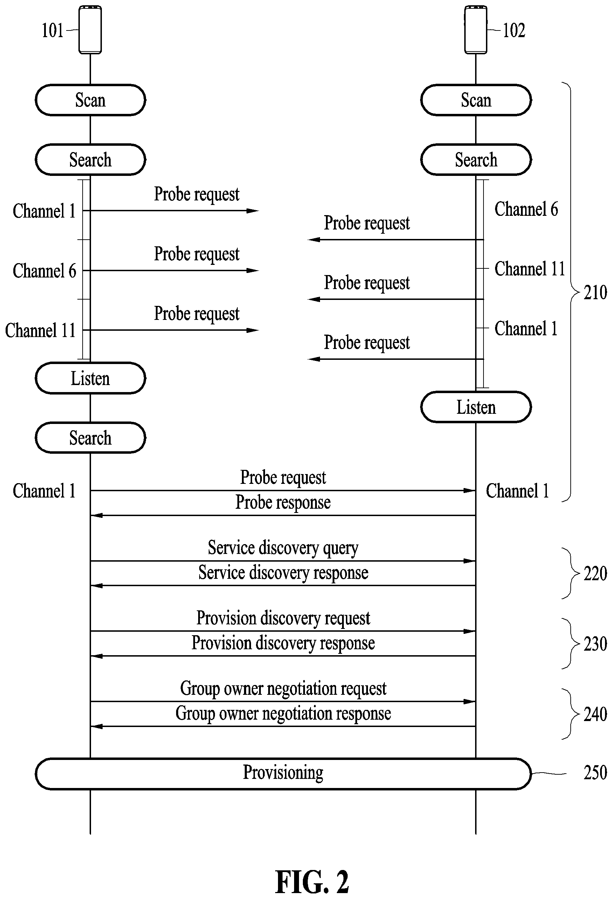

FIG. 2 is a flowchart illustrating an operation of generating a Wi-Fi Direct communication group, according to an embodiment.

Referring to FIG. 2, according to an embodiment, the electronic device 101 and the electronic device 102 may generate a Wi-Fi Direct communication group. Operations of the electronic device 101 and the electronic device 102 described below with reference to FIG. 2 may be triggered by an application that uses Wi-Fi Direct. The operations of the electronic device 101 and the electronic device 102 described below with reference to FIG. 2 may also be triggered by a user input to a Wi-Fi simple configuration (WSC) button.

According to an embodiment, in operation 210, each of the electronic device 101 and the electronic device 102 may perform Wi-Fi Direct device discovery. The electronic device 101 and the electronic device 102 may perform the Wi-Fi Direct device discovery as they enter a Wi-Fi Direct device discovery mode.

According to an embodiment, each of the electronic device 101 and the electronic device 102 may perform the Wi-Fi Direct device discovery by iteratively performing a search to discover other electronic devices and a listen to wait for responses to be received from the other electronic devices.

According to an embodiment, the electronic device 101 and the electronic device 102 may perform channel scanning in a search state. The scanning may be performed iteratively, several times that is less than or equal to a specified number of times, on all communicable channels (e.g., channels 1 through 11) of the electronic device 101 and the electronic device 102, or on social channels (e.g., channels 1, 6, and 11) for quick discovery. The listen of the electronic device 101 acting as a group client may be limited to one of the social channels, and a selected channel may be fixed during the discovery process. The scanning may be performed through scanning in accordance with the 802.11 standard protocol.

According to an embodiment, the electronic device 101 and the electronic device 102 may select one of all the channels or the social channels in a listen state to maintain the listen state.

According to an embodiment, the electronic device 101 and the electronic device 102 may perform the Wi-Fi Direct device discovery by exchanging a probe request and a probe response. The electronic device 101 may transmit the probe request to the electronic device 102, and the electronic device 102 may transmit the probe response to the electronic device 101. The probe request may include a peer-to-peer information element (P2P IE). The probe response may include a P2P IE. The P2P IE may include a P2P attribute. The P2P attribute may be configured as shown in Table 4, which is to be described below.

According to an embodiment, entities/states that may transmit the probe response may be as follows. First, as in the existing 802.11 media access control (MAC), a group owner in a state where a Wi-Fi Direct communication group has already been generated may transmit a probe response. As described above, the group owner may function as an existing AP and may thus necessarily respond to a probe request. The group owner may include a P2P IE in the probe response. The group owner may also reply with the probe response even to the probe request from an existing legacy Wi-Fi device that does not support the P2P IE. The group owner may be compatible with the existing legacy Wi-Fi device that does not support the P2P IE.

According to an embodiment, second, a Wi-Fi Direct device that is not the group owner may respond to the probe request in the listen state. In the listen state, the Wi-Fi Direct device may maintain a receiving mode and may reply with the probe response to the received probe request. The Wi-Fi Direct device may respond only to a probe request that includes a P2P IE. The Wi-Fi Direct device may not be able to respond to a probe request from the existing legacy Wi-Fi device that does not support the P2P IE.

According to an embodiment, third, a Wi-Fi Direct device may respond to the probe request while the Wi-Fi Direct device is already connected to an AP in an 802.11 station mode. The Wi-Fi Direct device may support a concurrent mode. In the concurrent mode, the Wi-Fi Direct device may form a Wi-Fi Direct communication group and may maintain the connection to the AP.

According to an embodiment, the electronic device 101 and the electronic device 102 may find each other by reaching a common channel through iterations of the search and the listen. The electronic device 101 and the electronic device 102 may identify each other through the probe request or the probe response.

According to an embodiment, in a case where the Wi-Fi Direct communication group is already formed before the Wi-Fi Direct discovery of the electronic device 101 and the electronic device 102, one of the electronic device 101 and the electronic device 102 may be the group owner. For example, when the electronic device 102 is the group owner, the electronic device 101 may find the electronic device 102, which is the group owner, through the Wi-Fi Direct device discovery. In this case, the electronic device 102 may receive the probe request from the electronic device 101 while remaining in the listen state without performing the search.

According to an embodiment, in operation 220, the electronic device 101 and the electronic device 102 may perform service discovery. The electronic device 101 and the electronic device 102 may perform the service discovery that exchanges information about services provided by a higher layer to identify a mutually compatible service.

According to an embodiment, the service discovery may be performed through an exchange of a service discovery query and a service discovery response. The electronic device 101 may transmit the service discovery query to the electronic device 102, and the electronic device 102 may transmit the service discovery response to the electronic device 101.

According to an embodiment, the electronic device 101 may specify a service protocol type by the service discovery query and transmit service information corresponding to the service protocol type as query data. The electronic device 102 may transmit the service protocol type and response data by the service discovery response. The service discovery may be performed, when the electronic device 101 and the electronic device 102 are connected at a MAC layer (e.g., layer 2) or higher, such as, layer 3, to identify services between networked electronic devices. However, the service discovery may also be performed flexibly at any arbitrary stage according to what is specified by a higher layer, independent of the MAC protocol. The service discovery may be performed to identify a service protocol and/or types of services supported by a counterpart. Accordingly, this may prevent an impossible data sharing (e.g., file sharing) issue that may occur when, after the electronic device 101 and the electronic device 102 are connected, their service protocol types do not match.

According to an embodiment, in operation 230, the electronic device 101 and the electronic device 102 may perform provision discovery.

According to an embodiment, the electronic device 101 and the electronic device 102 may perform the provision discovery by exchanging a provision discovery request and a provision discovery response. The electronic device 101 may transmit the provision discovery request to the electronic device 102, and the electronic device 102 may transmit the provision discovery response to the electronic device 101.

According to an embodiment, the provision discovery request may include a WSC setting method. For example, the WSC setting method may be one of PBC, personal identification number (PIN) from Display, or PIN from Keypad. For example, the WSC setting method may be determined by the electronic device 102.

According to an embodiment, upon receiving the provision discovery request, the electronic device 102 may display, on a display (not shown), information indicating that the provision discovery request has been received to notify the user of this. For example, when the provision discovery request includes the WSC setting method, the electronic device 102 may display, on the display (not shown), information about the WSC setting method. The electronic device 102 may display the information about the WSC setting method by displaying a PIN or a window for entering the PIN according to the WSC setting method. For example, the electronic device 102 may notify the user by displaying, in the form of a pop-up, information including a name of the electronic device 101 that has transmitted the provision discovery request and/or the WSC setting method to allow the user to decide whether to accept a connection and set (or configure) a WSC.

According to an embodiment, in operation 240, the electronic device 101 and the electronic device 102 may perform a group owner negotiation. The electronic device 101 may determine a group owner of a Wi-Fi Direct communication group that the electronic device 101 desires to form with the electronic device 102.

According to an embodiment, the electronic device 101 may determine the group owner (e.g., the electronic device 102) by exchanging a group owner negotiation request, a group owner negotiation response, and/or a group owner negotiation confirmation with the electronic device 102.

According to an embodiment, the electronic device 101 and the electronic device 102 may compare their respective specified group owner intents to determine the group owner. A group owner intent of each device may be obtained from a group owner intent attribute (e.g., refer to Table 4). The electronic device 101 and the electronic device 102 may determine an electronic device, which is the group owner, based on information such as attributes of the Wi-Fi Direct communication group to be formed, an operating channel, and a listen timing. When the Wi-Fi Direct communication group is already formed, one of the electronic device 101 and the electronic device 102 may already be the group owner, and thus the group owner negotiation may be omitted.

According to an embodiment, the group owner negotiation request, the group owner negotiation response, and/or the group owner negotiation confirmation may include a channel list attribute (e.g., refer to Table 4). The electronic device 101 and the electronic device 102 may transmit information about available channels and information about available bandwidths to each other through the channel list attribute. The channel list attribute may be included in a P2P IE. The P2P IE may include P2P attributes. The channel list attribute may be any one of the P2P attributes (e.g., refer to Table 4). The channel list attribute may include fields shown in Table 1.

**[Table 1]**

| **Field** | **Size (octets)** | **Value** | **Description** |
|---|---|---|---|
| Attribute ID | 1 | 11 | Identifying the type of P2P attribute. The specific value is defined in Table 6. |
| Length | 2 | variable | Length of the following fields in the attribute. |
| Country String | 3 | | The Country String field is set to the value contained in the dot11CountryString attribute in [1], specifying the country code in which the Channel Entry List is valid. The third octet of the Country String field is set to hex 04 to indicate that Table E-4 is used. |
| Channel Entry List | variable | | Including one or more Channel Entries. The format of Channel Entry field is shown in Table 25. |

The channel list attribute may include a channel entry list field. The information about the available channels and the information about the available bandwidths may be included (e.g., embedded) in the channel entry list field. The channel entry list field may include fields shown in Table 2.

**[Table 2]**

| **Field** | **Size (octets)** | **Value** | **Description** |
|---|---|---|---|
| Operating Class | 1 | As defined in [1] Appendix E (non-DMG) and [11] Annex E (DMG) | The Operating Class field contains an enumerated value from Appendix E [1] (non-DMG) or Annex E [11] (DMG), specifying the operating class in which the Channel List is valid. |
| Number of Channels | 1 | | Indicating the number of channels contained in the Channel List field. |
| Channel List | variable | As defined in [1] Appendix E (non-DMG) and [11] Annex E (DMG) | The Channel List field contains a variable number of octets, where each octet describes a single channel number. Channel numbering is dependent on Operating Class according to Appendix E [1] (non-DMG) or Annex E [11] (DMG). |

The channel entry list field may include an operating class field that includes information about a bandwidth available to be used by a device. The channel entry list field may include a channel number field, or a field of the number of channels, that indicates the number of channels available to be used by a device. The channel entry list field may include a channel list field that includes information about channels available to be used by a device.

According to an embodiment, when the group owner negotiation is ended, the electronic device 102, which is the group owner, may operate as a WSC registrar, and the electronic device 101, which is a group client, may operate as a WSC enrollee. The electronic device 101 and the electronic device 102 may perform provisioning to exchange credentials.

According to an embodiment, in operation 250, the electronic device 101 may perform provisioning with the electronic device 102.

According to an embodiment, a probe request, a probe response, an association request, and/or an association response exchanged during the provisioning may include high throughput (HT) operation information, very high throughput (VHT) operation information, and/or high efficiency (HE) operation information. Each electronic device may transmit information about an available bandwidth to an external electronic device through the HT operation information, the VHT operation information, and/or the HE operation information. For example, the VHT operation information may include fields shown in Table 3.

**[Table 3]**

| **Subfield** | **Definition** | **Encoding** |
|---|---|---|
| Channel Width | This field, together with the HT Operation element STA Channel Width field, defines the BSS bandwidth (see 11.38.1). | Set to 0 for 20 MHz or 40 MHz BSS band width. |
| | | Set to 1 for 80 MHz, 160 MHz or 80+80 MHz BSS bandwidth. |
| | | Set to 2 for 160 MHz BSS bandwidth (deprecated). |
| | | Set to 3 for noncontiguous 80+80 MHz BSS bandwidth (deprecated). |
| | | Values in the range 4 to 255 are reserved. |
| Channel Center Frequency Segment 0 | Defines a channel center frequency for a 20, 40, 80, 160, or 80+80 MHz VHT BSS. See 21.3.14. | For 20, 40, or 80 MHz BSS bandwidth, indicates the channel center frequency index for the 20, 40, or 80 MHz channel on which the VHT BSS operates. |
| | | For 160 MHz BSS bandwidth and the Channel Width subfield equal to 1, indicates the channel center frequency index of the 80 MHz channel segment that contains the primary channel. |
| | | For 160 MHz BSS bandwidth and the Channel Width subfield equal to 2, indicates the channel center frequency index of the 160 MHz channel on which the VHT BSS operates. |
| | | For 80+80 MHz BSS bandwidth and the Channel Width subfield equal to 1 or 3, indicates the channel center frequency index for the primary 80 MHz channel of the VHT BSS. |
| | | Reserved otherwise. |
| Channel Center Frequency Segment I | Defines a channel center frequency for a 160 or 80+80 MHz VHT BSS. See 21.3.14. | For a 20, 40, or 80 MHz BSS bandwidth, this subfield is set to 0. |
| | | For a 160 MHz BSS bandwidth and the Channel Width subfield equal to 1, indicates the channel center frequency index of the 160 MHz channel on which the VHT BSS operates. |
| | | For a 160 MHz BSS bandwidth and the Channel Width subfield equal to 2, this field is set to 0. |
| | | For an 80+80 MHz BSS bandwidth and the Channel Width subfield equal to 1 or 3, indicates the channel center frequency index of the secondary 80 MHz channel of the VHT BSS. |
| | | See Table 9-275, |
| | | Reserved otherwise. |

The VHT operation information may include a channel width field that includes information about a bandwidth available to be used by a device.

According to an embodiment, by performing the provisioning, the electronic device 101 and the electronic device 102 may form the Wi-Fi Direct communication group. The electronic device 102, as the group owner, may register the electronic device 101 as a group client. In an operating channel, the electronic device 102 may control the access of the group client (e.g., the electronic device 101) to the Wi-Fi Direct communication group. The electronic device 101, as the group client, may connect to the electronic device 102 that is the group owner by the credentials verified through the provisioning. The electronic device 101 and the electronic device 102 may perform data transmission and reception based on the Wi-Fi Direct connection.

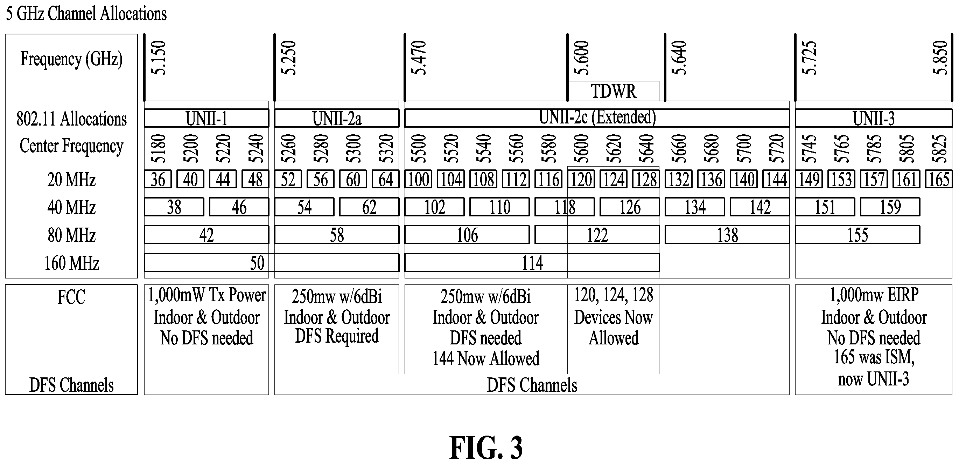

FIG. 3 is a diagram illustrating channel allocation of a 5 gigahertz (GHz) band.

According to an embodiment, channels in a 5 GHz band may be identified as shown in FIG. 3. The 5 GHz band may be divided into UNII-1 band, UNII-2a band, UNII-2c band, and UNII-3 band. The UNII-1 band may include channels from channel 36 (e.g., with a center frequency of 5180 megahertz (MHz)) to channel 48 (e.g., with a center frequency of 5240 MHz). The UNII-2a band may include channels from channel 54 (e.g., with a center frequency of 5260 MHz) to channel 64 (e.g., with a center frequency of 5320 MHz). The UNII-2c band may include channels from channel 100 (e.g., with a center frequency of 5500 MHz) to channel 144 (e.g., with a center frequency of 5720 MHz). The UNII-3 band may include channels from channel 149 (e.g., with a center frequency of 5745 MHz) to channel 165 (e.g., with a center frequency of 5825 MHz).

According to an embodiment, the UNII-2a band and the UNII-2c band of the 5 GHz band may be specified as DFS channels. The DFS channels may be channels used for military radar, satellite communication, and/or weather radar. Thus, there may be restrictions on the use of the DFS channels.

According to an embodiment, a DFS owner may use a DFS channel. The DFS owner may be a device that is allowed to occupy the DFS channel. The DFS owner may scan radar signals. In a case where no active radar signal is detected on the DFS channel, the DFS owner may use (e.g., occupy) the DFS channel. The DFS owner may be an AP.

According to an embodiment, in addition to the DFS owner, devices associated with the AP that is the DFS owner may also use the DFS channel. For example, a device connected to the AP that is the DFS owner or receiving a beacon from the AP that is the DFS owner may use the DFS channel. For example, two devices associated with the AP that is the DFS owner may use the DFS channel for direct communication between them.

According to an embodiment, two devices associated with the AP that is the DFS owner may exchange AP information, which is information about the AP, for DFS channel-based communication. The AP information may be included in a P2P attribute exchanged by the two devices. The P2P attribute may be included in a P2P IE. The P2P attribute may be configured as shown in Table 4.

**[Table 4]**

| Attribute ID | Notes |
|---|---|
| 0 | Status |
| 1 | Minor Reason Code |
| 2 | P2P Capability |
| 3 | P2P Device ID |
| 4 | Group Owner Intent |
| 5 | Configuration Timeout |
| 6 | Listen Channel |
| 7 | P2P Group BSSID |
| 8 | Extended Listen Timing |
| 9 | Intended P2P Interface Address |
| 10 | P2P Manageability |
| 11 | Channel List |
| 12 | Notice of Absence |
| 13 | P2P Device Info |
| 14 | P2P Group Info |
| 15 | P2P Group ID |
| 16 | P2P Interface |
| 17 | Operating Channel |
| 18 | Invitation Flags |
| 19 | Out-of-Band Group Owner Negotiation Channel |
| 20 | Unused * |
| 21 | Service Hash |
| 22 | Session Information Data Info |
| 23 | Connection Capability Info |
| 24 | Advertisement_ID Info |
| 25 | Advertised Service Info |
| 26 | Session ID Info |
| 27 | Feature Capability |
| 28 | Persistent Group Info |
| 29 | P2P Capability Extension |
| 30 | WLAN AP Information |
| 31 - 220 | Reserved |
| 221 | Vendor specific attribute |
| 222 - 255 | Reserved |

The P2P attribute may include a group owner intent attribute (e.g., one corresponding to attribute identifier (ID) 4). The P2P attribute may include a channel list attribute (e.g., one corresponding to attribute ID 11). The P2P attribute may include a WLAN AP information attribute (e.g., one corresponding to attribute ID 30). The AP information, which is the information about the AP that is the DFS owner, may be included (e.g., embedded) in the WLAN AP information attribute. The WLAN AP information attribute may include fields shown in Table 5.

**[Table 5]**

| Field | Size (octets) | Value | Description |
|---|---|---|---|
| Attribute ID | 1 | 30 | Identifying the type of P2P attribute. The specific value is defined in Table 6. |
| Length | 2 | variable | Length of the following fields in the attribute. |
| AP Info List | 9 * N | variable | Including one or more AP Info fields, where N is the number of AP Info fields. The AP Info field is defined in Table y2. |

The WLAN AP information attribute may include an AP info list field. The AP information, which is the information about the AP that is the DFS owner, may be included (e.g., embedded) in the AP info list field. The AP info list field may include fields shown in Table 6.

**[Table 6]**

| Field | Size (octets) | Value | Description |
|---|---|---|---|
| Flag | 1 | variable | Bit 0 set to 1 indicates that the P2P Device' WLAN STA interface is concurrently associated with the AP. Bit 0 set to 0 indicates that the P2P device can hear the AP, but not concurrently associated with the AP. |
| | | | Bit 1 to Bit 7: Reserved |
| BSSID | 6 | variable | Identifying BSSID of the WLAN AP. |
| Country String | 3 | Variable | The Country String field is set to the value contained in the dot11CountryString attribute in [1], specifying the country code in which the Channel Entry List is valid. The third octet of the Country String field is set to hex 04 to indicate that Table E-4 is used. |
| Operating Class | 1 | variable | Indicating the frequency band at which the WLAN AP is operating. |
| Channel Number | 1 | variable | Indicating the channel number at which the WLAN AP is operating. |

The AP info list field may include a flag field indicating whether a device is connected to the AP. The AP info list field may include a basic service set identifier (BSSID) field to identify the AP. The AP info list field may include an operating class field indicating a frequency band (e.g., a channel) in which the AP operates. The AP info list field may include a channel number field indicating the number of channels on which the AP operates.

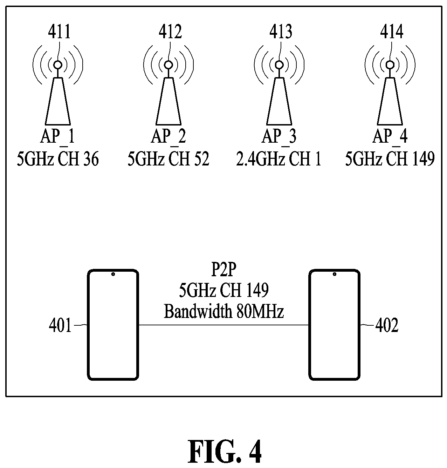

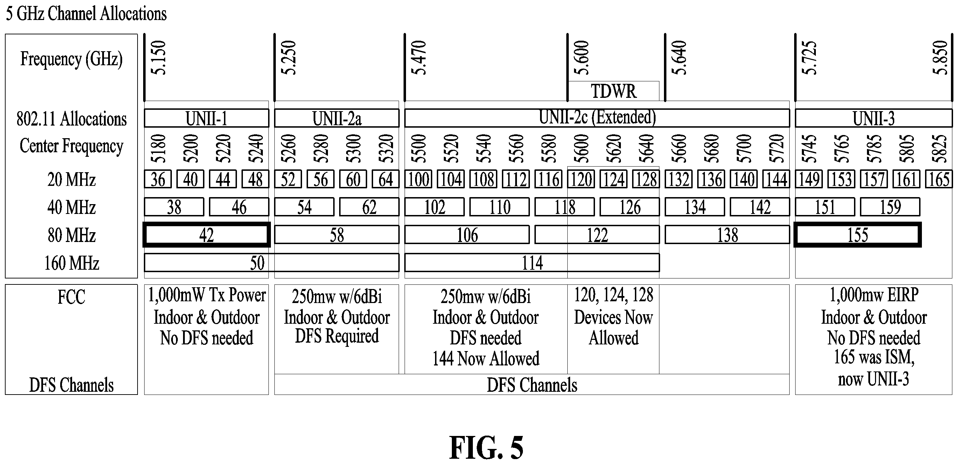

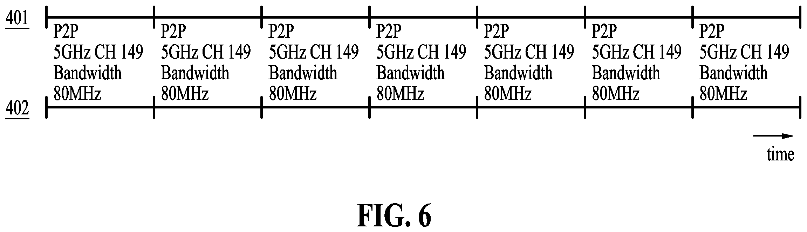

FIG. 4 is a diagram illustrating a Wi-Fi Direct connection between electronic devices, FIG. 5 is a diagram illustrating an available bandwidth in a 5 GHz band for Wi-Fi Direct communication between electronic devices, and FIG. 6 is a diagram illustrating channels and bandwidths used for Wi-Fi Direct communication between electronic devices.

Referring to FIG. 4, an electronic device 401 and an electronic device 402 may each be a device that supports a Wi-Fi 5 GHz band. The electronic device 401 and the electronic device 402 may each be a device that supports a 160 MHz bandwidth. There may be various APs (e.g., 411 to 414) in the vicinity of the electronic device 401 and the electronic device 402 (e.g., within the coverage in which an AP is identifiable). The electronic device 401 and the electronic device 402 may perform Wi-Fi Direct communication with each other, independently of the APs 411 to 414 nearby. The electronic device 401 and the electronic device 402 may be connected through Wi-Fi Direct with a bandwidth of 80 MHz of the 5 GHz band (e.g., channel 149).

For example, frequency bands (e.g., channels) and bandwidths available for the electronic device 401 and the electronic device 402 to use for Wi-Fi Direct communication may be identified as shown in FIG. 5. The electronic device 401 and the electronic device 402 may perform Wi-Fi Direct communication by selecting a channel and a bandwidth within UNII-1 band or UNII-3 band. The bandwidth within the UNII-1 band and the UNII-3 band may have a maximum 80 MHz bandwidth. An electronic device that may occupy the UNII-1 band and the UNII-2a band together may use a 160 MHz bandwidth (e.g., channel 50), but the UNII-2a band may correspond to a DFS channel as described above with reference to FIG. 3. Therefore, the electronic device 401 and the electronic device 402 may not use the UNII-2a band for Wi-Fi Direct communication and may not use the 160 MHz bandwidth. The UNII-2c band may also correspond to the DFS channel as described above with reference to FIG. 3. Therefore, the electronic device 401 and the electronic device 402 that are to perform Wi-Fi Direct communication may not use the DFS channel and the 160 MHz bandwidth.

For example, frequency bands and bandwidths available for the electronic device 401 and the electronic device 402 to use for Wi-Fi Direct communication may be identified as shown in FIG. 6. The electronic device 401 and the electronic device 402 may perform Wi-Fi Direct communication with a bandwidth of 80 MHz of a 5 GHz band (e.g., channel 149). As described above with reference to FIG. 4, the electronic device 401 and the electronic device 402, each supporting the 160 MHz bandwidth, may perform Wi-Fi Direct communication only with the 80 MHz bandwidth.

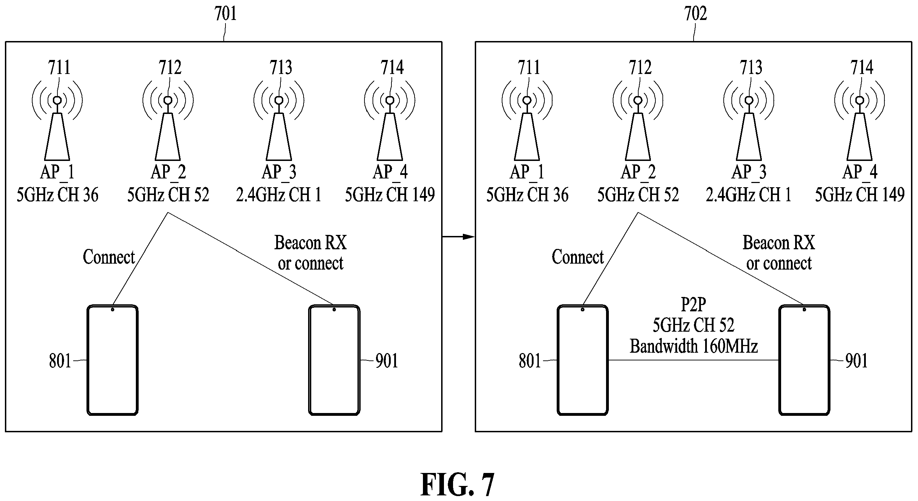

FIG. 7 is a diagram illustrating a Wi-Fi Direct connection between electronic devices, according to an embodiment.

Referring to FIG. 7, according to an embodiment, an electronic device 801 (e.g., the electronic device 102 in FIG. 1) and an electronic device 901 (e.g., the electronic device 101 in FIG. 1) may each be a device that supports a Wi-Fi 5 GHz band. The electronic device 801 and the electronic device 901 may each be a device that supports a 160 MHz bandwidth.

According to an embodiment, the electronic device 801 and the electronic device 901 may use a DFS channel for Wi-Fi Direct communication between them. The DFS channel may be a channel used for the purposes of military radar, satellite communication, and/or weather radar. There may be various APs (e.g., 711 to 714) in the vicinity of the electronic device 801 and the electronic device 901 (e.g., within the coverage in which an AP is identifiable). The electronic device 801 and the electronic device 901 may use the DFS channel for Wi-Fi Direct communication, in association with an AP 712, which is a DFS owner.

According to an embodiment, in a situation 701, the electronic device 801 may establish a connection to the AP 712 that is the DFS owner. The electronic device 901 may establish a connection to the AP 712 or may receive a beacon from the AP 712. In a situation 702, the electronic device 801 and the electronic device 901 may establish a Wi-Fi Direct connection. The electronic device 801 and the electronic device 901 may perform Wi-Fi Direct communication with a 160 MHz bandwidth in a 5 GHz band (e.g., channel 52) (e.g., a DFS channel). The electronic device 801 may be configured to perform the connection to the AP 712, which is the DFS owner, at a time when extended bandwidth-based communication is required (e.g., when a large data transfer is required (e.g., streaming a high-definition video, running a virtual reality (VR) service, downloading a large file, and accessing a large database (DB)) and when real-time communication is required (e.g., making a video call and running a high resource demanding game)). For example, the electronic device 801 may be configured to establish the connection to the AP 712, which is the DFS owner, in response to determining that extended bandwidth-based communication is required. The electronic device 901 may be configured to perform the connection to the AP 712 that is the DFS owner or receive a beacon from the AP 712 (e.g. listen for a beacon from the AP 712), at a time when extended bandwidth-based communication is required (e.g., when a large data transfer is required (e.g., streaming a high-definition video, running a VR service, downloading a large file, and accessing a large DB) and when real-time communication is required (e.g., making a video call and running a high resource demanding game)). For example, the electronic device 901 may be configured to establish the connection to the AP 712, which is the DFS owner, or receive a beacon from the AP 712 (e.g. listen for a beacon from the AP 712) in response to determining that extended bandwidth-based communication is required.

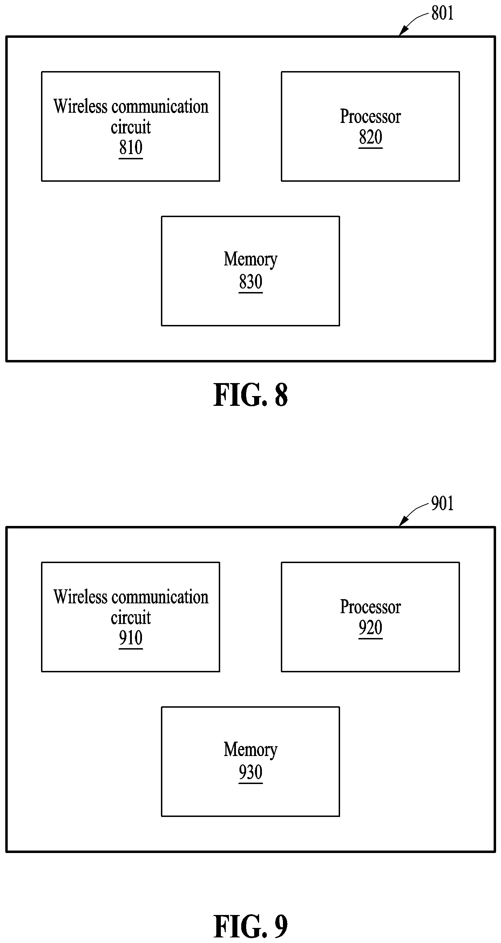

FIGS. 8 and 9 are schematic block diagrams illustrating an electronic device, according to an embodiment.

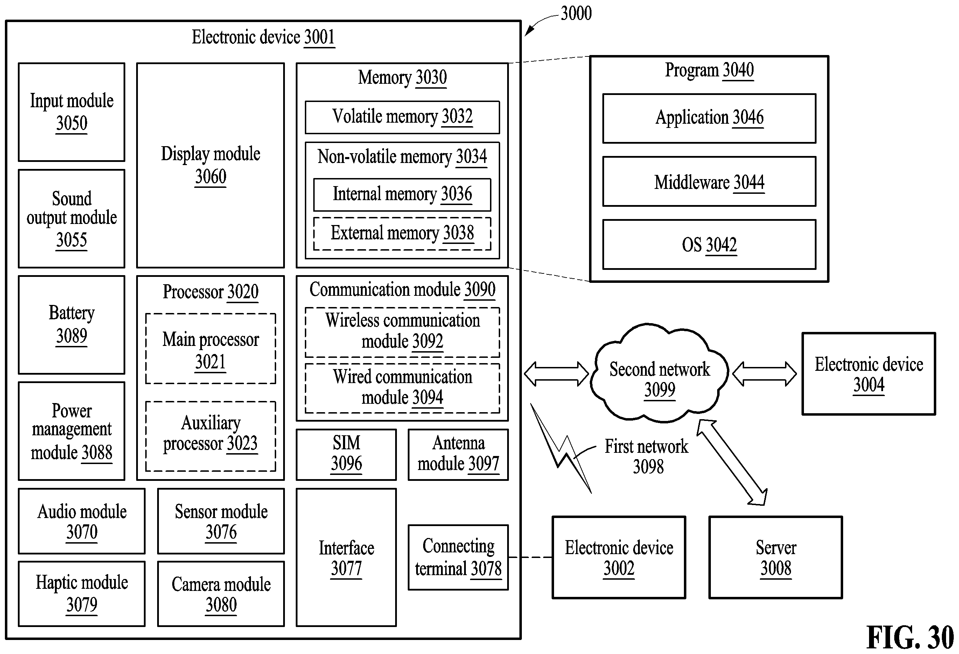

Referring to FIG. 8, according to an embodiment, the electronic device 801 (e.g., the electronic device 102 in FIG. 1) may include a wireless communication circuit 810, a processor 820, and a memory 830. The wireless communication circuit 810 may be configured to transmit and receive wireless or radio signals. The wireless communication circuit 810 may be a Wi-Fi chipset. The wireless communication circuit 810 may support multi-bands of 2.4 GHz, 5 GHz, and/or 6 GHz. The processor 820 may be operatively connected to the wireless communication circuit 810. The memory 830 may be electrically connected to the processor 820 and may store one or more instructions executable by the processor 820. The instructions may be executed by the processor 820 to cause the electronic device 801 to perform operations. The electronic device 801 may correspond to an electronic device to be described below with reference to FIG. 30 (e.g., an electronic device 3001 in FIG. 30), and accordingly what is to be described below with reference to FIG. 30 is not repeated here. The operations performed by the electronic device 801 may include operations performed by the wireless communication circuit 810 and operations performed by the processor 820 through the wireless communication circuit 810.

Referring to FIG. 9, according to an embodiment, the electronic device 901 (e.g., the electronic device 101 in FIG. 1) may include a wireless communication circuit 910, a processor 920, and a memory 930. The wireless communication circuit 910 may be configured to transmit and receive wireless or radio signals. The wireless communication circuit 910 may be a Wi-Fi chipset. The wireless communication circuit 910 may support multi-bands of 2.4 GHz, 5 GHz, and/or 6 GHz. The processor 920 may be operatively connected to the wireless communication circuit 910. The memory 930 may be electrically connected to the processor 920 and may store one or more instructions executable by the processor 920. The instructions may be executed by the processor 920 to cause the electronic device 901 to perform operations. The electronic device 901 may correspond to an electronic device to be described below with reference to FIG. 30 (e.g., an electronic device 3002 in FIG. 30), and accordingly what is to be described below with reference to FIG. 30 is not repeated here. The operations performed by the electronic device 901 may include operations performed by the wireless communication circuit 910 and operations performed by the processor 920 through the wireless communication circuit 910.

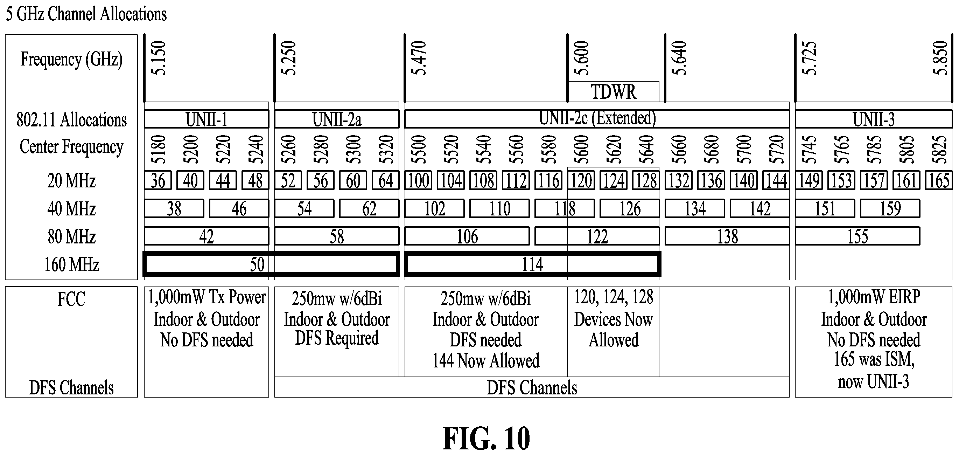

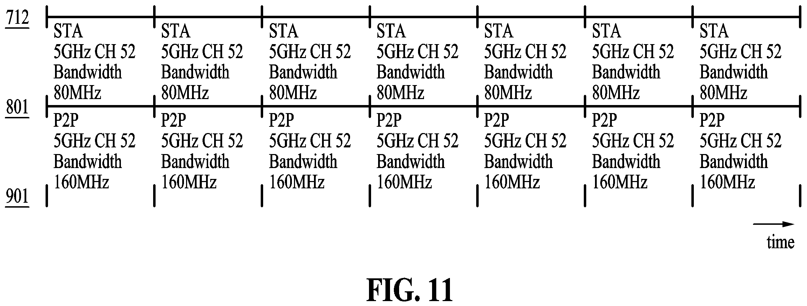

FIG. 10 is a diagram illustrating an available bandwidth in a 5 GHz band for Wi-Fi Direct communication between electronic devices according to an embodiment, and FIG. 11 is a diagram illustrating channels and bandwidths used for Wi-Fi Direct communication between electronic devices according to an embodiment.

According to an embodiment, frequency bands (e.g., channels) and bandwidths that are available for the electronic device 801 and the electronic device 901 to perform Wi-Fi Direct communication may be identified as shown in FIG. 10. The electronic device 801 and the electronic device 902 may select a channel and a bandwidth within UNII-1 band, UNII-2a band, and/or UNII-2c band to perform Wi-Fi Direct communication. The UNII-2a band or the UNII-2c band may correspond to a DFS channel as described above with reference to FIG. 3. The electronic device 801 and the electronic device 901 that desire to perform Wi-Fi Direct communication with a 160 MHz bandwidth in a 5 GHz band may use the DFS channel.

According to an embodiment, frequency bands (e.g., channels) and bandwidths that are available for the electronic device 801 and the electronic device 901 to perform Wi-Fi Direct communication may be identified as shown in FIG. 11. The electronic device 801 may maintain a connection to an AP 712 that is a DFS user. The electronic device 801 may communicate with the AP 712 at a bandwidth of 80 MHz in a 5 GHz band (e.g., channel 52).

According to an embodiment, the electronic device 801 and the electronic device 901 may perform Wi-Fi Direct communication with a 160 MHz bandwidth of the 5 GHz band (e.g., channel 52). Compared to the bandwidth (e.g., 80 MHz) of the Wi-Fi Direct communication between the electronic devices 401 and 402 in FIG. 4, the bandwidth (e.g., 160 MHz) of the Wi-Fi Direct communication between the electronic devices 801 and 901 may be twice as large. The bandwidth may directly affect a data transfer rate (speed). Compared to the electronic devices 401 and 402, the electronic devices 801 and 901 may have a data transfer rate that is higher by a factor of about two times, and the electronic devices 801 and 901 may enhance the user experience of the Wi-Fi Direct communication. The operations of the electronic devices 801 and 901 will be described in detail below on a case-by-case basis.

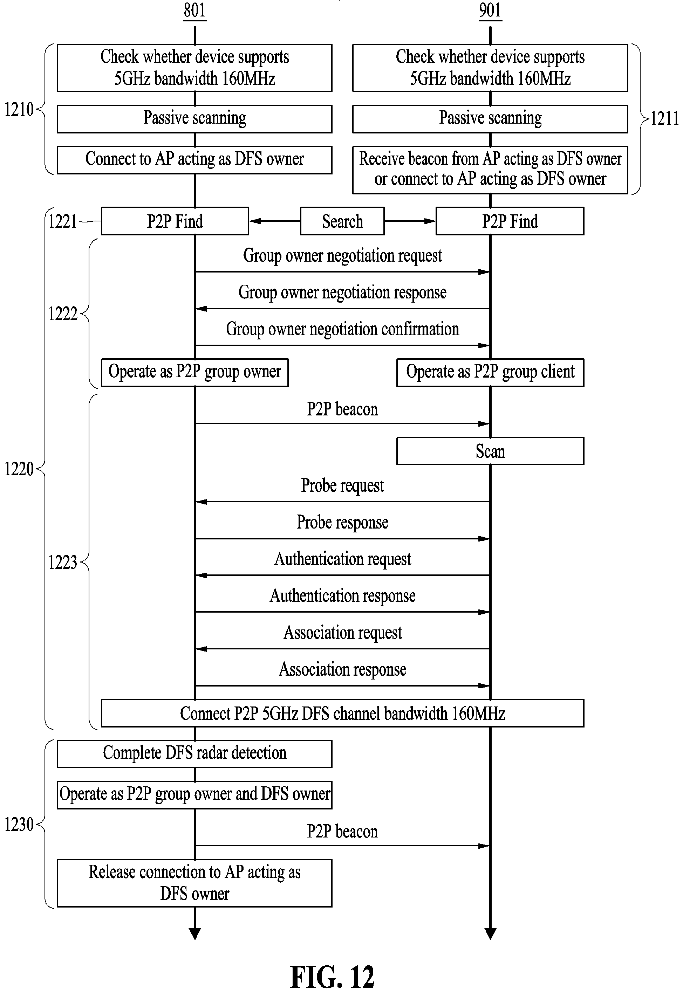

FIGS. 12 through 20 are flowcharts illustrating Wi-Fi Direct communication methods, according to an embodiment.

Referring to FIG. 12, according to an embodiment, the electronic device 801 and the electronic device 901 may perform Wi-Fi Direct communication with a 160 MHz bandwidth of a 5 GHz band (e.g., a DFS channel).

According to an embodiment, operations 1210 to 1230 may be performed in sequential order but are not necessarily performed in sequential order. For example, the order of operations 1210 to 1230 may be changed, and at least two operations may be performed in parallel. The operations may be performed by an electronic device (e.g., the electronic device 801 or the electronic device 901), and may include operations performed by a wireless communication circuit (e.g., the wireless communication circuit 810 in FIG. 8 or the wireless communication circuit 910 in FIG. 9) and operations performed by a processor (e.g., the processor 820 in FIG. 8 or the processor 920 in FIG. 9) through the wireless communication circuit.

According to an embodiment, in operation 1210, the electronic device 801 may establish a connection to an AP that is a DFS owner. The DFS owner may use a DFS channel. The DFS owner may be a device that is allowed to occupy the DFS channel. The DFS owner may scan radar signals. In this case, when no active radar signal is detected on the DFS channel, the DFS owner may use (e.g., occupy) the DFS channel. The DFS owner may be the AP. Operation 1210 may be triggered as an application that uses Wi-Fi Direct is driven. Operation 1210 may be triggered by a user input to a WSC button.

According to an embodiment, the electronic device 801 may check whether it supports a 160 MHz bandwidth of a 5 GHz band. The electronic device 801 may perform passive scanning to find the DFS owner. For example, in response to determining that the electronic device 801 supports a 160 MHz bandwidth of a 5 GHz band, the electronic device 801 may perform the passive scanning to find the DFS owner. The electronic device 801 may connect to the DFS owner (e.g., the AP) found through the passive scanning. The electronic device 801 may also connect to the AP without the passive scanning in a case where AP information, which is information about the AP that is the DFS owner, is already obtained. The electronic device 801 may be configured to establish the connection to the AP that is the DFS owner at a time when extended bandwidth-based communication is required (e.g., when a large data transfer is required (e.g., streaming a high-definition video, running a VR service, downloading a large file, and accessing a large DB), and when real-time communication is required (e.g., making a video call and running a high resource demanding game)). As a result of the connection to the AP, the electronic device 801 may obtain the AP information (e.g., DFS channel information and bandwidth information).

According to an embodiment, in operation 1211, the electronic device 901 may establish a connection to the AP that is the DFS owner or receive a beacon from the AP. The electronic device 901 may determine whether it supports the 160 MHz bandwidth of the 5 GHz band. The electronic device 901 may perform passive scanning to find the DFS owner. For example, in response to determining that the electronic device 901 supports a 160 MHz bandwidth of a 5 GHz band, the electronic device 901 may perform the passive scanning to find the DFS owner. The electronic device 901 may connect to the DFS owner (e.g., the AP) found through the passive scanning or receive a beacon from the AP. That is, the electronic device 901 may perform passive scanning to receive a beacon from the AP but in some embodiments the electronic device 901 may not connect to the AP after receiving the beacon. The electronic device 901 may be configured to establish the connection to the AP that is the DFS owner or receive a beacon from the AP at a time when extended bandwidth-based communication is required (e.g., when a large data transfer is required (e.g., streaming a high-definition video, running a VR service, downloading a large file, and accessing a large DB), and when real-time communication is required (e.g., making a video call and running a high resource demanding game)). As a result of connecting to the AP or receiving a beacon from the AP, the electronic device 901 may obtain the AP information (e.g., DFS channel information and bandwidth information). Operation 1211 may be triggered as an application that uses Wi-Fi Direct is driven. Operation 1211 may be triggered by a user input to a WSC button.

According to an embodiment, in operation 1220, the electronic device 801 and the electronic device 901 may establish a Wi-Fi Direct connection based on the DFS channel.

According to an embodiment, in operation 1221, the electronic device 801 and the electronic device 901 may perform peer device finding (or peer device discovery). The peer device finding may include at least some of the operations described above with reference to FIG. 2, for example, the Wi-Fi Direct device discovery 210, the service discovery 220, and/or the provision discovery 230. A repeated description thereof is omitted here.

According to an embodiment, in operation 1222, the electronic device 801 and the electronic device 901 may perform a group owner negotiation of a Wi-Fi Direct communication group. The electronic device 801 and the electronic device 901 may exchange a group owner negotiation request and a group owner negotiation response. The electronic device 801 may transmit a group owner negotiation confirmation to the electronic device 901. The electronic device 801 connected to the AP may operate as the group owner, and the electronic device 901 receiving a beacon from the AP may operate as a group client. In a case where the electronic device 801 and the electronic device 901 are both connected to the AP, any electronic device may operate as the group owner. The electronic device 801 and the electronic device 901 may compare their respective group owner intents to determine a group owner. The electronic device 801 connected to the AP may have a higher group owner intent than the electronic device 901 receiving a beacon from the AP. For example, in a case where the electronic device 801 and the electronic device 901 are both connected to the AP and the group owner intent of the electronic device 801 and the group owner intent of the electronic device 901 are the same, the group owner may be determined randomly. For example, even though the electronic device 801 and the electronic device 901 are both connected to the AP, the electronic device 801 and the electronic device 901 may have different group owner intents. Each electronic device (e.g., 801 and 901) may have a different group owner intent based on a group owner intent policy of a higher application and/or a state (e.g., a current state) of each electronic device. Accordingly, even though electronic devices (e.g., 801 and 901) are both connected to an AP, an electronic device with a higher group owner intent may act as a group owner. For example, each electronic device may operate as group owner in the case that the group owner intent of the electronic device is greater than the group owner intent of the other electronic device or in the case that the other electronic device is not connected to the AP. And each electronic device may operate as a group client in the case that the other electronic device is connected to the AP and the group owner intent of the electronic device is less than the group owner intent of the other electronic device.

According to an embodiment, the group owner negotiation request and the group owner negotiation response may each include AP information, which is information about the AP (e.g., an AP that is the DFS owner), a group owner intent, an available channel list (e.g., a DFS channel list), and/or an available bandwidth. The AP information may be embedded in a WLAN AP information attribute (e.g., refer to Table 4). The group owner intent may be embedded in a group owner intent attribute (e.g., refer to Table 4). The available channel list (e.g., the DFS channel list) or the available bandwidth may be embedded in a channel list attribute (e.g., refer to Table 4).

According to an embodiment, in operation 1223, the electronic device 801 and the electronic device 901 may perform provisioning. The electronic device 801, which is the group owner, may transmit a P2P beacon. The electronic device 901, which is the group client, may perform scanning in response to receiving the P2P beacon. The electronic device 801 and the electronic device 901 may exchange requests and responses related to probe, authentication, and/or association.

According to an embodiment, the electronic device 801 and the electronic device 901 may exchange the AP information, which is the information about the AP (e.g., the DFS owner), and/or the available bandwidth during the provisioning process. The AP information and/or the available bandwidth may be included in the P2P beacon, a probe request, a probe response, an association request, and/or an association response. The AP information may be embedded in a WLAN AP information attribute. The available bandwidth may be embedded in an HT operation information field, a VHT operation information field, and/or an HE operation information field.

According to an embodiment, the electronic device 801 and the electronic device 901 may be connected through Wi-Fi Direct over the 160 MHz bandwidth in the 5 GHz band (e.g., the DFS channel). The electronic device 801 and the electronic device 901 may perform Wi-Fi Direct communication through the 5 GHz band (e.g., the DFS channel).

According to an embodiment, in operation 1230, the electronic device 801 may perform radar detection on the DFS channel. The electronic device 801 may transmit a P2P beacon, as the DFS owner and the group owner. The P2P beacon may include DFS owner information. The electronic device 801 may release the connection to the AP. It is to be noted that operation 1230 may be performed optionally.

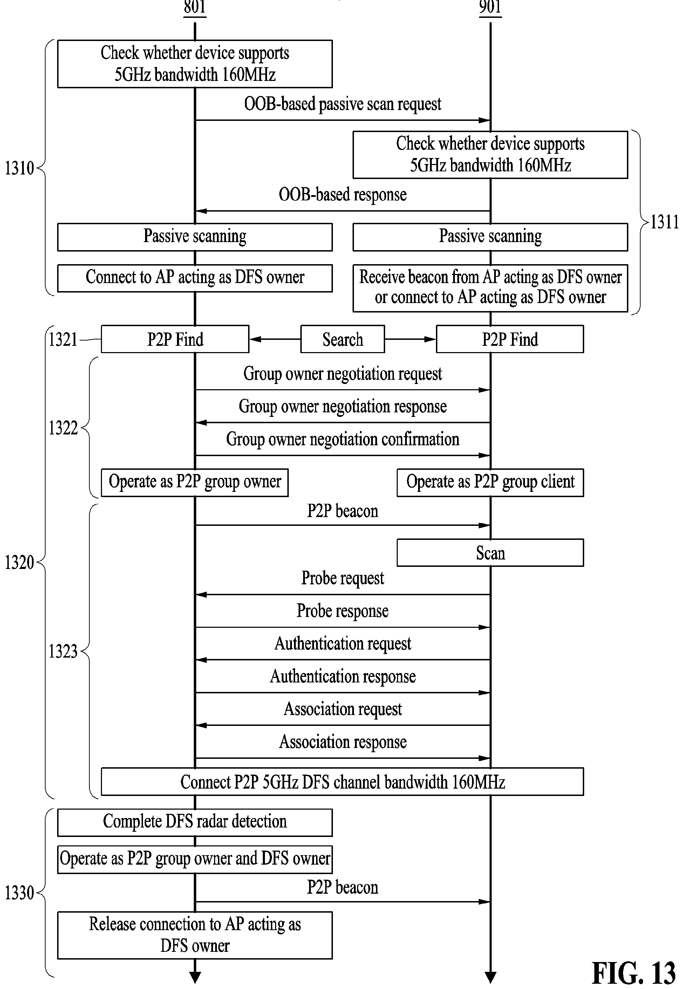

Referring to FIG. 13, according to an embodiment, the electronic device 801 and the electronic device 901 may perform Wi-Fi Direct communication with a 160 MHz bandwidth of a 5 GHz band (e.g., a DFS channel).

According to an embodiment, operations 1310 to 1330 may be performed in sequential order but are not necessarily performed in sequential order. For example, the order of operations 1310 to 1330 may be changed, and at least two operations may be performed in parallel. The operations may be performed by an electronic device (e.g., the electronic device 801 or the electronic device 901), and may include operations performed by a wireless communication circuit (e.g., the wireless communication circuit 810 in FIG. 8 or the wireless communication circuit 910 in FIG. 9) and operations performed by a processor (e.g., the processor 820 in FIG. 8 or the processor 920 in FIG. 9) through the wireless communication circuit.

According to an embodiment, in operation 1310, the electronic device 801 may establish a connection to an AP that is a DFS owner. The DFS owner may use a DFS channel. The DFS owner may be a device that is allowed to occupy the DFS channel. The DFS owner may scan radar signals. In a case where no active radar signal is detected on the DFS channel, the DFS owner may use (e.g., occupy) the DFS channel. The DFS owner may be the AP. Operation 1310 may be triggered as an application that uses Wi-Fi Direct is driven. Operation 1310 may be triggered by a user input to a WSC button.

According to an embodiment, the electronic device 801 may check whether it supports a 160 MHz bandwidth of a 5 GHz band. The electronic device 801 may transmit a passive scan request to the electronic device 901 based on an out-of-band (OOB) (e.g., via an OOB communication channel, such as via Bluetooth). For example, in response to determining that the electronic device supports a 160 MHz bandwidth of a 5 GHz band, the electronic device 801 may perform the passive scanning to find the DFS owner. The passive scan request may include information as to whether the electronic device 801 supports the 160 MHz bandwidth. The electronic device 801 may receive a response from the electronic device 901 based on the OOB (e.g., via the OOB communication channel). The electronic device 801 may perform passive scanning to find the DFS owner. The electronic device 801 may connect to the DFS owner (e.g., the AP) found through the passive scanning. In a case where AP information, which is information about the AP that is the DFS owner, is already obtained, the electronic device 801 may connect to the AP without the passive scanning. The electronic device 801 may be configured to establish the connection to the AP that is the DFS owner, at a time when extended bandwidth-based communication is required (e.g., when a large data transfer is required (e.g., streaming a high-definition video, running a VR service, downloading a large file, and accessing a large DB), and when real-time communication is required (e.g., making a video call and running a high resource demanding game). As a result of the connection to the AP, the electronic device 801 may obtain the AP information (e.g., DFS channel information and bandwidth information).

According to an embodiment, in operation 1311, the electronic device 901 may establish a connection to the AP that is the DFS owner and/or receive a beacon from the AP. In response to receiving an OOB-based passive scan request (e.g. receiving a passive scan request via an OOB communication channel, such as Bluetooth), the electronic device 901 may check whether it supports the 160 MHz bandwidth of the 5 GHz band. Based on the OOB (e.g., via the OOB communication channel), the electronic device 901 may transmit a response to the electronic device 801. The response may include information as to whether the electronic device 901 supports the 160 MHz bandwidth. The electronic device 901 may perform passive scanning to find the DFS owner. For example, in response to determining that the electronic device 901 supports a 160 MHz bandwidth of a 5 GHz band, the electronic device 901 may perform the passive scanning to find the DFS owner. The electronic device 901 may connect to the DFS owner (e.g., the AP) found through the passive scanning or may receive a beacon from the AP. The electronic device 901 may be configured to establish the connection to the AP that is the DFS owner or receive a beacon from the AP, at a time when extended bandwidth-based communication is required (e.g., when a large data transfer is required (e.g., streaming a high-definition video, running a VR service, downloading a large file, and accessing a large DB), and when real-time communication is required (e.g., making a video call and running a high resource demanding game)). As a result of connecting to the AP or receiving a beacon from the AP, the electronic device 901 may obtain the AP information (e.g., DFS channel information and bandwidth information).

According to an embodiment, in operation 1320, the electronic device 801 and the electronic device 901 may establish (or perform) a Wi-Fi Direct connection based on the DFS channel.

According to an embodiment, in operation 1321, the electronic device 801 and the electronic device 901 may perform peer device finding (or peer device discovery). The peer device finding may include at least some of the operations described above with reference to FIG. 2, for example, the Wi-Fi Direct device discovery 210, the service discovery 220, and/or the provision discovery 230. A repeated description thereof is omitted here.

According to an embodiment, in operation 1322, the electronic device 801 and the electronic device 901 may perform a group owner negotiation of a Wi-Fi Direct communication group. The electronic device 801 and the electronic device 901 may exchange a group owner negotiation request and a group owner negotiation response. The electronic device 801 may transmit a group owner negotiation confirmation to the electronic device 901. The electronic device 801 and the electronic device 901 may compare their respective group owner intents to determine a group owner. The electronic device 801 connected to the AP may have a higher group owner intent than the electronic device 901 receiving a beacon from the AP. The electronic device 801 connected to the AP may operate as the group owner, and the electronic device 901 receiving a beacon from the AP may operate as a group client.

According to an embodiment, the group owner negotiation request and the group owner negotiation response may each include the AP information, which is the information about the AP (e.g., the AP that is the DFS owner), a group owner intent, an available channel list (e.g., a DFS channel list), and/or an available bandwidth. The AP information may be embedded in a WLAN AP information attribute (e.g., refer to Table 4). The group owner intent may be embedded in a group owner intent attribute (e.g., refer to Table 4). The available channel list (e.g., the DFS channel list) or the available bandwidth may be embedded in a channel list attribute (e.g., refer to Table 4).

According to an embodiment, in operation 1323, the electronic device 801 and the electronic device 901 may perform provisioning. The electronic device 801, which is the group owner, may transmit a P2P beacon. The electronic device 901, which is the group client, may perform scanning in response to receiving the P2P beacon. The electronic device 801 and the electronic device 901 may exchange requests and responses related to probe, authentication, and/or association.

According to an embodiment, the electronic device 801 and the electronic device 901 may exchange the AP information, which is the information about the AP (e.g., the DFS owner), and/or the available bandwidth during the provisioning process. The AP information and/or the available bandwidth may be included in the P2P beacon, a probe request, a probe response, an association request, and/or an association response. The AP information may be embedded in a WLAN AP information attribute. The available bandwidth may be embedded in an HT operation information field, a VHT operation information field, and/or an HE operation information field.

According to an embodiment, the electronic device 801 and the electronic device 901 may be connected through Wi-Fi Direct over the 160 MHz bandwidth in the 5 GHz band (e.g., the DFS channel). The electronic device 801 and the electronic device 901 may perform Wi-Fi Direct communication through the 5 GHz band (e.g., the DFS channel).

According to an embodiment, in operation 1330, the electronic device 801 may perform radar detection on the DFS channel. The electronic device 801 may transmit a P2P beacon, as the DFS owner and the group owner. The P2P beacon may include DFS owner information. The electronic device 801 may release the connection to the AP. It is to be noted that operation 1330 may be performed optionally.

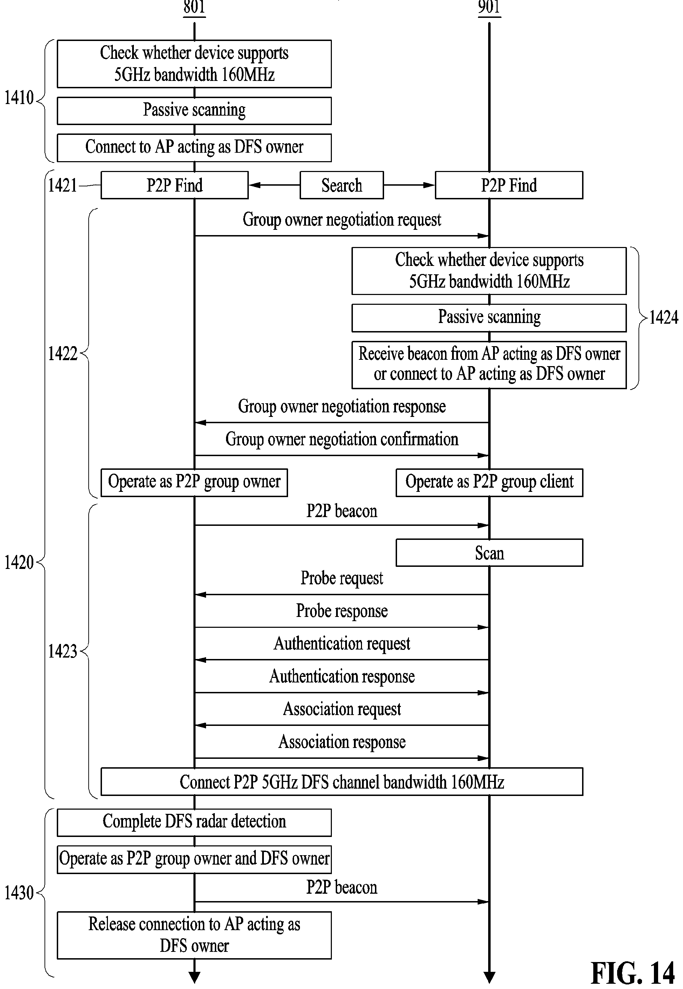

Referring to FIG. 14, according to an embodiment, the electronic device 801 and the electronic device 901 may perform Wi-Fi Direct communication with a 160 MHz bandwidth of a 5 GHz band (e.g., a DFS channel).

According to an embodiment, operations 1410 to 1430 may be performed in sequential order but are not necessarily performed in sequential order. For example, the order of operations 1410 to 1430 may be changed, and at least two operations may be performed in parallel. The operations may be performed by an electronic device (e.g., the electronic device 801 or the electronic device 901), and may include operations performed by a wireless communication circuit (e.g., the wireless communication circuit 810 in FIG. 8 or the wireless communication circuit 910 in FIG. 9) and operations performed by a processor (e.g., the processor 820 in FIG. 8 or the processor 920 in FIG. 9) through the wireless communication circuit.

According to an embodiment, in operation 1410, the electronic device 801 may establish a connection to an AP that is a DFS owner. The DFS owner may use a DFS channel. The DFS owner may be a device that is allowed to occupy the DFS channel. The DFS owner may scan radar signals. In a case where no active radar signal is detected on the DFS channel, the DFS owner may use (e.g., occupy) the DFS channel. The DFS owner may be the AP.

According to an embodiment, the electronic device 801 may check whether it supports the 160 MHz bandwidth of the 5 GHz band. The electronic device 801 may perform passive scanning to find the DFS owner. For example, in response to determining that the electronic device 801 supports a 160 MHz bandwidth of a 5 GHz band, the electronic device 801 may perform the passive scanning to find the DFS owner. The electronic device 801 may connect to the DFS owner (e.g., the AP) found through the passive scanning. The electronic device 801 may also connect to the AP without the passive scanning in a case where AP information, which is information about the AP that is the DFS owner, is already obtained. The electronic device 801 may be configured to perform the connection to the AP that is the DFS owner at a time when extended bandwidth-based communication is required (e.g., when a large data transfer is required (e.g., streaming a high-definition video, running a VR service, downloading a large file, and accessing a large DB), and when real-time communication is required (e.g., making a video call and running a high resource demanding game)). As a result of the connection to the AP, the electronic device 801 may obtain the AP information (e.g., DFS channel information and bandwidth information)

According to an embodiment, in operation 1420, the electronic device 801 and the electronic device 901 may perform a Wi-Fi Direct connection based on the DFS channel.

According to an embodiment, in operation 1421, the electronic device 801 and the electronic device 901 may perform peer device finding (or peer device discovery). The peer device finding may include at least some of the operations described above with reference to FIG. 2, for example, the Wi-Fi Direct device discovery 210, the service discovery 220, and/or the provision discovery 230. A repeated description thereof is omitted here.

According to an embodiment, in operation 1422, the electronic device 801 and the electronic device 901 may perform a group owner negotiation of a Wi-Fi Direct communication group. The electronic device 801 and the electronic device 901 may exchange a group owner negotiation request and a group owner negotiation response. The electronic device 801 may transmit a group owner negotiation confirmation to the electronic device 901. The electronic device 801 and the electronic device 901 may compare their respective group owner intents to determine a group owner. The electronic device 801 connected to the AP may have a higher group owner intent than the electronic device 901 receiving a beacon from the AP. The electronic device 801 connected to the AP may operate as the group owner, and the electronic device 901 receiving the beacon from the AP may operate as a group client.

According to an embodiment, the group owner negotiation request and the group owner negotiation response may each include AP information, which is information about the AP (e.g., the AP that is the DFS owner), a group owner intent, an available channel list (e.g., a DFS channel list), and/or an available bandwidth. The AP information may be embedded in a WLAN AP information attribute (e.g., refer to Table 4). The group owner intent may be embedded in a group owner intent attribute (e.g., refer to Table 4). The available channel list (e.g., the DFS channel list) or the available bandwidth may be embedded in a channel list attribute (e.g., refer to Table 4).

According to an embodiment, in operation 1424, in response to the group owner negotiation request received during the Wi-Fi Direct connection process, the electronic device 901 may establish a connection to the AP that is the DFS owner or receive a beacon from the AP. First, the electronic device 901 may check whether it supports the 160 MHz bandwidth of the 5 GHz band. The electronic device 901 may perform passive scanning to find the DFS owner. For example, in response to determining that the electronic device 901 supports a 160 MHz bandwidth of a 5 GHz band, the electronic device 901 may perform the passive scanning to find the DFS owner. The electronic device 901 may connect to the DFS owner (e.g., the AP) found through the passive scanning or receive a beacon from the AP. That is, the electronic device 901 may perform passive scanning to receive a beacon from the AP but in some embodiments the electronic device 901 may not connect to the AP after receiving the beacon. The electronic device 901 may be configured to perform the connection to the AP that is the DFS owner or receive a beacon from the AP, at a time when extended bandwidth-based communication is required (e.g., when a large data transfer is required (e.g., streaming a high-definition video, running a VR service, downloading a large file, and accessing a large DB), and when real-time communication is required (e.g., making a video call and running a high resource demanding game)). As a result of connecting to the AP or receiving the beacon from the AP, the electronic device 901 may obtain the AP information (e.g., DFS channel information and bandwidth information)

According to an embodiment, in operation 1423, the electronic device 801 and the electronic device 901 may perform provisioning. The electronic device 801, which is the group owner, may transmit a P2P beacon. The electronic device 901, which is the group client, may perform scanning in response to receiving the P2P beacon. The electronic device 801 and the electronic device 901 may exchange requests and responses related to probe, authentication, and/or association.

According to an embodiment, the electronic device 801 and the electronic device 901 may exchange the AP information, which is the information about the AP (e.g., the DFS owner), and/or the available bandwidth during the provisioning process. The AP information and/or the available bandwidth may be included in the P2P beacon, a probe request, a probe response, an association request, and/or an association response. The AP information may be embedded in a WLAN AP information attribute. The available bandwidth may be embedded in an HT operation information field, a VHT operation information field, and/or an HE operation information field.

According to an embodiment, the electronic device 801 and the electronic device 901 may be connected through Wi-Fi Direct over the 160 MHz bandwidth in the 5 GHz band (e.g., the DFS channel). The electronic device 801 and the electronic device 901 may perform Wi-Fi Direct communication through the 5 GHz band (e.g., the DFS channel).

According to an embodiment, in operation 1430, the electronic device 801 may perform radar detection on the DFS channel. The electronic device 801 may transmit a beacon, as the DFS owner and the group owner. The beacon may include DFS owner information. The electronic device 801 may release the connection to the AP. It is to be noted that operation 1430 may be performed optionally.

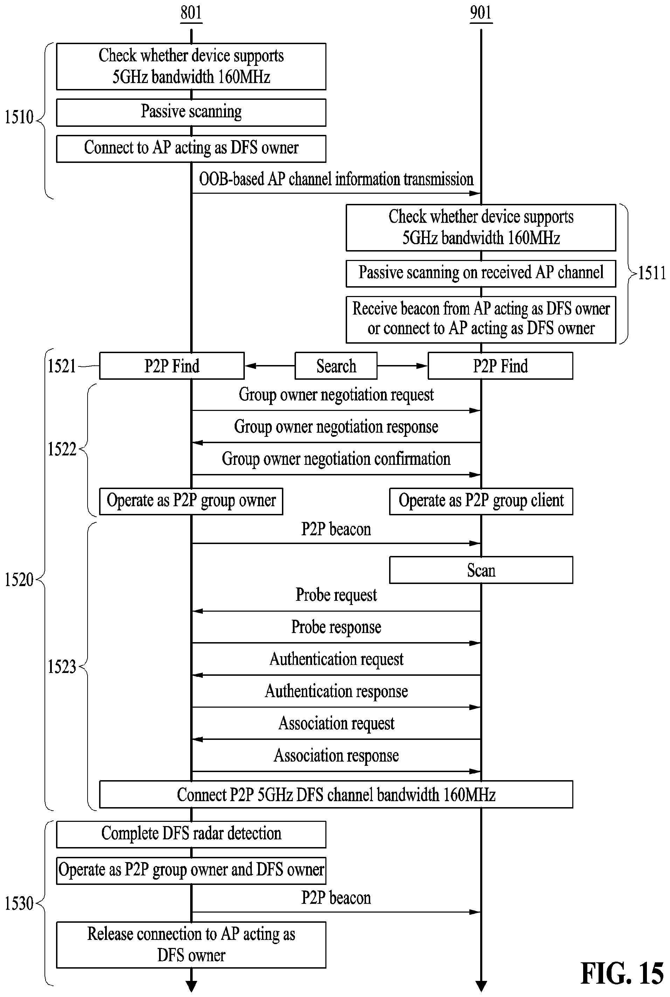

Referring to FIG. 15, according to an embodiment, the electronic device 801 and the electronic device 901 may perform Wi-Fi Direct communication with a 160 MHz bandwidth of a 5 GHz band (e.g., a DFS channel).

According to an embodiment, operations 1510 to 1530 may be performed in sequential order but are not necessarily performed in sequential order. For example, the order of operations 1510 to 1530 may be changed, and at least two operations may be performed in parallel. The operations may be performed by an electronic device (e.g., the electronic device 801 or the electronic device 901), and may include operations performed by a wireless communication circuit (e.g., the wireless communication circuit 810 in FIG. 8 or the wireless communication circuit 910 in FIG. 9) and operations performed by a processor (e.g., the processor 820 in FIG. 8 or the processor 920 in FIG. 9) through the wireless communication circuit.

According to an embodiment, in operation 1510, the electronic device 801 may establish a connection to an AP that is a DFS owner. The DFS owner may use a DFS channel. The DFS owner may be a device that is allowed to occupy the DFS channel. The DFS owner may scan radar signals. In a case where no active radar signal is detected on the DFS channel, the DFS owner may use (e.g., occupy) the DFS channel. The DFS owner may be the AP. Operation 1510 may be triggered as an application that uses Wi-Fi Direct is driven. Operation 1510 may be triggered by a user input to a WSC button.

According to an embodiment, the electronic device 801 may check whether it supports the 160 MHz bandwidth of the 5 GHz band. The electronic device 801 may perform passive scanning to find the DFS owner. For example, in response to determining that the electronic device 801 supports a 160 MHz bandwidth of a 5 GHz band, the electronic device 801 may perform the passive scanning to find the DFS owner. The electronic device 801 may connect to the DFS owner (e.g., the AP) found through the passive scanning. The electronic device 801 may also connect to the AP without the passive scanning in a case where AP information, which is information about the AP that is the DFS owner, is already obtained. The electronic device 801 may be configured to perform the connection to the AP that is the DFS owner at a time when extended bandwidth-based communication is required (e.g., when a large data transfer is required (e.g., streaming a high-definition video, running a VR service, downloading a large file, and accessing a large DB), and when real-time communication is required (e.g., making a video call and running a high resource demanding game)). As a result of the connection to the AP, the electronic device 801 may obtain the AP information (e.g., DFS channel information and bandwidth information). The electronic device 801 may transmit channel information of the AP to the electronic device 901 based on an OOB (e.g., via an OOB communication channel, such as via Bluetooth).

According to an embodiment, in operation 1511, in response to receiving the channel information of the AP, the electronic device 901 may perform a connection to the AP that is the DFS owner and/or receive a beacon from the AP. The electronic device 901 may check whether it supports the 160 MHz bandwidth of the 5 GHz band. The electronic device 901 may perform passive scanning to find the DFS owner. For example, in response to determining that the electronic device 901 supports a 160 MHz bandwidth of a 5 GHz band, the electronic device 901 may perform the passive scanning to find the DFS owner. The passive scanning may be performed using the received channel information of the AP (e.g., the AP that is the DFS owner). The electronic device 901 may connect to the DFS owner (e.g., the AP) found through the passive scanning, or receive a beacon from the AP. The electronic device 901 may be configured to perform the connection to the AP that is the DFS owner or receive a beacon from the AP, at a time when extended bandwidth-based communication is required (e.g., when a large data transfer is required (e.g., streaming a high-definition video, running a VR service, downloading a large file, and accessing a large DB), and when real-time communication is required (e.g., making a video call and running a high resource demanding game)). As a result of connecting to the AP or receiving the beacon from the AP, the electronic device 901 may obtain the AP information (e.g., DFS channel information and bandwidth information).

According to an embodiment, in operation 1520, the electronic device 801 and the electronic device 901 may perform a Wi-Fi Direct connection based on the DFS channel.

According to an embodiment, in operation 1521, the electronic device 801 and the electronic device 901 may perform peer device finding (or peer device discovery). The peer device finding may include at least some of the operations described above with reference to FIG. 2, for example, the Wi-Fi Direct device discovery 210, the service discovery 220, and/or the provision discovery 230. A repeated description thereof is omitted here.

According to an embodiment, in operation 1522, the electronic device 801 and the electronic device 901 may perform a group owner negotiation of a Wi-Fi Direct communication group. The electronic device 801 and the electronic device 901 may exchange a group owner negotiation request and a group owner negotiation response. The electronic device 801 may transmit a group owner negotiation confirmation to the electronic device 901. The electronic device 801 and the electronic device 901 may compare their respective group owner intents to determine a group owner. The electronic device 801 connected to the AP may have a higher group owner intent than the electronic device 901 receiving a beacon from the AP. The electronic device 801 connected to the AP may operate as the group owner, and the electronic device 901 receiving the beacon from the AP may operate as a group client.

According to an embodiment, the group owner negotiation request and the group owner negotiation response may each include the AP information, which is the information about the AP (e.g., the AP that is the DFS owner), a group owner intent, an available channel list (e.g., a DFS channel list), and/or an available bandwidth. The AP information may be embedded in a WLAN AP information attribute (e.g., refer to Table 4). The group owner intent may be embedded in a group owner intent attribute (e.g., refer to Table 4). The available channel list (e.g., the DFS channel list) or the available bandwidth may be embedded in a channel list attribute (e.g., refer to Table 4).

According to an embodiment, in operation 1523, the electronic device 801 and the electronic device 901 may perform provisioning. The electronic device 801, which is the group owner, may transmit a P2P beacon. The electronic device 901, which is the group client, may perform scanning in response to receiving the P2P beacon. The electronic device 801 and the electronic device 901 may exchange requests and responses related to probe, authentication, and/or association.

According to an embodiment, the electronic device 801 and the electronic device 901 may exchange the AP information, which is the information about the AP (e.g., the DFS owner), and/or the available bandwidth during the provisioning process. The AP information and/or the available bandwidth may be included in the P2P beacon, a probe request, a probe response, an association request, and/or an association response. The AP information may be embedded in a WLAN AP information attribute. The available bandwidth may be embedded in an HT operation information field, a VHT operation information field, and/or an HE operation information field.

According to an embodiment, the electronic device 801 and the electronic device 901 may be connected through Wi-Fi Direct over the 160 MHz bandwidth in the 5 GHz band (e.g., the DFS channel). The electronic device 801 and the electronic device 901 may perform Wi-Fi Direct communication through the 5 GHz band (e.g., the DFS channel).

According to an embodiment, in operation 1530, the electronic device 801 may perform radar detection on the DFS channel. The electronic device 801 may transmit a P2P beacon, as the DFS owner and the group owner. The P2P beacon may include DFS owner information. The electronic device 801 may release the connection to the AP. It is to be noted that operation 1530 may be performed optionally.

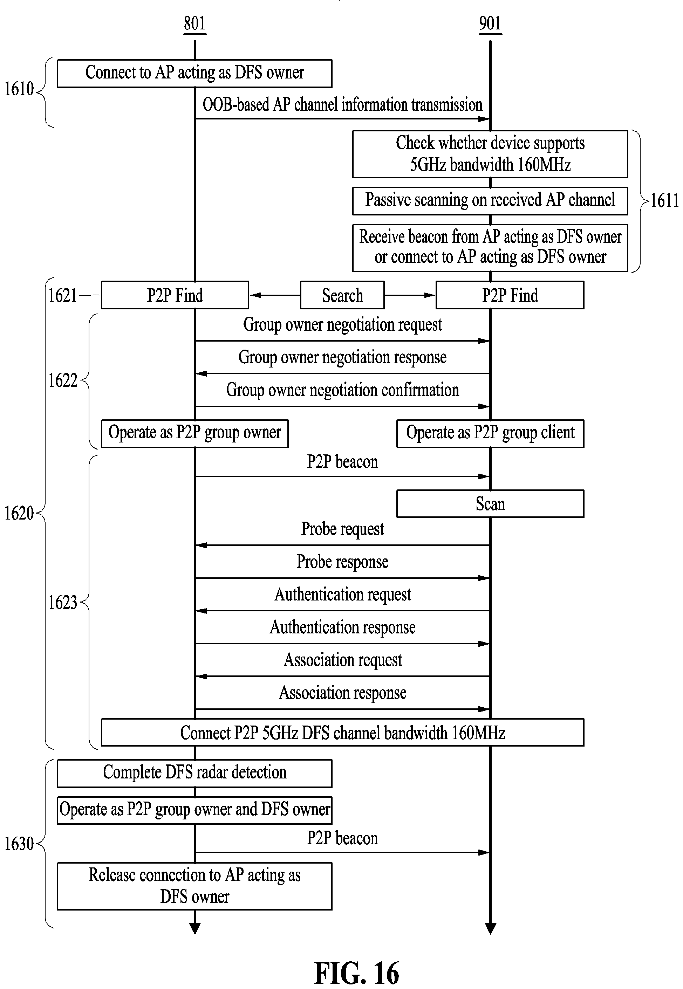

Referring to FIG. 16, according to an embodiment, the electronic device 801 and the electronic device 901 may perform Wi-Fi Direct communication with a 160 MHz bandwidth of a 5 GHz band (e.g., a DFS channel).

According to an embodiment, operations 1610 to 1630 may be performed in sequential order but are not necessarily performed in sequential order. For example, the order of operations 1610 to 1630 may be changed, and at least two operations may be performed in parallel. The operations may be performed by an electronic device (e.g., the electronic device 801 or the electronic device 901), and may include operations performed by a wireless communication circuit (e.g., the wireless communication circuit 810 in FIG. 8 or the wireless communication circuit 910 in FIG. 9) and operations performed by a processor (e.g., the processor 820 in FIG. 8 or the processor 920 in FIG. 9) through the wireless communication circuit.

According to an embodiment, in operation 1610, the electronic device 801 may establish a connection to an AP that is a DFS owner. The electronic device 801 may be configured to perform the connection to the AP that is the DFS owner at a time when extended bandwidth-based communication is required (e.g., when a large data transfer is required (e.g., streaming a high-definition video, running a VR service, downloading a large file, and accessing a large DB), and when real-time communication is required (e.g., making a video call and running a high resource demanding game)). The DFS owner may use a DFS channel. The DFS owner may be a device that is allowed to occupy the DFS channel. The DFS owner may scan radar signals. In a case where no active radar signal is detected on the DFS channel, the DFS owner may use (e.g., occupy) the DFS channel. The DFS owner may be the AP. The electronic device 801 may transmit channel information of the AP (e.g., the DFS owner) to the electronic device 901 based on an OOB (e.g. via an OOB communication channel, such as Bluetooth). Operation 1610 may be triggered as an application that uses Wi-Fi Direct is driven. Operation 1610 may be triggered by a user input to a WSC button.

According to an embodiment, in operation 1611, in response to receiving the channel information of the AP, the electronic device 901 may establish a connection to the AP that is the DFS owner or receive a beacon from the AP. The electronic device 901 may check whether it supports the 160 MHz bandwidth of the 5 GHz band. The electronic device 901 may perform passive scanning to find the DFS owner. For example, in response to determining that the electronic device 901 supports a 160 MHz bandwidth of a 5 GHz band, the electronic device 901 may perform the passive scanning to find the DFS owner. The passive scanning may be performed using the received channel information of the AP (e.g., the AP that is the DFS owner). The electronic device 901 may connect to the DFS owner (e.g., the AP) found through the passive scanning or receive a beacon from the AP. That is, the electronic device 901 may perform passive scanning to receive a beacon from the AP but in some embodiments the electronic device 901 may not connect to the AP after receiving the beacon. The electronic device 901 may be configured to perform the connection to the AP that is the DFS owner or receive a beacon from the AP, at a time when extended bandwidth-based communication is required (e.g., when a large data transfer is required (e.g., streaming a high-definition video, running a VR service, downloading a large file, and accessing a large DB), and when real-time communication is required (e.g., making a video call and running a high resource demanding game)). As a result of connecting to the AP or receiving the beacon from the AP, the electronic device 901 may obtain the AP information (e.g., DFS channel information and bandwidth information).

According to an embodiment, in operation 1620, the electronic device 801 and the electronic device 901 may perform a Wi-Fi Direct connection based on the DFS channel.

According to an embodiment, in operation 1621, the electronic device 801 and the electronic device 901 may perform peer device finding (or peer device discovery). The peer device finding may include at least some of the operations described above with reference to FIG. 2, for example, the Wi-Fi Direct device discovery 210, the service discovery 220, and/or the provision discovery 230. A repeated description thereof is omitted here.

According to an embodiment, in operation 1622, the electronic device 801 and the electronic device 901 may perform a group owner negotiation of a Wi-Fi Direct communication group. The electronic device 801 and the electronic device 901 may exchange a group owner negotiation request and a group owner negotiation response. The electronic device 801 may transmit a group owner negotiation confirmation to the electronic device 901. The electronic device 801 and the electronic device 901 may compare their respective group owner intents to determine a group owner. The electronic device 801 connected to the AP may have a higher group owner intent than the electronic device 901 receiving a beacon from the AP. The electronic device 801 connected to the AP may operate as the group owner, and the electronic device 901 receiving a beacon from the AP may operate as a group client.

According to an embodiment, the group owner negotiation request and the group owner negotiation response may each include the AP information, which is the information about the AP (e.g., the AP that is the DFS owner), a group owner intent, an available channel list (e.g., a DFS channel list), and/or an available bandwidth. The AP information may be embedded in a WLAN AP information attribute (e.g., refer to Table 4). The group owner intent may be embedded in a group owner intent attribute (e.g., refer to Table 4). The available channel list (e.g., the DFS channel list) or the available bandwidth may be embedded in a channel list attribute (e.g., refer to Table 4).

According to an embodiment, in operation 1623, the electronic device 801 and the electronic device 901 may perform provisioning. The electronic device 801, which is the group owner, may transmit a P2P beacon. The electronic device 901, which is the group client, may perform scanning in response to receiving the P2P beacon. The electronic device 801 and the electronic device 901 may exchange requests and responses related to probe, authentication, and/or association.

According to an embodiment, the electronic device 801 and the electronic device 901 may exchange the AP information, which is the information about the AP (e.g., the DFS owner), and/or the available bandwidth during the provisioning process. The AP information and/or the available bandwidth may be included in the P2P beacon, a probe request, a probe response, an association request, and/or an association response. The AP information may be embedded in a WLAN AP information attribute. The available bandwidth may be embedded in an HT operation information field, a VHT operation information field, and/or an HE operation information field.

According to an embodiment, the electronic device 801 and the electronic device 901 may be connected through Wi-Fi Direct over the 160 MHz bandwidth in the 5 GHz band (e.g., the DFS channel). The electronic device 801 and the electronic device 901 may perform Wi-Fi Direct communication through the 5 GHz band (e.g., the DFS channel).

According to an embodiment, in operation 1630, the electronic device 801 may perform radar detection on the DFS channel. The electronic device 801 may transmit a P2P beacon, as the DFS owner and the group owner. The P2P beacon may include DFS owner information. The electronic device 801 may release the connection to the AP. It is to be noted that operation 1630 may be performed optionally.

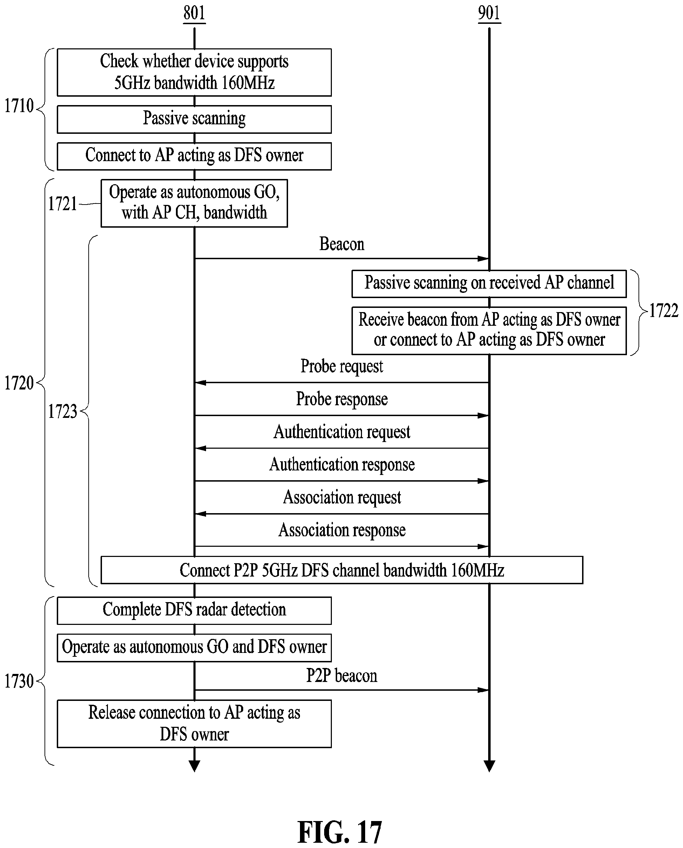

Referring to FIG. 17, according to an embodiment, the electronic device 801 and the electronic device 901 may perform Wi-Fi Direct communication with a 160 MHz bandwidth of a 5 GHz band (e.g., a DFS channel).

According to an embodiment, operations 1710 to 1730 may be performed in sequential order but are not necessarily performed in sequential order. For example, the order of operations 1710 to 1730 may be changed, and at least two operations may be performed in parallel. The operations may be performed by an electronic device (e.g., the electronic device 801 or the electronic device 901), and may include operations performed by a wireless communication circuit (e.g., the wireless communication circuit 810 in FIG. 8 or the wireless communication circuit 910 in FIG. 9) and operations performed by a processor (e.g., the processor 820 in FIG. 8 or the processor 920 in FIG. 9) through the wireless communication circuit.

According to an embodiment, in operation 1710, the electronic device 801 may establish a connection to an AP that is a DFS owner. The DFS owner may use a DFS channel. The DFS owner may be a device that is allowed to occupy the DFS channel. The DFS owner may scan radar signals. In a case where no active radar signal is detected on the DFS channel, the DFS owner may use (e.g., occupy) the DFS channel. The DFS owner may be the AP. Operation 1710 may be triggered as an application that uses Wi-Fi Direct is driven. Operation 1710 may be triggered by a user input to a WSC button.

According to an embodiment, the electronic device 801 may check whether it supports the 160 MHz bandwidth of the 5 GHz band. The electronic device 801 may perform passive scanning to find the DFS owner. For example, in response to determining that the electronic device 801 supports a 160 MHz bandwidth of a 5 GHz band, the electronic device 801 may perform the passive scanning to find the DFS owner. The electronic device 801 may connect to the DFS owner (e.g., the AP) found through the passive scanning. The electronic device 801 may also connect to the AP without the passive scanning in a case where AP information, which is information about the AP that is the DFS owner, is already obtained. The electronic device 801 may be configured to perform the connection to the AP that is the DFS owner at a time when extended bandwidth-based communication is required (e.g., when a large data transfer is required (e.g., streaming a high-definition video, running a VR service, downloading a large file, and accessing a large DB), and when real-time communication is required (e.g., making a video call and running a high resource demanding game)). As a result of the connection to the AP, the electronic device 801 may obtain the AP information (e.g., DFS channel information and bandwidth information).

According to an embodiment, in operation 1720, the electronic device 801 and the electronic device 901 may perform a Wi-Fi Direct connection based on the DFS channel.

According to an embodiment, in operation 1721, the electronic device 801 may be triggered as a group owner of a Wi-Fi Direct communication group in response to the connection to the AP (e.g., the AP that is the DFS owner). For example, in response to determining that it is connected to the AP that is the DFS owner, the electronic device 801 may operate as the group owner. The Wi-Fi Direct communication group may be a communication group that uses an AP channel (e.g., the DFS channel), which is a channel of the AP, and the 160 MHz bandwidth.

According to an embodiment, in operation 1722, the electronic device 901 may perform passive scanning to find the DFS owner. The passive scanning may be performed using channel information of the AP (e.g., the AP that is the DFS owner). For example, the electronic device may passively scan the channel(s) indicated by the channel information of the AP. The channel information of the AP may be included in a beacon transmitted from the electronic device 801. The electronic device 901 may connect to the DFS owner (e.g., the AP) found through the passive scanning or receive a beacon from the AP. That is, the electronic device 901 may perform passive scanning to receive a beacon from the AP but in some embodiments the electronic device 901 may not connect to the AP after receiving the beacon. The electronic device 901 may be configured to connect to the AP that is the DFS owner or receive a beacon from the AP, at a time when extended bandwidth-based communication is required (e.g., when a large data transfer is required (e.g., streaming a high-definition video, running a VR service, downloading a large file, and accessing a large DB), and when real-time communication is required (e.g., making a video call and running a high resource demanding game)). As a result of connecting to the AP or receiving the beacon from the AP, the electronic device 901 may obtain the AP information (e.g., DFS channel information and bandwidth information). Operation 1722 may be performed in response to receiving the beacon.

According to an embodiment, in operation 1723, the electronic device 801 and the electronic device 901 may perform provisioning. The electronic device 801 may transmit, to the outside (e.g., to the electronic device 901 or as a broadcast), a beacon including the AP information and/or an available bandwidth. The electronic device 801, which is the group owner, may transmit the beacon. The electronic device 901, which is a group client, may perform passive scanning in response to receiving the beacon. The electronic device 801 and the electronic device 901 may exchange requests and responses related to probe, authentication, and/or association.

According to an embodiment, the electronic device 801 and the electronic device 901 may exchange the AP information, which is the information about the AP (e.g., the DFS owner), and/or the available bandwidth during the provisioning process. The AP information and/or the available bandwidth may be included in the beacon, a probe request, a probe response, an association request, and/or an association response. The AP information may be embedded in a WLAN AP information attribute. The available bandwidth may be embedded in an HT operation information field, a VHT operation information field, and/or an HE operation information field.

According to an embodiment, the electronic device 801 and the electronic device 901 may be connected through Wi-Fi Direct over the 160 MHz bandwidth in the 5 GHz band (e.g., the DFS channel). The electronic device 801 and the electronic device 901 may perform Wi-Fi Direct communication through the 5 GHz band (e.g., the DFS channel).

According to an embodiment, in operation 1730, the electronic device 801 may perform radar detection on the DFS channel. The electronic device 801 may transmit a P2P beacon, as the DFS owner and the group owner. The P2P beacon may include DFS owner information. The electronic device 801 may release the connection to the AP. It is to be noted that operation 1730 may be performed optionally.

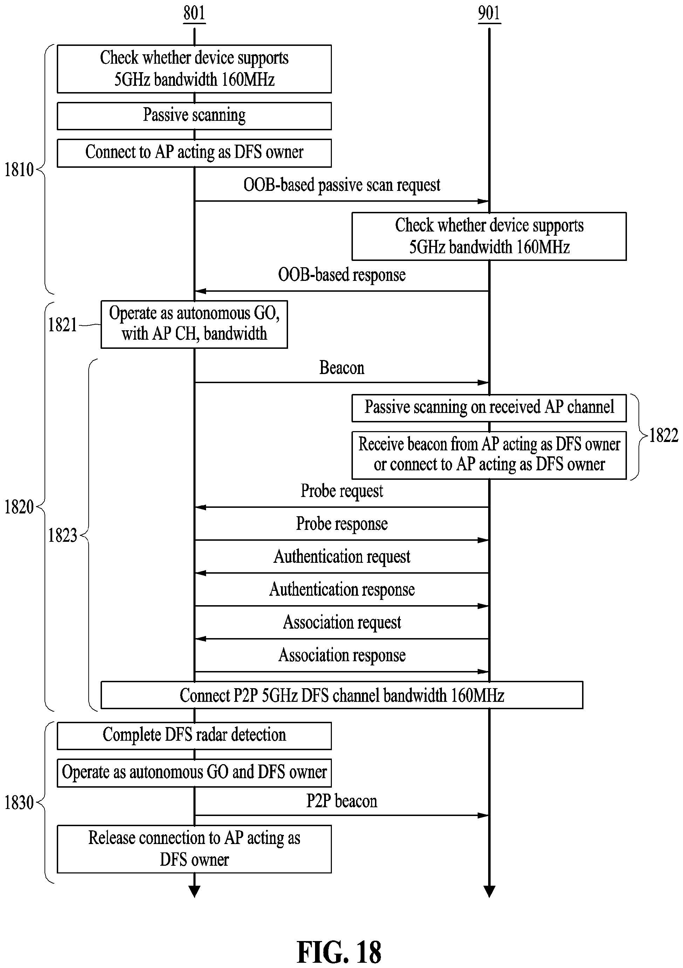

Referring to FIG. 18, according to an embodiment, the electronic device 801 and the electronic device 901 may perform Wi-Fi Direct communication with a 160 MHz bandwidth of a 5 GHz band (e.g., a DFS channel).

According to an embodiment, operations 1810 to 1830 may be performed in sequential order but are not necessarily performed in sequential order. For example, the order of operations 1810 to 1830 may be changed, and at least two operations may be performed in parallel. The operations may be performed by an electronic device (e.g., the electronic device 801 or the electronic device 901), and may include operations performed by a wireless communication circuit (e.g., the wireless communication circuit 810 in FIG. 8 or the wireless communication circuit 910 in FIG. 9) and operations performed by a processor (e.g., the processor 820 in FIG. 8 or the processor 920 in FIG. 9) through the wireless communication circuit.

According to an embodiment, in operation 1810, the electronic device 801 may establish a connection to an AP that is a DFS owner. The DFS owner may use a DFS channel. The DFS owner may be a device that is allowed to occupy the DFS channel. The DFS owner may scan radar signals. In a case where no active radar signal is detected on the DFS channel, the DFS owner may use (e.g., occupy) the DFS channel. The DFS owner may be the AP. Operation 1810 may be triggered as an application that uses Wi-Fi Direct is driven. Operation 1810 may be triggered by a user input to a WSC button.

According to an embodiment, the electronic device 801 may check whether it supports the 160 MHz bandwidth of the 5 GHz band. The electronic device 801 may perform passive scanning to find the DFS owner. For example, in response to determining that the electronic device 801 supports a 160 MHz bandwidth of a 5 GHz band, the electronic device 801 may perform the passive scanning to find the DFS owner. The electronic device 801 may connect to the DFS owner (e.g., the AP) found through the passive scanning. The electronic device 801 may also connect to the AP without the passive scanning in a case where AP information of the AP that is the DFS owner is already obtained. The electronic device 801 may be configured to perform the connection to the AP that is the DFS owner at a time when extended bandwidth-based communication is required (e.g., when a large data transfer is required (e.g., streaming a high-definition video, running a VR service, downloading a large file, and accessing a large DB), and when real-time communication is required (e.g., making a video call and running a high resource demanding game)). As a result of the connection to the AP, the electronic device 801 may obtain information about the AP, which is AP information (e.g., DFS channel information and bandwidth information). The electronic device 801 may transmit a passive scan request to the electronic device 901 based on an OOB (e.g., via an OOB communication channel, such as via Bluetooth). The passive scan request may include the AP information, which is the information about the AP (e.g., the AP that is the DFS owner), and/or information as to whether the electronic device 801 supports the 160 MHz bandwidth. In response to receiving the passive scan request, the electronic device 901 may check whether it supports the 160 MHz bandwidth of the 5 GHz band. The electronic device 801 may receive a response from the electronic device 901 based on the OOB (e.g., via the OOB communication channel). In this case, the response may include information as to whether the electronic device 901 supports the 160 MHz bandwidth of the 5 GHz band.

According to an embodiment, in operation 1820, the electronic device 801 and the electronic device 901 may perform a Wi-Fi Direct connection based on the DFS channel.

According to an embodiment, in operation 1821, the electronic device 801 may be triggered as a group owner of a Wi-Fi Direct communication group in response to receiving the OOB-based response (e.g. in response to receiving the response via the OOB communication channel). The Wi-Fi Direct communication group may be a communication group that uses an AP channel (e.g., a DFS channel), which is a channel of the AP, and the 160 MHz bandwidth.

According to an embodiment, in operation 1822, the electronic device 901 may perform passive scanning to find the DFS owner. The passive scanning may be performed using channel information of the AP (e.g., the AP that is the DFS owner). For example, the electronic device may passively scan the channel(s) indicated by the channel information of the AP. The channel information of the AP may be included in a beacon transmitted from the electronic device 801. The electronic device 901 may connect to the DFS owner (e.g., the AP) found through the passive scanning or receive a beacon from the AP. That is, the electronic device 901 may perform passive scanning to receive a beacon from the AP but in some embodiments the electronic device 901 may not connect to the AP after receiving the beacon. The electronic device 901 may be configured to perform the connection to the AP that is the DFS owner or receive a beacon from the AP, at a time when extended bandwidth-based communication is required (e.g., when a large data transfer is required (e.g., streaming a high-definition video, running a VR service, downloading a large file, and accessing a large DB), and when real-time communication is required (e.g., making a video call and running a high resource demanding game)). As a result of connecting to the AP or receiving the beacon from the AP, the electronic device 901 may obtain the AP information (e.g., DFS channel information and bandwidth information). Operation 1822 may be performed in response to receiving the beacon. Operation 1822 may be performed based on a probe response received during a provisioning process.

According to an embodiment, in operation 1823, the electronic device 801 and the electronic device 901 may perform provisioning. The electronic device 801 may transmit, to the outside (e.g., to the electronic device 901 or as a broadcast), a beacon including the AP information and/or an available bandwidth. The electronic device 801, which is the group owner, may transmit the beacon. The electronic device 901, which is a group client, may perform passive scanning in response to receiving the beacon. The electronic device 801 and the electronic device 901 may exchange requests and responses related to probe, authentication, and/or association.

According to an embodiment, the electronic device 801 and the electronic device 901 may exchange the AP information, which is the information about the AP (e.g., the DFS owner), and/or the available bandwidth during the provisioning process. The AP information and/or the available bandwidth may be included in the beacon, a probe request, a probe response, an association request, and/or an association response. The AP information may be embedded in a WLAN AP information attribute. The available bandwidth may be embedded in an HT operation information field, a VHT operation information field, and/or an HE operation information field.

According to an embodiment, the electronic device 801 and the electronic device 901 may be connected through Wi-Fi Direct over the 160 MHz bandwidth in the 5 GHz band (e.g., the DFS channel). The electronic device 801 and the electronic device 901 may perform Wi-Fi Direct communication through the 5 GHz band (e.g., the DFS channel).

According to an embodiment, in operation 1830, the electronic device 801 may perform radar detection on the DFS channel. The electronic device 801 may transmit a P2P beacon, as the DFS owner and the group owner. The electronic device 801 may release the connection to the AP. It is to be noted that operation 1830 may be performed optionally.

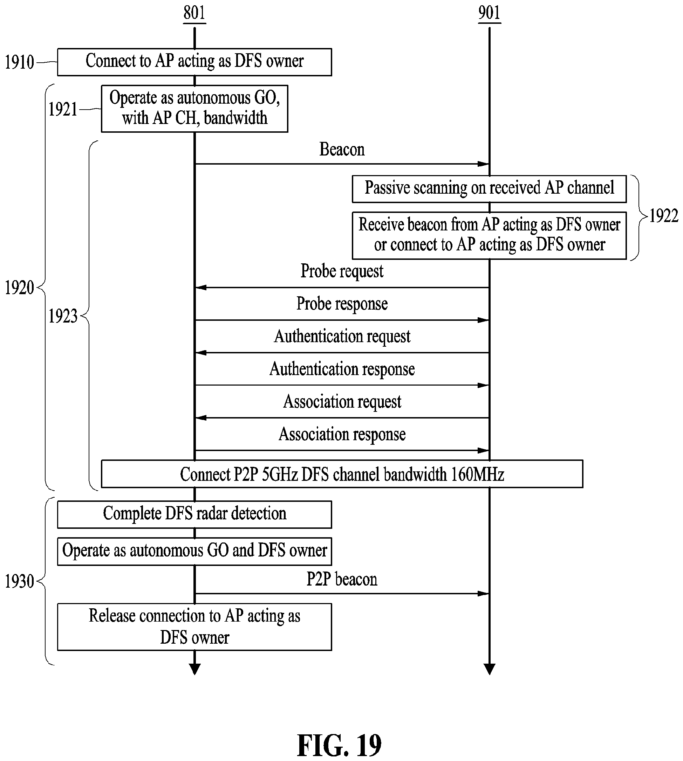

Referring to FIG. 19, according to an embodiment, the electronic device 801 and the electronic device 901 may perform Wi-Fi Direct communication with a 160 MHz bandwidth of a 5 GHz band (e.g., a DFS channel).

According to an embodiment, operations 1910 to 1930 may be performed in sequential order but are not necessarily performed in sequential order. For example, the order of operations 1910 to 1930 may be changed, and at least two operations may be performed in parallel. The operations may be performed by an electronic device (e.g., the electronic device 801 or the electronic device 901), and may include operations performed by a wireless communication circuit (e.g., the wireless communication circuit 810 in FIG. 8 or the wireless communication circuit 910 in FIG. 9) and operations performed by a processor (e.g., the processor 820 in FIG. 8 or the processor 920 in FIG. 9) through the wireless communication circuit.

According to an embodiment, in operation 1910, the electronic device 801 may check whether it is connected to an AP that is a DFS owner. The DFS owner may use a DFS channel. The DFS owner may be a device that is allowed to occupy the DFS channel. The DFS owner may scan radar signals. In a case where no active radar signal is detected on the DFS channel, the DFS owner may use (e.g., occupy) the DFS channel. The DFS owner may be the AP. The electronic device 801 may be configured to perform the connection to the AP that is the DFS owner at a time when extended bandwidth-based communication is required (e.g., when a large data transfer is required (e.g., streaming a high-definition video, running a VR service, downloading a large file, and accessing a large DB), and when real-time communication is required (e.g., making a video call and running a high resource demanding game)). Operation 1910 may be triggered as an application that uses Wi-Fi Direct is driven. Operation 1910 may be triggered by a user input to a WSC button.

According to an embodiment, in operation 1920, the electronic device 801 and the electronic device 901 may perform a Wi-Fi Direct connection based on the DFS channel.

According to an embodiment, in operation 1921, the electronic device 801 may be triggered as a group owner of a Wi-Fi Direct communication group in response to the connection to the AP (e.g., the AP that is the DFS owner). For example, in response to determining that it is connected to the AP that is the DFS owner, the electronic device 801 may operate as the group owner. The Wi-Fi Direct communication group may be a communication group that uses an AP channel (e.g., the DFS channel), which is a channel of the AP, and the 160 MHz bandwidth.

According to an embodiment, in operation 1922, the electronic device 901 may perform passive scanning to find the DFS owner. The passive scanning may be performed using channel information of the AP (e.g., the AP that is the DFS owner). For example, the electronic device may passively scan the channel(s) indicated by the channel information of the AP. The channel information of the AP may be included in a beacon transmitted from the electronic device 801. The electronic device 901 may connect to the DFS owner (e.g., the AP) found through the passive scanning or receive a beacon from the AP. That is, the electronic device 901 may perform passive scanning to receive a beacon from the AP but in some embodiments the electronic device 901 may not connect to the AP after receiving the beacon. The electronic device 901 may be configured to perform the connection to the AP that is the DFS owner or receive a beacon from the AP, at a time when extended bandwidth-based communication is required (e.g., when a large data transfer is required (e.g., streaming a high-definition video, running a VR service, downloading a large file, and accessing a large DB), and when real-time communication is required (e.g., making a video call and running a high resource demanding game)). As a result of connecting to the AP or receiving the beacon from the AP, the electronic device 901 may obtain AP information (e.g., DFS channel information and bandwidth information). Operation 1922 may be performed in response to receiving the beacon. Operation 1922 may be performed based on a probe response received during a provisioning process.

According to an embodiment, in operation 1923, the electronic device 801 and the electronic device 901 may perform provisioning. The electronic device 801 may transmit, to the outside (e.g., to the electronic device 901 or as a broadcast), a beacon including the AP information and/or an available bandwidth. The electronic device 801, which is the group owner, may transmit the beacon. The electronic device 901, which is a group client, may perform passive scanning in response to receiving the beacon. The electronic device 801 and the electronic device 901 may exchange requests and responses related to probe, authentication, and/or association.

According to an embodiment, the electronic device 801 and the electronic device 901 may exchange the AP information, which is information about the AP (e.g., the DFS owner), and/or the available bandwidth during the provisioning process. The AP information and/or the available bandwidth may be included in the beacon, a probe request, a probe response, an association request, and/or an association response. The AP information may be embedded in a WLAN AP information attribute. The available bandwidth may be embedded in an HT operation information field, a VHT operation information field, and/or an HE operation information field.

According to an embodiment, the electronic device 801 and the electronic device 901 may be connected through Wi-Fi Direct over the 160 MHz bandwidth in the 5 GHz band (e.g., the DFS channel). The electronic device 801 and the electronic device 901 may perform Wi-Fi Direct communication through the 5 GHz band (e.g., the DFS channel).

According to an embodiment, in operation 1930, the electronic device 801 may perform radar detection on the DFS channel. The electronic device 801 may transmit a P2P beacon, as the DFS owner and the group owner. The electronic device 801 may release the connection to the AP. It is to be noted that operation 1930 may be performed optionally.

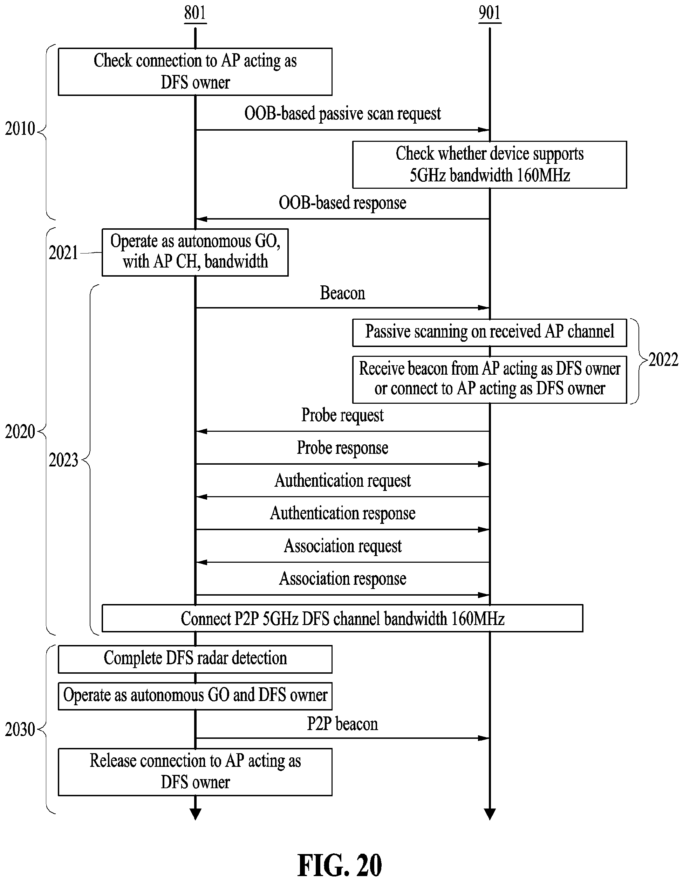

Referring to FIG. 20, according to an embodiment, the electronic device 801 and the electronic device 901 may perform Wi-Fi Direct communication with a 160 MHz bandwidth of a 5 GHz band (e.g., a DFS channel).

According to an embodiment, operations 2010 to 2030 may be performed in sequential order but are not necessarily performed in sequential order. For example, the order of operations 2010 to 2030 may be changed, and at least two operations may be performed in parallel. The operations may be performed by an electronic device (e.g., the electronic device 801 or the electronic device 901), and may include operations performed by a wireless communication circuit (e.g., the wireless communication circuit 810 in FIG. 8 or the wireless communication circuit 910 in FIG. 9) and operations performed by a processor (e.g., the processor 820 in FIG. 8 or the processor 920 in FIG. 9) through the wireless communication circuit.

According to an embodiment, in operation 2010, the electronic device 801 may check whether it is connected to an AP that is a DFS owner. The DFS owner may use a DFS channel. The DFS owner may be a device that is allowed to occupy the DFS channel. The DFS owner may scan radar signals. In a case where no active radar signal is detected on the DFS channel, the DFS owner may use (e.g., occupy) the DFS channel. The DFS owner may be the AP. The electronic device 801 may be configured to perform the connection to the AP that is the DFS owner at a time when extended bandwidth-based communication is required (e.g., when a large data transfer is required (e.g., streaming a high-definition video, running a VR service, downloading a large file, and accessing a large DB), and when real-time communication is required (e.g., making a video call and running a high resource demanding game)). Operation 2010 may be triggered as an application that uses Wi-Fi Direct is driven. Operation 2010 may be triggered by a user input to a WSC button.

According to an embodiment, the electronic device 801 may determine whether it is connected to the AP that is the DFS owner. The electronic device 801 may transmit a passive scan request to the electronic device 901 based on an OOB (e.g., via an OOB communication channel, such as via Bluetooth). For example, in response to determining that it is connected to the AP that is the DFS owner, the electronic device may transmit the passive scan request to the electronic device 901. The passive scan request may include AP information (e.g., AP channel information), which is information about the AP (e.g., the AP that is the DFS owner), and/or information as to whether the electronic device 801 supports the 160 MHz bandwidth. In response to receiving the passive scan request, the electronic device 901 may check whether it supports the 160 MHz bandwidth of the 5 GHz band. Based on the OOB (e.g., via the OOB communication channel), the electronic device 801 may receive a response from the electronic device 901. The response may include information as to whether the electronic device 901 supports the 160 MHz bandwidth of the 5 GHz band.

According to an embodiment, in operation 2020, the electronic device 801 and the electronic device 901 may perform a Wi-Fi Direct connection based on the DFS channel.

According to an embodiment, in operation 2021, the electronic device 801 may be triggered as a group owner of a Wi-Fi Direct communication group in response to the connection to the AP (e.g., the AP that is the DFS owner). For example, in response to determining that it is connected to the AP that is the DFS owner, the electronic device 801 may operate as the group owner. The Wi-Fi Direct communication group may be a communication group that uses an AP channel (e.g., the DFS channel), which is a channel of the AP, and the 160 MHz bandwidth.

According to an embodiment, in operation 2022, the electronic device 901 may perform passive scanning to find the DFS owner. The passive scanning may be performed using channel information of the AP (e.g., the AP that is the DFS owner). For example, the electronic device may passively scan the channel(s) indicated by the channel information of the AP. The channel information of the AP, or the AP channel information, may be included in a beacon transmitted from the electronic device 801. The electronic device 901 may connect to the DFS owner (e.g., the AP) found through the passive scanning or receive a beacon from the AP. That is, the electronic device 901 may perform passive scanning to receive a beacon from the AP but in some embodiments the electronic device 901 may not connect to the AP after receiving the beacon. The electronic device 901 may be configured to connect to the AP that is the DFS owner or receive a beacon from the AP, at a time when extended bandwidth-based communication is required (e.g., when a large data transfer is required (e.g., streaming a high-definition video, running a VR service, downloading a large file, and accessing a large DB), and when real-time communication is required (e.g., making a video call and running a high resource demanding game)). As a result of connecting to the AP or receiving the beacon from the AP, the electronic device 901 may obtain the AP information (e.g., DFS channel information and bandwidth information). Operation 2022 may be performed in response to receiving the beacon. Operation 2022 may be performed based on a probe response received during a provisioning process.

According to an embodiment, in operation 2023, the electronic device 801 and the electronic device 901 may perform provisioning. The electronic device 801 may transmit, to the outside (e.g., to the electronic device 901 or as a broadcast), a beacon including the AP information and/or an available bandwidth. The electronic device 801, which is the group owner, may transmit the beacon. The electronic device 901, which is a group client, may perform passive scanning in response to receiving the beacon. The electronic device 801 and the electronic device 901 may exchange requests and responses related to probe, authentication, and/or association.

According to an embodiment, the electronic device 801 and the electronic device 901 may exchange the AP information, which is information about the AP (e.g., the DFS owner), and/or the available bandwidth during the provisioning process. The AP information and/or the available bandwidth may be included in the beacon, a probe request, a probe response, an association request, and/or an association response. The AP information may be embedded in a WLAN AP information attribute. The available bandwidth may be embedded in an HT operation information field, a VHT operation information field, and/or an HE operation information field.

According to an embodiment, the electronic device 801 and the electronic device 901 may be connected through Wi-Fi Direct over the 160 MHz bandwidth in the 5 GHz band (e.g., the DFS channel). The electronic device 801 and the electronic device 901 may perform Wi-Fi Direct communication through the 5 GHz band (e.g., the DFS channel).

According to an embodiment, in operation 2030, the electronic device 801 may perform radar detection on the DFS channel. The electronic device 801 may transmit a P2P beacon, as the DFS owner and the group owner. The electronic device 801 may release the connection to the AP. It is to be noted that operation 2030 may be performed optionally.

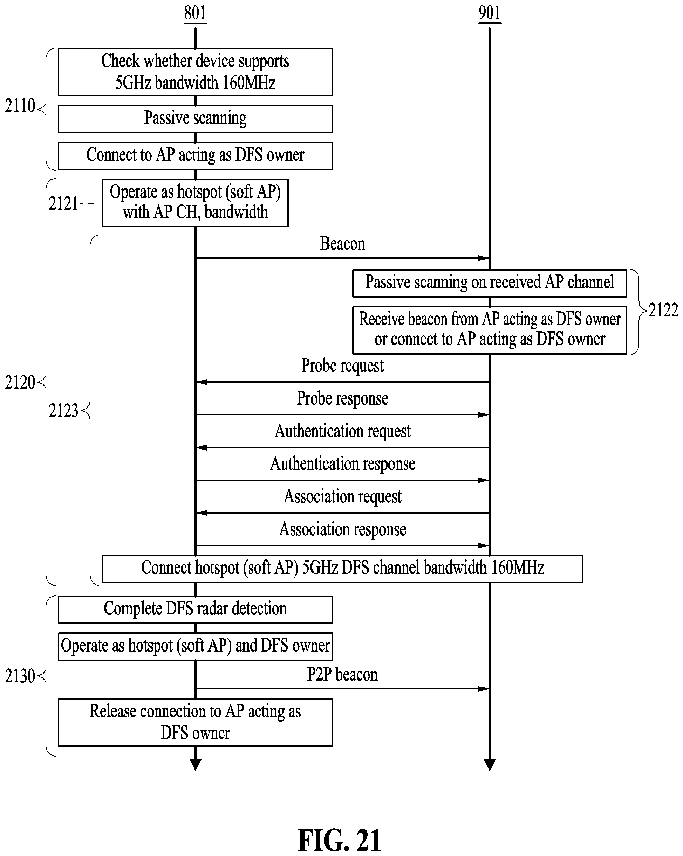

FIGS. 21 through 24 are flowcharts illustrating a hotspot communication method, according to an embodiment.

Referring to FIG. 21, according to an embodiment, the electronic device 801 and the electronic device 901 may perform direct communication (e.g., hotspot communication) with a 160 MHz bandwidth of a 5 GHz band (e.g., a DFS channel).

According to an embodiment, operations 2110 to 2130 may be performed in sequential order but are not necessarily performed in sequential order. For example, the order of operations 2110 to 2130 may be changed, and at least two operations may be performed in parallel. The operations may be performed by an electronic device (e.g., the electronic device 801 or the electronic device 901), and may include operations performed by a wireless communication circuit (e.g., the wireless communication circuit 810 in FIG. 8 or the wireless communication circuit 910 in FIG. 9) and operations performed by a processor (e.g., the processor 820 in FIG. 8 or the processor 920 in FIG. 9) through the wireless communication circuit.

According to an embodiment, in operation 2110, the electronic device 801 may establish a connection to an AP that is a DFS owner. The DFS owner may use a DFS channel. The DFS owner may be a device that is allowed to occupy the DFS channel. The DFS owner may scan radar signals. In a case where no active radar signal is detected on the DFS channel, the DFS owner may use (e.g., occupy) the DFS channel. The DFS owner may be the AP.

According to an embodiment, the electronic device 801 may check whether it supports the 160 MHz bandwidth of the 5 GHz band. The electronic device 801 may perform passive scanning to find the DFS owner. For example, in response to determining that the electronic device 801 supports a 160 MHz bandwidth of a 5 GHz band, the electronic device 801 may perform the passive scanning to find the DFS owner. The electronic device 801 may connect to the DFS owner (e.g., the AP) found through the passive scanning. The electronic device 801 may be configured to perform the connection to the AP that is the DFS owner at a time when extended bandwidth-based communication is required (e.g., when a large data transfer is required (e.g., streaming a high-definition video, running a VR service, downloading a large file, and accessing a large DB), and when real-time communication is required (e.g., making a video call and running a high resource demanding game)). As a result of the connection to the AP, the electronic device 801 may obtain AP information (e.g., DFS channel information and bandwidth information), which is information about the AP.

According to an embodiment, in operation 2120, the electronic device 801 and the electronic device 901 may perform a direct connection based on the DFS channel.

According to an embodiment, in operation 2121, the electronic device 801 may be triggered as a hotspot (e.g., a soft AP) in response to the connection to the AP (e.g., the AP that is the DFS owner). For example, in response to establishing the connection with the AP, the electronic device 801 may operate as a hotspot (e.g. a soft AP). The electronic device 801, which is the hotspot (e.g., the soft AP), may use an AP channel (e.g., DFS channel), which is a channel of the AP, and the 160 MHz bandwidth.

According to an embodiment, in operation 2122, the electronic device 901 may perform passive scanning to find the DFS owner. The passive scanning may be performed using received channel information of the AP (e.g., the AP that is the DFS owner). The channel information of the AP may be included in a beacon transmitted from the electronic device 801. The electronic device 901 may connect to the DFS owner (e.g., the AP) found through the passive scanning or receive a beacon from the AP. That is, the electronic device 901 may perform passive scanning to receive a beacon from the AP but in some embodiments the electronic device 901 may not connect to the AP after receiving the beacon. The electronic device 901 may be configured to perform the connection to the AP that is the DFS owner or receive a beacon from the AP, at a time when extended bandwidth-based communication is required (e.g., when a large data transfer is required (e.g., streaming a high-definition video, running a VR service, downloading a large file, and accessing a large DB), and when real-time communication is required (e.g., making a video call and running a high resource demanding game)). As a result of connecting to the AP or receiving the beacon from the AP, the electronic device 901 may obtain the AP information (e.g., DFS channel information and bandwidth information). Operation 2122 may be performed in response to receiving the beacon. Operation 2122 may be performed based on a probe response received during a process described below.

According to an embodiment, in operation 2123, the electronic device 801 may transmit, to the outside (e.g., to the electronic device 901 or as a broadcast), a beacon including the AP information and/or an available bandwidth. The electronic device 801, which is the hotspot, may transmit the beacon. The electronic device 901, which is a client, may perform passive scanning in response to receiving the beacon. The electronic device 801 and the electronic device 901 may exchange requests and responses related to probe, authentication, and/or association.

According to an embodiment, the electronic device 801 and the electronic device 901 may exchange the AP information, which is the information about the AP (e.g., the DFS owner), and/or the available bandwidth during probe, authentication, and/or association processes. The AP information and/or the available bandwidth may be included in the beacon, a probe request, a probe response, an association request, and/or an association response. The AP information may be embedded in a WLAN AP information attribute. The available bandwidth may be embedded in an HT operation information field, a VHT operation information field, and/or an HE operation information field.

According to an embodiment, the electronic device 801 and the electronic device 901 may be directly connected over the 160 MHz bandwidth in the 5 GHz band (e.g., the DFS channel). The electronic device 801 may function as a hotspot (e.g., a soft AP), and the electronic device 901 may function as a station client. The electronic device 801 and the electronic device 901 may perform direct communication through the 5 GHz band (e.g., the DFS channel).

According to an embodiment, in operation 2130, the electronic device 801 may perform radar detection on the DFS channel. The electronic device 801 may transmit a P2P beacon, as the hotspot and a group owner. The P2P beacon may include DFS owner information. The electronic device 801 may release the connection to the AP. It is to be noted that operation 2130 may be performed optionally.

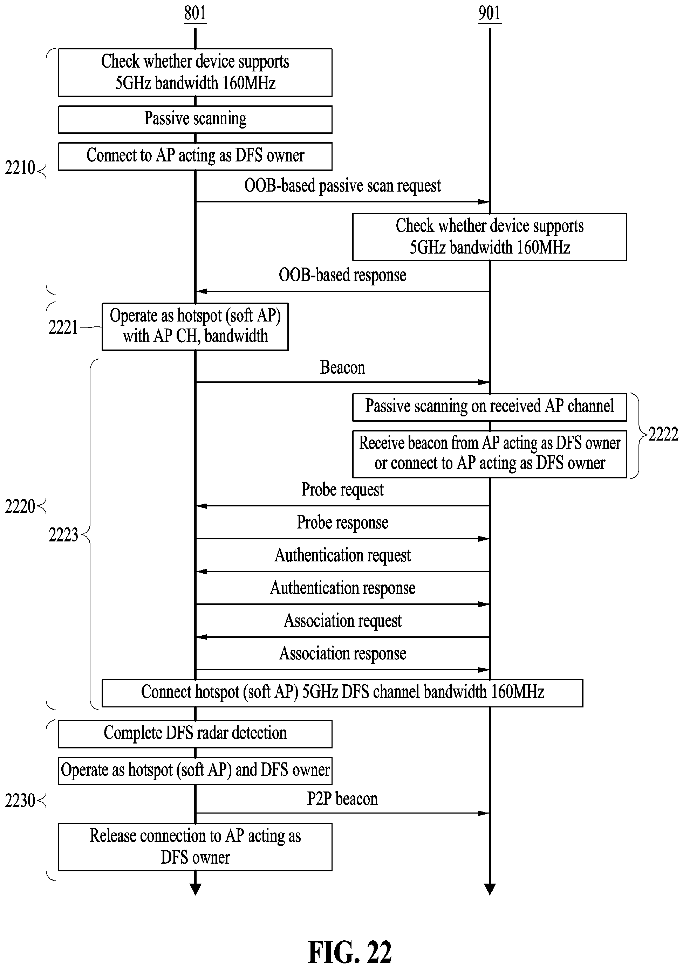

Referring to FIG. 22, according to an embodiment, the electronic device 801 and the electronic device 901 may perform direct communication (e.g., hotspot communication) with a 160 MHz bandwidth of a 5 GHz band (e.g., a DFS channel).

According to an embodiment, operations 2210 to 2230 may be performed in sequential order but are not necessarily performed in sequential order. For example, the order of operations 2210 to 2230 may be changed, and at least two operations may be performed in parallel. The operations may be performed by an electronic device (e.g., the electronic device 801 or the electronic device 901), and may include operations performed by a wireless communication circuit (e.g., the wireless communication circuit 810 in FIG. 8 or the wireless communication circuit 910 in FIG. 9) and operations performed by a processor (e.g., the processor 820 in FIG. 8 or the processor 920 in FIG. 9) through the wireless communication circuit.

According to an embodiment, in operation 2210, the electronic device 801 may establish a connection to an AP that is a DFS owner. The DFS owner may use a DFS channel. The DFS owner may be a device that is allowed to occupy the DFS channel. The DFS owner may scan radar signals. In a case where no active radar signal is detected on the DFS channel, the DFS owner may use (e.g., occupy) the DFS channel. The DFS owner may be the AP.

According to an embodiment, the electronic device 801 may check whether it supports the 160 MHz bandwidth of the 5 GHz band. The electronic device 801 may perform passive scanning to find the DFS owner. For example, in response to determining that the electronic device 801 supports a 160 MHz bandwidth of a 5 GHz band, the electronic device 801 may perform the passive scanning to find the DFS owner. The electronic device 801 may connect to the DFS owner (e.g., the AP) found through the passive scanning. The electronic device 801 may be configured to perform the connection to the AP that is the DFS owner at a time when extended bandwidth-based communication is required (e.g., when a large data transfer is required (e.g., streaming a high-definition video, running a VR service, downloading a large file, and accessing a large DB), and when real-time communication is required (e.g., making a video call and running a high resource demanding game)). As a result of the connection to the AP, the electronic device 801 may obtain AP information (e.g., DFS channel information and bandwidth information), which is information about the AP. The electronic device 801 may transmit a passive scan request to the electronic device 901 based on an OOB (e.g., via an OOB communication channel, such as via Bluetooth). The passive scan request may include the AP information, which is the information about the AP (e.g., the AP that is the DFS owner), and/or information as to whether the electronic device 801 supports the 160 MHz bandwidth. In response to receiving the passive scan request, the electronic device 901 may check whether it supports the 160 MHz bandwidth of the 5 GHz band. The electronic device 801 may receive a response from the electronic device 901 based on the OOB (e.g., via the OOB communication channel). In this case, the response may include information as to whether the electronic device 901 supports the 160 MHz bandwidth of the 5 GHz band.

According to an embodiment, in operation 2220, the electronic device 801 and the electronic device 901 may perform direct connection based on the DFS channel.

According to an embodiment, in operation 2221, the electronic device 801 may be triggered as a hotspot (e.g., a soft AP) in response to the connection to the AP (e.g., the AP that is the DFS owner). For example, in response to establishing the connection with the AP, the electronic device 801 may operate as a hotspot (e.g. a soft AP). The electronic device 801, which is the hotspot (e.g., the soft AP), may use a channel of the AP, or an AP channel (e.g., DFS channel), and the 160 MHz bandwidth.

According to an embodiment, in operation 2222, the electronic device 901 may perform passive scanning to find the DFS owner. The passive scanning may be performed using received channel information of the AP (e.g., the AP that is the DFS owner). The channel information of the AP may be included in a beacon transmitted from the electronic device 801. The electronic device 901 may connect to the DFS owner (e.g., the AP) found through the passive scanning or receive a beacon from the AP. That is, the electronic device 901 may perform passive scanning to receive a beacon from the AP but in some embodiments the electronic device 901 may not connect to the AP after receiving the beacon. The electronic device 901 may be configured to perform the connection to the AP that is the DFS owner or receive a beacon from the AP, at a time when extended bandwidth-based communication is required (e.g., when a large data transfer is required (e.g., streaming a high-definition video, running a VR service, downloading a large file, and accessing a large DB), and when real-time communication is required (e.g., making a video call and running a high resource demanding game)). As a result of connecting to the AP or receiving the beacon from the AP, the electronic device 901 may obtain the AP information (e.g., DFS channel information and bandwidth information). Operation 2222 may be performed in response to receiving the beacon. Operation 2222 may be performed based on a probe response received during a process described below.

According to an embodiment, in operation 2223, the electronic device 801 may transmit, to the outside (e.g., to the electronic device 901 or as a broadcast), a beacon including the AP information and/or an available bandwidth. The electronic device 801, which is a group owner, may transmit the beacon. The electronic device 901, which is a group client, may perform passive scanning in response to receiving the beacon. The electronic device 801 and the electronic device 901 may exchange requests and responses related to probe, authentication, and/or association.

According to an embodiment, the electronic device 801 and the electronic device 901 may exchange the AP information, which is the information about the AP (e.g., the DFS owner), and/or the available bandwidth during probe, authentication, and/or association processes. The AP information and/or the available bandwidth may be included in the beacon, a probe request, a probe response, an association request, and/or an association response. The AP information may be embedded in a WLAN AP information attribute. The available bandwidth may be embedded in an HT operation information field, a VHT operation information field, and/or an HE operation information field.

According to an embodiment, the electronic device 801 and the electronic device 901 may be directly connected over the 160 MHz bandwidth in the 5 GHz band (e.g., the DFS channel). The electronic device 801 may function as a hotspot (e.g., a soft AP), and the electronic device 901 may function as a station client. The electronic device 801 and the electronic device 901 may perform direct communication through the 5 GHz band (e.g., the DFS channel).

According to an embodiment, in operation 2230, the electronic device 801 may perform radar detection on the DFS channel. The electronic device 801 may transmit a P2P beacon, as the hotspot and the group owner. The P2P beacon may include DFS owner information. The electronic device 801 may release the connection to the AP. It is to be noted that operation 2230 may be performed optionally.

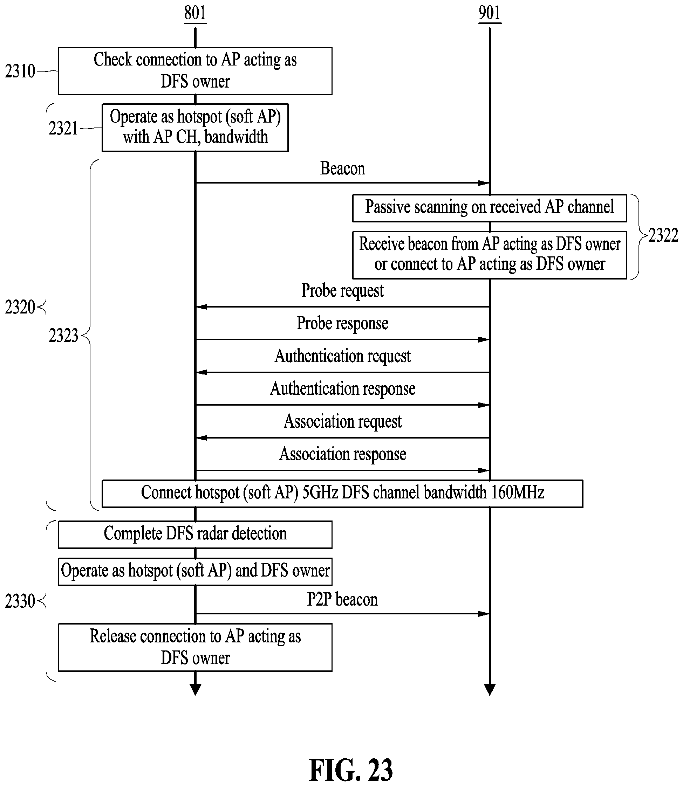

Referring to FIG. 23, according to an embodiment, the electronic device 801 and the electronic device 901 may perform direct communication (e.g., hotspot communication) with a 160 MHz bandwidth of a 5 GHz band (e.g., a DFS channel).

According to an embodiment, operations 2310 to 2330 may be performed in sequential order but are not necessarily performed in sequential order. For example, the order of operations 2310 to 2330 may be changed, and at least two operations may be performed in parallel. The operations may be performed by an electronic device (e.g., the electronic device 801 or the electronic device 901), and may include operations performed by a wireless communication circuit (e.g., the wireless communication circuit 810 in FIG. 8 or the wireless communication circuit 910 in FIG. 9) and operations performed by a processor (e.g., the processor 820 in FIG. 8 or the processor 920 in FIG. 9) through the wireless communication circuit.

According to an embodiment, in operation 2310, the electronic device 801 may check whether it is connected to an AP that is a DFS owner. The DFS owner may use a DFS channel. The DFS owner may be a device that is allowed to occupy the DFS channel. The DFS owner may scan radar signals. In a case where no active radar signal is detected on the DFS channel, the DFS owner may use (e.g., occupy) the DFS channel. The DFS owner may be the AP. The electronic device 801 may be configured to perform the connection to the AP that is the DFS owner at a time when extended bandwidth-based communication is required (e.g., when a large data transfer is required (e.g., streaming a high-definition video, running a VR service, downloading a large file, and accessing a large DB), and when real-time communication is required (e.g., making a video call and running a high resource demanding game)).

According to an embodiment, in operation 2320, the electronic device 801 and the electronic device 901 may perform a direct connection based on the DFS channel.

According to an embodiment, in operation 2321, the electronic device 801 may be triggered as a hotspot (e.g., a soft AP) in response to the connection to the AP (e.g., the AP that is the DFS owner). For example, in response to establishing the connection with the AP, the electronic device 801 may operate as a hotspot (e.g. a soft AP). The electronic device 801, which is the hotspot (e.g., the soft AP), may use a channel of the AP, or an AP channel (e.g., DFS channel), and the 160 MHz bandwidth.

According to an embodiment, in operation 2322, the electronic device 901 may perform passive scanning to find the DFS owner. The passive scanning may be performed using received channel information of the AP (e.g., the AP that is the DFS owner). The channel information of the AP may be included in a beacon transmitted from the electronic device 801. The electronic device 901 may connect to the DFS owner (e.g., the AP) found through the passive scanning or receive a beacon from the AP. That is, the electronic device 901 may perform passive scanning to receive a beacon from the AP but in some embodiments the electronic device 901 may not connect to the AP after receiving the beacon. The electronic device 901 may be configured to perform the connection to the AP that is the DFS owner or receive a beacon from the AP, at a time when extended bandwidth-based communication is required (e.g., when a large data transfer is required (e.g., streaming a high-definition video, running a VR service, downloading a large file, and accessing a large DB), and when real-time communication is required (e.g., making a video call and running a high resource demanding game)). As a result of connecting to the AP or receiving the beacon from the AP, the electronic device 901 may obtain the AP information (e.g., DFS channel information and bandwidth information). Operation 2322 may be performed in response to receiving the beacon. Operation 2322 may be performed based on a probe response received during a process described below.

According to an embodiment, in operation 2323, the electronic device 801 may transmit, to the outside (e.g., to the electronic device 901 or as a broadcast), a beacon including the AP information and/or an available bandwidth. The electronic device 801, which is a group owner, may transmit the beacon. The electronic device 901, which is a group client, may perform passive scanning in response to receiving the beacon. The electronic device 801 and the electronic device 901 may exchange requests and responses related to probe, authentication, and/or association.

According to an embodiment, the electronic device 801 and the electronic device 901 may exchange the AP information, which is information about the AP (e.g., the DFS owner), and/or the available bandwidth during probe, authentication, and/or association processes. The AP information and/or the available bandwidth may be included in the beacon, a probe request, a probe response, an association request, and/or an association response. The AP information may be embedded in a WLAN AP information attribute. The available bandwidth may be embedded in an HT operation information field, a VHT operation information field, and/or an HE operation information field.

According to an embodiment, the electronic device 801 and the electronic device 901 may be directly connected over the 160 MHz bandwidth in the 5 GHz band (e.g., the DFS channel). The electronic device 801 may function as a hotspot (e.g., a soft AP), and the electronic device 901 may function as a station client. The electronic device 801 and the electronic device 901 may perform direct communication through the 5 GHz band (e.g., the DFS channel).

According to an embodiment, in operation 2330, the electronic device 801 may perform radar detection on the DFS channel. The electronic device 801 may transmit a P2P beacon, as the hotspot and the group owner. The P2P beacon may include DFS owner information. The electronic device 801 may release the connection to the AP. It is to be noted that operation 2330 may be performed optionally.

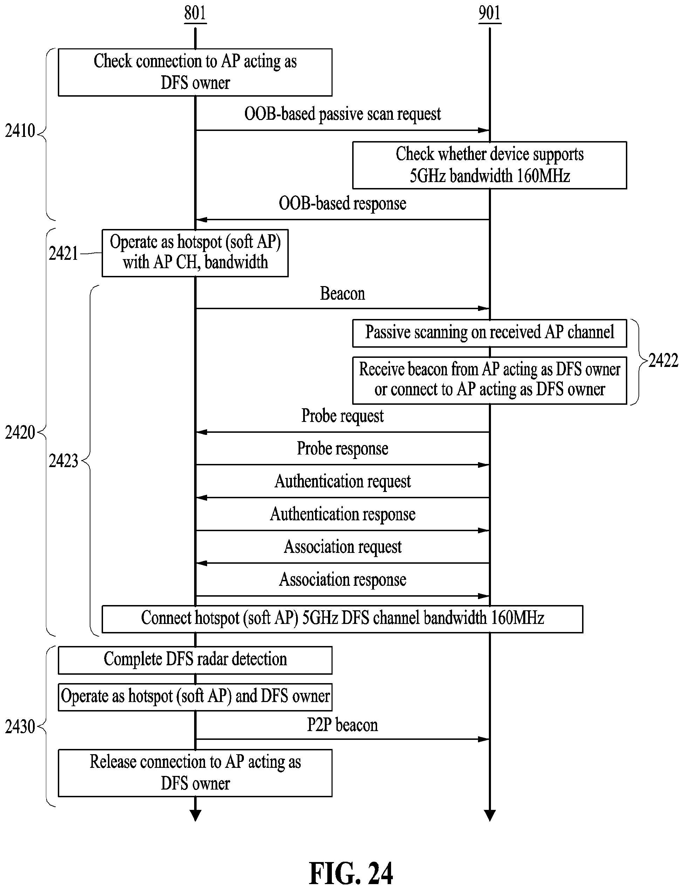

Referring to FIG. 24, according to an embodiment, the electronic device 801 and the electronic device 901 may perform direct communication (e.g., hotspot communication) with a 160 MHz bandwidth of a 5 GHz band (e.g., a DFS channel).

According to an embodiment, operations 2410 to 2430 may be performed in sequential order but are not necessarily performed in sequential order. For example, the order of operations 2410 to 2430 may be changed, and at least two operations may be performed in parallel. The operations may be performed by an electronic device (e.g., the electronic device 801 or the electronic device 901), and may include operations performed by a wireless communication circuit (e.g., the wireless communication circuit 810 in FIG. 8 or the wireless communication circuit 910 in FIG. 9) and operations performed by a processor (e.g., the processor 820 in FIG. 8 or the processor 920 in FIG. 9) through the wireless communication circuit.

According to an embodiment, in operation 2410, the electronic device 801 may check whether it is connected to an AP that is a DFS owner. The DFS owner may use a DFS channel. The DFS owner may be a device that is allowed to occupy the DFS channel. The DFS owner may scan radar signals. In a case where no active radar signal is detected on the DFS channel, the DFS owner may use (e.g., occupy) the DFS channel. The DFS owner may be the AP. The electronic device 801 may be configured to perform the connection to the AP that is the DFS owner at a time when extended bandwidth-based communication is required (e.g., when a large data transfer is required (e.g., streaming a high-definition video, running a VR service, downloading a large file, and accessing a large DB), and when real-time communication is required (e.g., making a video call and running a high resource demanding game)).

According to an embodiment, the electronic device 801 may transmit a passive scan request to the electronic device 901 based on an OOB (e.g., via an OOB communication channel, such as via Bluetooth). The passive scan request may include AP information, which is information about the AP (e.g., the AP that is the DFS owner), and/or information as to whether the electronic device 801 supports the 160 MHz bandwidth. In response to receiving the passive scan request, the electronic device 901 may check whether it supports the 160 MHz bandwidth of the 5 GHz band. The electronic device 801 may receive a response from the electronic device 901 based on the OOB (e.g., via the OOB communication channel). The response may include information as to whether the electronic device 901 supports the 160 MHz bandwidth of the 5 GHz band.

According to an embodiment, in operation 2420, the electronic device 801 and the electronic device 901 may perform a direct connection based on the DFS channel.

According to an embodiment, in operation 2421, the electronic device 801 may be triggered as a hotspot (e.g., a soft AP) in response to the connection to the AP (e.g., the AP that is the DFS owner). For example, in response to establishing the connection with the AP, the electronic device 801 may operate as a hotspot (e.g. a soft AP). The electronic device 801, which is the hotspot (e.g., the soft AP), may use a channel of the AP, or an AP channel (e.g., the DFS channel), and the 160 MHz bandwidth.

According to an embodiment, in operation 2422, the electronic device 901 may perform passive scanning to find the DFS owner. The passive scanning may be performed using channel information of the AP (e.g., the AP that is the DFS owner). For example, the electronic device may passively scan the channel(s) indicated by the channel information of the AP. The channel information of the AP may be included in a beacon transmitted from the electronic device 801. The electronic device 901 may connect to the DFS owner (e.g., the AP) found through the passive scanning or receive a beacon from the AP. That is, the electronic device 901 may perform passive scanning to receive a beacon from the AP but in some embodiments the electronic device 901 may not connect to the AP after receiving the beacon. The electronic device 901 may be configured to perform the connection to the AP that is the DFS owner or receive a beacon from the AP, at a time when extended bandwidth-based communication is required (e.g., when a large data transfer is required (e.g., streaming a high-definition video, running a VR service, downloading a large file, and accessing a large DB), and when real-time communication is required (e.g., making a video call and running a high resource demanding game)). As a result of connecting to the AP or receiving the beacon from the AP, the electronic device 901 may obtain the AP information (e.g., DFS channel information and bandwidth information). Operation 2422 may be performed in response to receiving the beacon. Operation 2422 may be performed based on a probe response received during a process described below.

According to an embodiment, in operation 2423, the electronic device 801 may transmit, to the outside (e.g., to the electronic device 901 or as a broadcast), a beacon including the AP information and/or an available bandwidth. The electronic device 801, which is a group owner, may transmit the beacon. The electronic device 901, which is a group client, may perform passive scanning in response to receiving the beacon. The electronic device 801 and the electronic device 901 may exchange requests and responses related to probe, authentication, and/or association.

According to an embodiment, the electronic device 801 and the electronic device 901 may exchange the AP information, which is the information about the AP (e.g., the DFS owner), and/or the available bandwidth during probe, authentication, and/or association processes. The AP information and/or the available bandwidth may be included in the beacon, a probe request, a probe response, an association request, and/or an association response. The AP information may be embedded in a WLAN AP information attribute. The available bandwidth may be embedded in an HT operation information field, a VHT operation information field, and/or an HE operation information field.

According to an embodiment, the electronic device 801 and the electronic device 901 may be directly connected over the 160 MHz bandwidth in the 5 GHz band (e.g., the DFS channel). The electronic device 801 may function as a hotspot (e.g., a soft AP), and the electronic device 901 may function as a station client. The electronic device 801 and the electronic device 901 may perform direct communication through the 5 GHz band (e.g., the DFS channel).

According to an embodiment, in operation 2430, the electronic device 801 may perform radar detection on the DFS channel. The electronic device 801 may transmit a P2P beacon, as the hotspot and the group owner. The P2P beacon may include DFS owner information. The electronic device 801 may release the connection to the AP. It is to be noted that operation 2430 may be performed optionally.

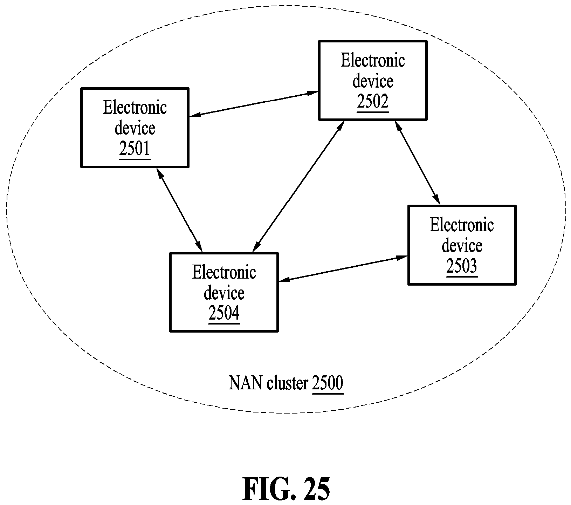

FIG. 25 is a diagram illustrating neighbor awareness networking (NAN) communication, according to an embodiment.

Referring to FIG. 25, according to an embodiment, a NAN cluster 2500 may include one or more electronic devices (e.g., an electronic device 2501, an electronic device 2502, an electronic device 2503, and/or an electronic device 2504). Within the NAN cluster 2500, the electronic devices 2501, 2502, 2503, and 2504 may communicate with one another through NAN (or a NAN protocol). The NAN cluster 2500 may refer to a set of one or more electronic devices (e.g., the electronic devices 2501 to 2504) that form a proximity network such that the electronic devices 2501 to 2504 may transmit and receive data between them.

According to an embodiment, the electronic devices 2501 to 2504 may be devices that support NAN, which is a low-power discovery technology, and may be referred to as NAN devices (or NAN terminals). In addition, the electronic devices 2501 to 2504 may operate in frequency bands of 2.4 GHz, 5 GHz, and/or 6 GHz, and exchange signals in accordance with the IEEE 802.11 protocol (e.g., 802.11 a/b/g/n/ac/ax/be). The electronic devices 2501 to 2504 may exchange signals using unicast, broadcast, and/or multicast methods.

According to an embodiment, the electronic devices 2501 to 2504 may form one NAN cluster 2500 by transmitting and receiving beacons (e.g., discovery beacons). The electronic devices 2501 to 2504 in the NAN cluster 2500 may be synchronized in terms of time and channels through time synchronization and channel synchronization.

According to an embodiment, a discovery beacon may be a beacon signal for discovering an electronic device that may form a cluster (e.g., the NAN cluster 2500) for a proximity network. The discovery beacon may also be a signal transmitted such that another electronic device (not shown) that has not joined the NAN cluster 2500 may discover the NAN cluster 2500. The discovery beacon may be a signal to notify an electronic device of the presence of the NAN cluster 2500. An electronic device (not shown) that does not join the NAN cluster 2500 may perform passive scanning to receive a discovery beacon and may discover and join the NAN cluster 2500 based on the received discovery beacon.

According to an embodiment, the discovery beacon may include information necessary for synchronization to the NAN cluster 2500. That is, the discovery beacon may include information that allows an electronic device outside the NAN cluster 2500 to join and be synchronized with the NAN cluster 2500. The discovery beacon may include, for example, a frame control (FC) field indicating a function of a signal (e.g., beacon), a broadcast address, a MAC address of a transmitting electronic device, a cluster ID, a sequence control field, a time stamp for a beacon frame, a beacon interval indicating a transmission interval between discovery beacons, and/or capability information of the transmitting electronic device. The discovery beacon may further include at least one information element related to the proximity network (or cluster) (e.g., the NAN cluster 2500). Such proximity network-related information may be referred to as attribute information.

According to an embodiment, the electronic devices 2501 to 2504 may transmit and receive a signal (e.g., a synchronization beacon), a service discovery frame (SDF), and/or a NAN action frame (NAF) within a synchronized time duration (e.g., a discovery window (DW)). That is, the discovery window, or DW, may refer to a period during which an electronic device in a NAN cluster transmits and receives signals with other electronic devices in the NAN cluster. That is, outside the DW time frame, the electronic device in the NAN cluster may not be able to transmit or receive signals with the other electronic devices in the NAN cluster. The DW for respective electronic devices in the NAN cluster may be synchronized, and thus the DW for the electronic devices in the NAN cluster may be the same. That is, a start time, an end time, and an overall duration of the DW may be the same for all the electronic devices within the NAN cluster. For example, the electronic devices 2501 to 2504 may have their time clocks synchronized with each other and may exchange synchronization beacons, SDFs, and/or NAFs with each other at the same time within the synchronized DW.

According to an embodiment, a synchronization beacon may be a signal for maintaining synchronization between the synchronized electronic devices 2501 to 2504 within the NAN cluster 2500. The synchronization beacon may be periodically transmitted and received for each DW to continuously maintain time synchronization and channel synchronization of the electronic devices 2501 to 2504 in the NAN cluster 2500. That is, each electronic device within a NAN cluster may transmit and/or receive multiple synchronization beacons during each DW. The synchronization beacon may be transmitted by a specified electronic device among the electronic devices 2501 to 2504 in the NAN cluster 2500. The electronic device transmitting the synchronization beacon may include or be referred to as an anchor master device, a master device, or a non-master sync device, as defined in the NAN standards.

According to an embodiment, the synchronization beacon may include information necessary for synchronization of the electronic devices 2501 to 2504 within the NAN cluster 2500. That is, the synchronization beacon may include information necessary for electronic devices in a NAN cluster to synchronize with each other, and thus multiple or all electronic devices in the NAN cluster may be synchronized. The synchronization beacon may include, for example, at least one of an FC field indicating a function of a signal (e.g. a beacon), a broadcast address, a MAC address of a transmitting electronic device, a cluster ID, a sequence control field, a time stamp for a beacon frame, and a beacon interval indicating an interval between start points of DW, and capability information about the transmitting electronic device. The synchronization beacon may further include at least one information element related to a proximity network (or cluster) (e.g., the NAN cluster 2500). Such proximity network-related information may include content for services provided through the proximity network.

According to an embodiment, the SDF may refer to a signal for exchanging data over a proximity network (or cluster) (e.g., the NAN cluster 2500). The SDF, which may be a vendor specific public action frame, may include various fields. For example, the SDF may include a category or action field, and may further include at least one information related to a proximity network (e.g., the NAN cluster 2500).

According to an embodiment, the electronic devices 2501 to 2504 included in the NAN cluster 2500 may transmit and receive a NAF within a DW. The NAF may include, for example, NAN data path (NDP) setup-related information for performing data communication in the DW, information for schedule update, and/or information for performing NAN ranging (e.g., fine timing measurement (FTM) NAN ranging). The NAF may be used to control the schedule of wireless resources for coexistence of NAN operations and non-NAN operations (e.g. Wi-Fi Direct, mesh, internet base station service (IBSS), WLAN, Bluetooth, and near-field communication (NFC)). The NAF may include time and channel information available for NAN communication.

According to an embodiment, an NAN operating mode field exchanged during a NDP setup process may include fields shown in Table 7, and a channel bitmap may be configured as shown in Table 8.

**[Table 7]**

| **Subfield** | **Size (bits)** | **Value** | **Description** |
|---|---|---|---|
| PHY Mode | b0 | Variable | 1: VHT |
| | | | 0: HT only |
| VHT 80+80 | b1 | Variable | 1: VHT 80+80 support |
| | | | 0: otherwise |
| VHT 160 | b2 | Variable | 1: VHT 160 support |
| | | | 0: otherwise |
| Reserved | b3 | Variable | 1: P-NDL supported |
| (Paging NDL Support) | | | 0 P-NDL not supported |
| Reserved | b4-b7 | Variable | Reserved |

**[Table 8]**

| Setting for Primary Channel Bitmap | | | | | | | | |
|---|---|---|---|---|---|---|---|---|
| | **b0** | **b1** | **b2** | **b3** | **b4** | **b5** | **b6** | **b7** |
| 20 MHz | Set to 0 | Set to 0 | Set to 0 | Set to 0 | Set to 0 | Set to 0 | Set to 0 | Set to 0 |
| 40 MHz | Set to 0 | Set to 0 | Set to 0 | Set to 0 | Set to 0 | Set to 0 | Set to 0 | Set to 0 |
| 80 MHz | Set to 1 if the lowest frequency 20 MHz channel is the preferred primary channel and set to 0 otherwise | Set to 1 if the second lowest frequency 20 MHz channel is the preferred primary channel and set to 0 otherwise | Set to 1 if the third lowest frequency 20 MHz channel is the preferred primary channel and set to 0 otherwise | Set to 1 if the fourth lowest frequency 20 MHz channel is the preferred primary channel and set to 0 otherwise | Set to 0 | Set to 0 | Set to 0 | Set to 0 |
| 80 MHz+80 MHz | Set to 1 if the lowest frequency 20 MHz channel of 80 MHz channel of frequency segment 0 is the preferred primary channel and set to 0 otherwise | Set to 1 if the second lowest frequency 20 MHz channel of 80 MHz channel of frequency segment 0 is the preferred primary channel and set to 0 otherwise | Set to 1 if the third lowest frequency 20MHz channel of 80 MHz channel of frequency segment 0 is the preferred primary channel and set to 0 otherwise | Set to 1 if the fourth lowest frequency 20 MHz channel of 80 MHz channel of frequency segment 0 is the preferred primary channel and set to 0 otherwise | Set to 0 | Set to 0 | Set to 0 | Set to 0 |
| 160 MHz | Set to 1 if the lowest frequency 20 MHz channel is the preferred primary channel and set to 0 otherwise | Set to 1 if the second lowest 20 MHz channel is the preferred primary channel and set to 0 otherwise | Set to 1 if the third lowest frequency 20MHz channel is the preferred primary channel and set to 0 otherwise | Set to 1 if the fourth lowest frequency 20 MHz channel is the preferred primary channel and set to 0 otherwise | Set to 1 if the fifth lowest frequency 20 MHz channel is the preferred primary channel and set to 0 otherwise | Set to 1 if the sixth lowest 20 MHz channel is the preferred primary channel and set to 0 otherwise | Set to 1 if the seventh lowest frequency 20 MHz channel is the preferred primary channel and set to 0 otherwise | Set to 1 if the eighth lowest frequency 20 MHz channel is the preferred primary channel and set to 0 otherwise |

The information included in Table 7 and Table 8 may be used to obtain available bandwidth information in the NAN operations.

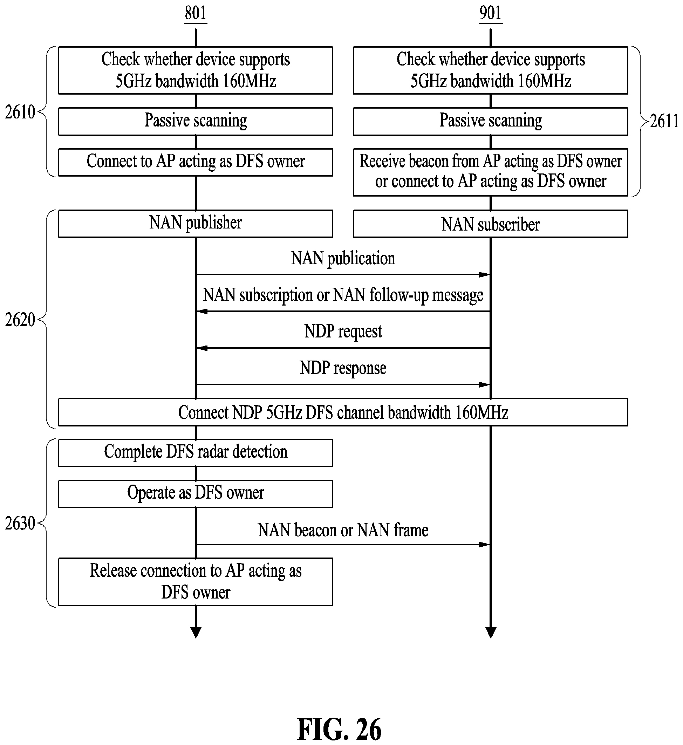

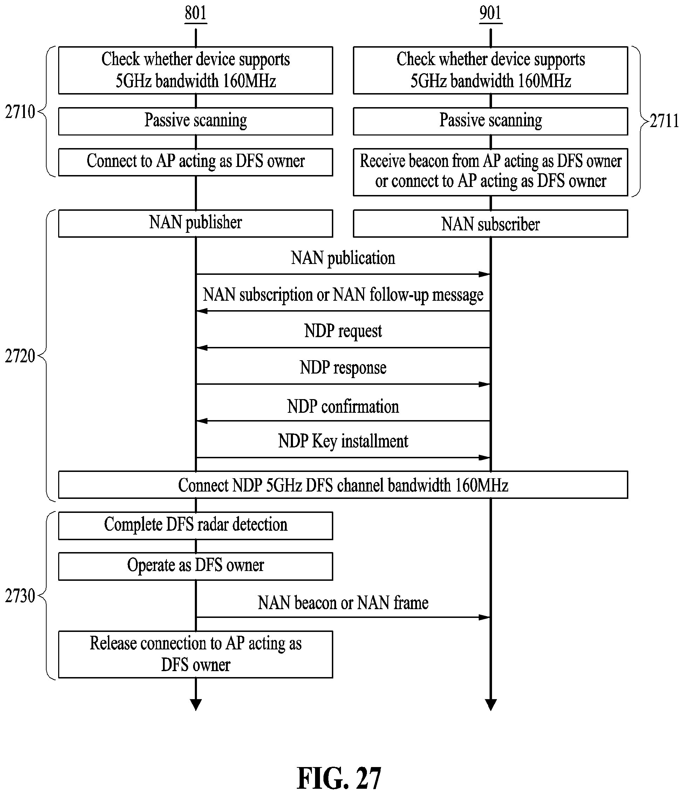

FIGS. 26 and 27 are flowcharts illustrating a NAN communication method, according to an embodiment.

Referring to FIG. 26, according to an embodiment, the electronic device 801 and the electronic device 901 may perform NAN communication with a 160 MHz bandwidth of a 5 GHz band (e.g., a DFS) channel).

According to an embodiment, operations 2610 to 2630 may be performed in sequential order but are not necessarily performed in sequential order. For example, the order of operations 2610 to 2630 may be changed, and at least two operations may be performed in parallel. The operations may be performed by an electronic device (e.g., the electronic device 801 or the electronic device 901), and may include operations performed by a wireless communication circuit (e.g., the wireless communication circuit 810 in FIG. 8 or the wireless communication circuit 910 in FIG. 9) and operations performed by a processor (e.g., the processor 820 in FIG. 8 or the processor 920 in FIG. 9) through the wireless communication circuit.

According to an embodiment, in operation 2610, the electronic device 801 may establish a connection to an AP that is a DFS owner. The DFS owner may use a DFS channel. The DFS owner may be a device that is allowed to occupy the DFS channel. The DFS owner may scan radar signals. In a case where no active radar signal is detected on the DFS channel, the DFS owner may use (e.g., occupy) the DFS channel. The DFS owner may be the AP.

According to an embodiment, the electronic device 801 may check whether it supports the 160 MHz bandwidth of the 5 GHz band. The electronic device 801 may perform passive scanning to find the DFS owner. For example, in response to determining that the electronic device 801 supports a 160 MHz bandwidth of a 5 GHz band, the electronic device 801 may perform the passive scanning to find the DFS owner. The electronic device 801 may connect to the DFS owner (e.g., the AP) found through the passive scanning. The electronic device 801 may be configured to perform the connection to the AP that is the DFS owner at a time when extended bandwidth-based communication is required (e.g., when a large data transfer is required (e.g., streaming a high-definition video, running a VR service, downloading a large file, and accessing a large DB), and when real-time communication is required (e.g., making a video call and running a high resource demanding game)). As a result of the connection to the AP, the electronic device 801 may obtain AP information (e.g., DFS channel information and bandwidth information), which is information about the AP.

According to an embodiment, in operation 2611, the electronic device 901 may establish a connection to the AP that is the DFS owner or may receive a beacon from the AP. The electronic device 901 may check whether it supports the 160 MHz bandwidth of the 5 GHz band. The electronic device 901 may perform passive scanning to find the DFS owner. For example, in response to determining that the electronic device 901 supports a 160 MHz bandwidth of a 5 GHz band, the electronic device 901 may perform the passive scanning to find the DFS owner. The electronic device 901 may connect to the DFS owner (e.g., the AP) found through the passive scanning or may receive a beacon from the AP. The electronic device 901 may be configured to perform the connection to the AP that is the DFS owner or receive a beacon from the AP, at a time when extended bandwidth-based communication is required (e.g., when a large data transfer is required (e.g., streaming a high-definition video, running a VR service, downloading a large file, and accessing a large DB), and when real-time communication is required (e.g., making a video call and running a high resource demanding game)). As a result of connecting to the AP or receiving the beacon from the AP, the electronic device 901 may obtain the AP information (e.g., DFS channel information and bandwidth information).

According to an embodiment, in operation 2620, the electronic device 801 and the electronic device 901 may perform an NDP setup based on the DFS channel.

According to an embodiment, the electronic device 801 may function as a NAN publisher, and the electronic device 901 may function as a NAN subscriber. However, without being limited thereto, the electronic device 901 may function as the NAN publisher, and the electronic device 801 may function as the NAN subscriber.

According to an embodiment, the electronic device 801 and the electronic device 901 may search for a counterpart through NAN publication, NAN subscription, and/or NAN follow-up message exchanges. According to an embodiment, the electronic device 801 and the electronic device 901 may exchange an NDP request and an NDP response.

According to an embodiment, the NAN publication, the NAN subscription, the NAN follow-up messages, the NDP request, and/or the NDP response may include the AP information, which is the information about of the AP (e.g., the AP that is the DFS owner), DFS channel information, and/or an available bandwidth. The AP information, the DFS channel information, and/or the available bandwidth may be embedded in an operating mode field (e.g., refer to Table 7) and/or a channel bitmap (e.g., refer to Table 8).

According to an embodiment, the electronic device 801 and the electronic device 901 may be connected through the 160 MHz bandwidth of the 5 GHz band (e.g., the DFS channel). The electronic device 801 and the electronic device 901 may perform NAN communication through the NDP that uses the 5 GHz band (e.g., the DFS channel).

According to an embodiment, in operation 2630, the electronic device 801 may perform radar detection on the DFS channel. The electronic device 801 may transmit a NAN beacon and/or a NAN frame, as the DFS owner. The NAN beacon and/or the NAN frame may include DFS owner information. The electronic device 801 may release the connection to the AP. It is to be noted that operation 2730 may be performed optionally.

Referring to FIG. 27, according to an embodiment, the electronic device 801 and the electronic device 901 may perform NAN communication with a 160 MHz bandwidth of a 5 GHz band (e.g., a DFS channel).

According to an embodiment, operations 2710 to 2730 may be performed in sequential order but are not necessarily performed in sequential order. For example, the order of operations 2710 to 2730 may be changed, and at least two operations may be performed in parallel. The operations may be performed by an electronic device (e.g., the electronic device 801 or the electronic device 901), and may include operations performed by a wireless communication circuit (e.g., the wireless communication circuit 810 in FIG. 8 or the wireless communication circuit 910 in FIG. 9) and operations performed by a processor (e.g., the processor 820 in FIG. 8 or the processor 920 in FIG. 9) through the wireless communication circuit.

According to an embodiment, in operation 2710, the electronic device 801 may establish a connection to an AP that is a DFS owner. The DFS owner may use a DFS channel. The DFS owner may be a device that is allowed to occupy the DFS channel. The DFS owner may scan radar signals. In a case where no active radar signal is detected on the DFS channel, the DFS owner may use (e.g., occupy) the DFS channel. The DFS owner may be the AP.

According to an embodiment, the electronic device 801 may check whether it supports the 160 MHz bandwidth of the 5 GHz band. The electronic device 801 may perform passive scanning to find the DFS owner. For example, in response to determining that the electronic device 801 supports a 160 MHz bandwidth of a 5 GHz band, the electronic device 801 may perform the passive scanning to find the DFS owner. The electronic device 801 may connect to the DFS owner (e.g., the AP) found through the passive scanning. The electronic device 801 may be configured to perform the connection to the AP that is the DFS owner at a time when extended bandwidth-based communication is required (e.g., when a large data transfer is required (e.g., streaming a high-definition video, running a VR service, downloading a large file, and accessing a large DB), and when real-time communication is required (e.g., making a video call and running a high resource demanding game)). As a result of the connection to the AP, the electronic device 801 may obtain AP information (e.g., DFS channel information and bandwidth information), which is information about the AP.

According to an embodiment, in operation 2711, the electronic device 901 may establish a connection to the AP that is the DFS owner or may receive a beacon from the AP. The electronic device 901 may check whether it supports the 160 MHz bandwidth of the 5 GHz band. The electronic device 901 may perform passive scanning to find the DFS owner. For example, in response to determining that the electronic device 901 supports a 160 MHz bandwidth of a 5 GHz band, the electronic device 901 may perform the passive scanning to find the DFS owner. The electronic device 901 may connect to the DFS owner (e.g., the AP) found through the passive scanning or may receive a beacon from the AP. The electronic device 901 may be configured to perform the connection to the AP that is the DFS owner or receive a beacon from the AP, at a time when extended bandwidth-based communication is required (e.g., when a large data transfer is required (e.g., streaming a high-definition video, running a VR service, downloading a large file, and accessing a large DB), and when real-time communication is required (e.g., making a video call and running a high resource demanding game)). As a result of connecting to the AP or receiving the beacon from the AP, the electronic device 901 may obtain the AP information (e.g., DFS channel information and bandwidth information).

According to an embodiment, in operation 2720, the electronic device 801 and the electronic device 901 may perform an NDP setup based on the DFS channel.

According to an embodiment, the electronic device 801 may function as a NAN publisher, and the electronic device 901 may function as a NAN subscriber. However, without being limited thereto, the electronic device 901 may function as the NAN publisher, and the electronic device 801 may function as the NAN subscriber.

According to an embodiment, the electronic device 801 and the electronic device 901 may search for a counterpart through NAN publication, NAN subscription, and/or NAN follow-up message exchanges. According to an embodiment, the electronic device 801 and the electronic device 901 may exchange an NDP request and an NDP response.

According to an embodiment, the NAN publication, the NAN subscription, the NAN follow-up messages, the NDP request, and/or the NDP response may include the AP information, which is information about the AP (e.g., the AP that is the DFS owner), DFS channel information, and/or an available bandwidth. The AP information, the DFS channel information, and/or the available bandwidth may be embedded in an operating mode field (e.g., refer to Table 7) and/or a channel bitmap (e.g., refer to Table 8).

According to an embodiment, the electronic device 801 may transmit an NDP key installment for encryption to the electronic device 901. The NDP key installment may also include the AP information, which is the information about the AP (e.g., the AP that is the DFS owner), the DFS channel information, and/or the available bandwidth. The AP information, the DFS channel information, and/or the available bandwidth may be embedded in an operating mode field (e.g., refer to Table 7) and/or a channel bitmap (e.g., refer to Table 8).

According to an embodiment, the electronic device 801 and the electronic device 901 may be connected through the NDP that uses the 160 MHz bandwidth of the 5 GHz band (e.g., the DFS channel). The electronic device 801 and the electronic device 901 may perform NAN communication through the 5 GHz band (e.g., the DFS channel).

According to an embodiment, in operation 2730, the electronic device 801 may perform radar detection on the DFS channel. The electronic device 801 may transmit a NAN beacon and/or a NAN frame, as the DFS owner. The NAN beacon and/or the NAN frame may include DFS owner information. The electronic device 801 may release the connection to the AP. It is to be noted that operation 2730 may be performed optionally.

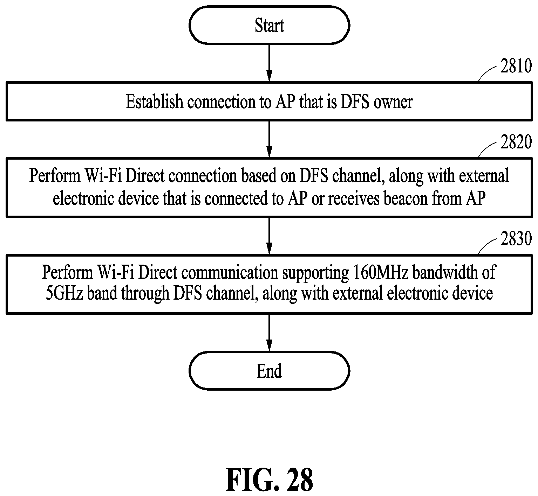

FIG. 28 is a flowchart illustrating an operating method of an electronic device, according to an embodiment.

Referring to FIG. 28, according to an embodiment, operations 2810 to 2830 may be performed in sequential order but are not necessarily performed in sequential order. For example, the order of operations 2810 to 2830 may be changed, and at least two operations may be performed in parallel.

According to an embodiment, in operation 2810, an electronic device (e.g., the electronic device 102 in FIG. 1, the electronic device 801 in FIG. 8, or an electronic device 3001 in FIG. 30) may establish a connection to an AP that is a DFS owner, at a time when extended bandwidth-based communication is required. The electronic device may be a device that operates as a group owner.

According to an embodiment, in operation 2820, the electronic device may perform Wi-Fi Direct connection, along with an external electronic device (e.g., the electronic device 101 in FIG. 1, the electronic device 901 in FIG. 9, or an electronic device 3002 in FIG. 30) that is connected to the AP or receives a beacon from the AP, based on a DFS channel.

According to an embodiment, in operation 2830, the electronic device may perform Wi-Fi Direct communication supporting a 160 MHz bandwidth of a 5 GHz band through the DFS channel with the external electronic device. The electronic device may be configured to perform the connection to the AP that is the DFS owner at a time when extended bandwidth-based communication is required (e.g., when a large data transfer is required (e.g., streaming a high-definition video, running a VR service, downloading a large file, and accessing a large DB), and when real-time communication is required (e.g., making a video call and running a high resource demanding game)).

According to an embodiment, the operations performed by the electronic device may include operations performed by a wireless communication circuit (e.g., the wireless communication circuit 810 in FIG. 8) and operations performed by a processor (e.g., the processor 820 in FIG. 8) through the wireless communication circuit.

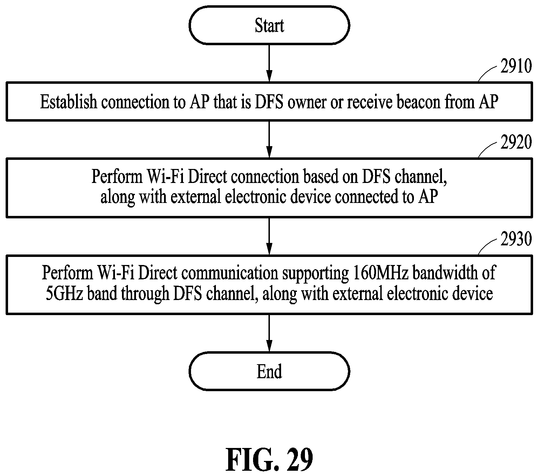

FIG. 29 is a flowchart illustrating an operating method of an electronic device, according to an embodiment.

Referring to FIG. 29, according to an embodiment, operations 2910 to 2930 may be performed in sequential order but are not necessarily performed in sequential order. For example, the order of operations 2910 to 2930 may be changed, and at least two operations may be performed in parallel.

According to an embodiment, in operation 2910, an electronic device (e.g., the electronic device 101 in FIG. 1, the electronic device 901 in FIG. 9, or an electronic device 3002 in FIG. 30) may establish a connection to an AP that is a DFS owner or receive a beacon from the AP, at a time when extended bandwidth-based communication is required. The electronic device may be a device that operates as a group client.

According to an embodiment, in operation 2920, the electronic device may perform Wi-Fi Direct connection, along with an external electronic device (e.g., the electronic device 102 in FIG. 1, the electronic device 801 in FIG. 8, or an electronic device 3001 in FIG. 30) that is connected to the AP, based on a DFS channel.

According to an embodiment, in operation 2930, the electronic device may perform Wi-Fi Direct communication supporting a 160 MHz bandwidth of a 5 GHz band through the DFS channel with the external electronic device. The electronic device may be configured to perform the connection to the AP that is the DFS owner or receive a beacon from the AP, at a time when extended bandwidth-based communication is required (e.g., when a large data transfer is required (e.g., streaming a high-definition video, running a VR service, downloading a large file, and accessing a large DB), and when real-time communication is required (e.g., making a video call and running a high resource demanding game)).

According to an embodiment, the operations performed by the electronic device may include operations performed by a wireless communication circuit (e.g., the wireless communication circuit 910 in FIG. 9) and operations performed by a processor (e.g., the processor 920 in FIG. 9) through the wireless communication circuit.

FIG. 30 is a block diagram illustrating an electronic device in a network environment according to an embodiment.

Referring to FIG. 30, an electronic device 3001 in a network environment 3000 may communicate with an external electronic device 3002 via a first network 3098 (e.g., a short-range wireless communication network), or communicate with at least one of an external electronic device 3004 and a server 3008 via a second network 3099 (e.g., a long-range wireless communication network). According to an embodiment, the electronic device 3001 may communicate with the external electronic device 3004 via the server 3008. According to an embodiment, the electronic device 3001 may include a processor 3020, a memory 3030, an input module 3050, a sound output module 3055, a display module 3060, an audio module 3070, and a sensor module 3076, an interface 3077, a connecting terminal 3078, a haptic module 3079, a camera module 3080, a power management module 3088, a battery 3089, a communication module 3090, a subscriber identification module (SIM) 3096, or an antenna module 3097. In various embodiments, at least one (e.g., the connecting terminal 3078) of the above components may be omitted from the electronic device 3001, or one or more other components may be added in the electronic device 3001. In various embodiments, some (e.g., the sensor module 3076, the camera module 3080, or the antenna module 3097) of the components may be integrated as a single component (e.g., the display module 3060).

The processor 3020 may execute, for example, software (e.g., a program 3040) to control at least one other component (e.g., a hardware or software component) of the electronic device 3001 connected to the processor 3020 and may perform various data processing or computation. According to an embodiment, as at least a part of data processing or computation, the processor 3020 may store a command or data received from another component (e.g., the sensor module 3076 or the communication module 3090) in a volatile memory 3032, process the command or data stored in the volatile memory 3032, and store resulting data in a non-volatile memory 3034. According to an embodiment, the processor 3020 may include a main processor 3021 (e.g., a central processing unit (CPU) or an application processor (AP)) or an auxiliary processor 3023 (e.g., a graphics processing unit (GPU), a neural processing unit (NPU), an image signal processor (ISP), a sensor hub processor, or a communication processor (CP)) that is operable independently of, or in conjunction with, the main processor 3021. For example, when the electronic device 3001 includes the main processor 3021 and the auxiliary processor 3023, the auxiliary processor 3023 may be adapted to consume less power than the main processor 3021 or to be specific to a specified function. The auxiliary processor 3023 may be implemented separately from the main processor 3021 or as a part of the main processor 3021.

The auxiliary processor 3023 may control at least some of functions or states related to at least one (e.g., the display module 3060, the sensor module 3076, or the communication module 3090) of the components of the electronic device 3001, instead of the main processor 3021 while the main processor 3021 is in an inactive (e.g., sleep) state or along with the main processor 3021 while the main processor 3021 is an active state (e.g., executing an application). According to an embodiment, the auxiliary processor 3023 (e.g., an ISP or a CP) may be implemented as a portion of another component (e.g., the camera module 3080 or the communication module 3090) that is functionally related to the auxiliary processor 3023. According to an embodiment, the auxiliary processor 3023 (e.g., an NPU) may include a hardware structure specified for artificial intelligence (AI) model processing. An AI model may be generated by machine learning. Such learning may be performed by, for example, the electronic device 3001 in which the AI model is performed, or performed via a separate server (e.g., the server 3008). Learning algorithms may include, but are not limited to, for example, supervised learning, unsupervised learning, semi-supervised learning, or reinforcement learning. The AI model may include a plurality of artificial neural network layers. An artificial neural network may include, for example, a deep neural network (DNN), a convolutional neural network (CNN), a recurrent neural network (RNN), a restricted Boltzmann machine (RBM), a deep belief network (DBN), and a bidirectional recurrent deep neural network (BRDNN), a deep Q-network, or a combination of two or more thereof, but is not limited thereto. The AI model may alternatively or additionally include a software structure other than the hardware structure.

The memory 3030 may store various data used by at least one component (e.g., the processor 3020 or the sensor module 3076) of the electronic device 3001. The data may include, for example, software (e.g., the program 3040) and input data or output data for a command related thereto. The memory 3030 may include the volatile memory 3032 or the non-volatile memory 3034. The non-volatile memory 3034 may include an internal memory 3036 and an external memory 3038.

The program 3040 may be stored as software in the memory 3030, and may include, for example, an operating system (OS) 3042, middleware 3044, or an application 3046.

The input module 3050 may receive a command or data to be used by another component (e.g., the processor 3020) of the electronic device 3001, from the outside (e.g., a user) of the electronic device 3001. The input module 3050 may include, for example, a microphone, a mouse, a keyboard, a key (e.g., a button), or a digital pen (e.g., a stylus pen).

The sound output module 3055 may output a sound signal to the outside of the electronic device 3001. The sound output module 3055 may include, for example, a speaker or a receiver. The speaker may be used for general purposes, such as playing multimedia or playing records. The receiver may be used to receive an incoming call. According to an embodiment, the receiver may be implemented separately from the speaker or as a part of the speaker.

The display module 3060 may visually provide information to the outside (e.g., a user) of the electronic device 3001. The display module 3060 may include, for example, a display, a hologram device, or a projector, and a control circuitry to control a corresponding one of the display, the hologram device, and the projector. According to an embodiment, the display module 3060 may include a touch sensor adapted to sense a touch, or a pressure sensor adapted to measure an intensity of a force incurred by the touch.

The audio module 3070 may convert a sound into an electric signal or vice versa. According to an embodiment, the audio module 3070 may obtain the sound via the input module 3050 or output the sound via the sound output module 3055 or an external electronic device (e.g., the external electronic device 3002 such as a speaker or a headphone) directly or wirelessly connected to the electronic device 3001.

The sensor module 3076 may detect an operational state (e.g., power or temperature) of the electronic device 3001 or an environmental state (e.g., a state of a user) external to the electronic device 3001 and generate an electric signal or data value corresponding to the detected state. According to an embodiment, the sensor module 3076 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 3077 may support one or more specified protocols to be used for the electronic device 3001 to be coupled with an external electronic device (e.g., the external electronic device 3002) directly (e.g., by wire) or wirelessly. According to an embodiment, the interface 3077 may include, for example, a high-definition multimedia interface (HDMI), a universal serial bus (USB) interface, a secure digital (SD) card interface, or an audio interface.

The connecting terminal 3078 may include a connector via which the electronic device 3001 may be physically connected to an external electronic device (e.g., the external electronic device 3002). According to an embodiment, the connecting terminal 3078 may include, for example, an HDMI connector, a USB connector, an SD card connector, or an audio connector (e.g., a headphone connector).

The haptic module 3079 may convert an electric signal into a mechanical stimulus (e.g., a vibration or a movement) or an electrical stimulus which may be recognized by a user via their tactile sensation or kinesthetic sensation. According to an embodiment, the haptic module 3079 may include, for example, a motor, a piezoelectric element, or an electric stimulator.

The camera module 3080 may capture a still image and moving images. According to an embodiment, the camera module 3080 may include one or more lenses, image sensors, ISPs, or flashes.

The power management module 3088 may manage power supplied to the electronic device 3001. According to an embodiment, the power management module 3088 may be implemented as, for example, at least a part of a power management integrated circuit (PMIC).

The battery 3089 may supply power to at least one component of the electronic device 3001. According to an embodiment, the battery 3089 may include, for example, a primary cell which is not rechargeable, a secondary cell which is rechargeable, or a fuel cell.

The communication module 3090 may support establishing a direct (e.g., wired) communication channel or a wireless communication channel between the electronic device 3001 and an external electronic device (e.g., the external electronic device 3002, the external electronic device 3004, or the server 3008) and performing communication via the established communication channel. The communication module 3090 may include one or more communication processors that are operable independently of the processor 3020 (e.g., an AP) and that support direct (e.g., wired) communication or wireless communication. According to an embodiment, the communication module 3090 may include a wireless communication module 3092 (e.g., a cellular communication module, a short-range wireless communication module, or a global navigation satellite system (GNSS) communication module) or a wired communication module 3094 (e.g., a local area network (LAN) communication module or a power line communication (PLC) module). A corresponding one of these communication modules may communicate with the external electronic device 3004 via the first network 3098 (e.g., a short-range communication network, such as, Bluetooth^{™}, wireless-fidelity (Wi-Fi) direct, or infrared data association (IrDA)) or the second network 3099 (e.g., a long-range communication network, such as a legacy cellular network, a 5th generation (5G) network, a next-generation communication network, the Internet, or a computer network (e.g., an LAN or a wide area network (WAN))). These various types of communication modules may be implemented as a single component (e.g., a single chip), or may be implemented as multiple components (e.g., multi chips) separate from each other. The wireless communication module 3092 may identify and authenticate the electronic device 3001 in a communication network, such as the first network 3098 or the second network 3099, using subscriber information (e.g., international mobile subscriber identity (IMSI)) stored in the SIM 3096.

The wireless communication module 3092 may support a 5G network after a 4th generation (4G) network, and a next-generation communication technology, e.g., a new radio (NR) access technology. The NR access technology may support enhanced mobile broadband (eMBB), massive machine type communications (mMTC), or ultra-reliable and low-latency communications (URLLC). The wireless communication module 3092 may support a high-frequency band (e.g., an mmWave band) to achieve, e.g., a high data transmission rate. The wireless communication module 3092 may support various technologies for securing performance on a high-frequency band, such as, e.g., beamforming, massive multiple-input and multiple-output (MIMO), full dimensional MIMO (FD-MIMO), an antenna array, analog beamforming, or a large-scale antenna. The wireless communication module 3092 may support various requirements specified in the electronic device 3001, an external electronic device (e.g., the external electronic device 3004), or a network system (e.g., the second network 3099). According to an embodiment, the wireless communication module 3092 may support a peak data rate (e.g., 20 Gbps or more) for implementing eMBB, loss coverage (e.g., 164 dB or less) for implementing mMTC, or U-plane latency (e.g., 0.5 ms or less for each of downlink (DL) and uplink (UL), or a round trip of 1 ms or less) for implementing URLLC.

The antenna module 3097 may transmit or receive a signal or power to or from the outside (e.g., an external electronic device) of the electronic device 3001. According to an embodiment, the antenna module 3097 may include an antenna including a radiating element including a conductive material or a conductive pattern formed in or on a substrate (e.g., a printed circuit board (PCB)). According to an embodiment, the antenna module 3097 may include a plurality of antennas (e.g., array antennas). In such a case, at least one antenna appropriate for a communication scheme used in a communication network, such as the first network 3098 or the second network 3099, may be selected by, for example, the communication module 3090 from the plurality of antennas. The signal or the power may be transmitted or received between the communication module 3090 and the external electronic device via the at least one selected antenna. According to an embodiment, another component (e.g., a radio frequency integrated circuit (RFIC)) other than the radiating element may be additionally formed as a part of the antenna module 3097.

According to an embodiment, the antenna module 3097 may form an mmWave antenna module. According to an embodiment, the mmWave antenna module may include a PCB, an RFIC disposed on a first surface (e.g., a bottom surface) of the PCB or adjacent to the first surface and capable of supporting a designated high-frequency band (e.g., the mmWave band), and a plurality of antennas (e.g., an antenna array) disposed on a second surface (e.g., a top or a side surface) of the PCB or adjacent to the second surface and capable of transmitting or receiving signals in the designated high-frequency band.

At least some of the above-described components may be coupled mutually and communicate signals (e.g., commands or data) therebetween via an inter-peripheral communication scheme (e.g., a bus, general-purpose input and output (GPIO), serial peripheral interface (SPI), or mobile industry processor interface (MIPI)).

According to an embodiment, commands or data may be transmitted or received between the electronic device 3001 and the external electronic device 3004 via the server 3008 coupled with the second network 3099. Each of the external electronic devices 3002 and 3004 may be a device of the same type as or a different type from the electronic device 3001. According to an embodiment, all or some of operations to be executed by the electronic device 3001 may be executed at one or more of the external electronic devices 3002 and 3004, and the server 3008. For example, if the electronic device 3001 needs to perform a function or a service automatically, or in response to a request from a user or another device, the electronic device 3001, instead of, or in addition to, executing the function or the service, may request one or more external electronic devices to perform at least a part of the function or the service. The one or more external electronic devices receiving the request may perform the at least part of the function or the service requested, or an additional function or an additional service related to the request, and may transfer an outcome of the performing to the electronic device 3001. The electronic device 3001 may provide the outcome, with or without further processing of the outcome, as at least a part of a reply to the request. To that end, a cloud computing, distributed computing, mobile edge computing (MEC), or client-server computing technology may be used, for example. The electronic device 3001 may provide ultra-low latency services using, e.g., distributed computing or mobile edge computing. In an embodiment, the external electronic device 3004 may include an Internet-of-things (IoT) device. The server 3008 may be an intelligent server using machine learning and/or a neural network. According to an embodiment, the external electronic device 3004 or the server 3008 may be included in the second network 3099. The electronic device 3001 may be applied to intelligent services (e.g., smart home, smart city, smart car, or healthcare) based on 5G communication technology or IoT-related technology.

According to various embodiments, an electronic device may be a device of one of various types. The electronic device may include, as non-limiting examples, a portable communication device (e.g., a smartphone, etc.), a computing device, a portable multimedia device, a portable medical device, a camera, a wearable device, or a home appliance. However, the electronic device is not limited to the preceding examples.

It should be appreciated that various embodiments of the disclosure and the terms used therein are not intended to limit the technological features set forth herein to particular embodiments and include various changes, equivalents, or replacements for a corresponding embodiment. In connection with the description of the drawings, like reference numerals may be used for similar or related components. As used herein, "A or B," "at least one of A and B," "at least one of A or B," "A, B or C," "at least one of A, B and C," and "A, B, or C," each of which may include any one of the items listed together in the corresponding one of the phrases, or all possible combinations thereof. Terms such as "first" "second," or "1st" or "2nd" may simply be used to distinguish the component from other components in question, and do not limit the components in other aspects (e.g., importance or order). It is to be understood that if an element (e.g., a first element) is referred to, with or without the term "operatively" or "communicatively," as "coupled with," "coupled to," "connected with," or "connected to" another element (e.g., a second element), it means that the element may be coupled with the other element directly (e.g., by wire), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry." A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software including one or more instructions that are stored in a storage medium (e.g., an internal memory or an external memory) that is readable by a device (e.g., a machine). For example, a processor of the machine (e.g., an electronic device) may invoke at least one of the one or more instructions stored in the storage medium, and execute it. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Here, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

According to an embodiment, an electronic device (e.g., the electronic device 102 in FIG. 1, the electronic device 801 in FIG. 7, and the electronic device 3001 in FIG. 30) may include a wireless communication circuit (e.g., the wireless communication circuit 810 in FIG. 8 and the wireless communication circuit 3092 in FIG. 30) and a processor (e.g., the processor 820 in FIG. 8 and the processor 3020 in FIG. 30). The electronic device may include a memory (e.g., the memory 830 in FIG. 8 and the memory 3030 in FIG. 30) storing instructions. The instructions may, when executed by the processor, cause the electronic device to establish a connection to an AP which is a DFS owner, in case extended bandwidth-based communication is required. The instructions may, when executed by the processor, cause the electronic device to establish a Wi-Fi Direct connection to an external electronic device (e.g., the electronic device 101 in FIG. 1, the electronic device 901 in FIG. 7, and the electronic device 3002 in FIG. 30) connected to the AP or configured to receive a beacon from the AP, based on a DFS channel. The instructions may, when executed by the processor, cause the electronic device to perform Wi-Fi Direct communication supporting a 160 MHz bandwidth of a 5 GHz band with the external electronic device through the DFS channel.

According to an embodiment, the instructions may, when executed by the processor, cause the electronic device to check whether the electronic device supports the 160 MHz bandwidth of the 5 GHz band. The instructions may, when executed by the processor, cause the electronic device to perform passive scanning to find the DFS owner. The instructions may, when executed by the processor, cause the electronic device to connect the AP found through the passive scanning.

According to an embodiment, the instructions may, when executed by the processor, cause the electronic device to perform peer device finding. The instructions may, when executed by the processor, cause the electronic device to perform a group owner negotiation of a Wi-Fi Direct communication group with the external electronic device found through the peer device finding. The instructions may, when executed by the processor, cause the electronic device to perform provisioning with the external electronic device. The group owner negotiation may include exchanging at least one of a group owner negotiation request, a group owner negotiation response, or a group owner negotiation confirmation. Each of the group owner negotiation request and the group owner negotiation response may include at least one of information about the AP, a group owner intent, a DFS channel list, or an available bandwidth.

According to an embodiment, the information about the AP may be embedded in a WLAN AP information attribute. The group owner intent may be embedded in a group owner intent attribute. The DFS channel list or the available bandwidth may be embedded in a channel list attribute.

According to an embodiment, the electronic device connected to the AP may be configured to operate as a group owner, with the group owner intent greater than that of the external electronic device.

According to an embodiment, the instructions may, when executed by the processor, cause the electronic device to release the connection to the AP. The instructions may, when executed by the processor, cause the electronic device to transmit a beacon, as the DFS owner and the group owner.

According to an embodiment, the instructions may, when executed by the processor, cause the electronic device to check whether the electronic device supports the 160 MHz bandwidth of the 5 GHz band. The instructions may, when executed by the processor, cause the electronic device to transmit a passive scan request to the external electronic device based on OOB. The instructions may, when executed by the processor, cause the electronic device to receive a response from the external electronic device based on the OOB. The instructions may, when executed by the processor, cause the electronic device to perform passive scanning to find the DFS owner. The instructions may, when executed by the processor, cause the electronic device to connect the AP found through the passive scanning.

According to an embodiment, the external electronic device may be configured to, in response to the group owner negotiation request received during the Wi-Fi Direct connection, check whether it supports the 160 MHz bandwidth of the 5 GHz band. The external electronic device may be configured to, in response to the group owner negotiation request received during the Wi-Fi Direct connection, perform passive scanning to find the DFS owner. The external electronic device may be configured to, in response to the group owner negotiation request received during the Wi-Fi Direct connection, connect the AP or receive a beacon from the AP.

According to an embodiment, the instructions may, when executed by the processor, cause the electronic device to transmit channel information of the AP to the external electronic device based on the OOB. The external electronic device may be configured to, in response to receiving the channel information of the AP, check whether the external electronic device supports the 160 MHz bandwidth of the 5 GHz band. The external electronic device may be configured to, in response to receiving the channel information of the AP, perform passive scanning to find the DFS owner. The external electronic device may be configured to, in response to receiving the channel information of the AP, connect the AP or receive a beacon from the AP.

According to an embodiment, the instructions may, when executed by the processor, cause the electronic device to check whether it is connected to the AP. The instructions may, when executed by the processor, cause the electronic device to transmit the channel information of the AP to the external electronic device based on the OOB. The external electronic device may be configured to, in response to receiving the channel information of the AP, check whether the external electronic device supports the 160 MHz bandwidth of the 5 GHz band. The external electronic device may be configured to, in response to receiving the channel information of the AP, perform passive scanning to find the DFS owner. The external electronic device may be configured to, in response to receiving the channel information of the AP, connect the AP or receive a beacon from the AP.

According to an embodiment, the instructions may, when executed by the processor, cause the electronic device to be triggered as a group owner of a Wi-Fi Direct communication group in response to being connected to the AP. The instructions may, when executed by the processor, cause the electronic device to transmit, to the outside, a beacon including at least one of the information about the AP or the available bandwidth. The instructions may, when executed by the processor, cause the electronic device to perform provisioning with the external electronic device receiving the beacon. The external electronic device may be configured to, in response to receiving the beacon, connect the AP or receive a beacon from the AP.

According to an embodiment, the instructions may, when executed by the processor, cause the electronic device to transmit the passive scan request to the external electronic device based on the OOB. The instructions may, when executed by the processor, cause the electronic device to receive a response from the external electronic device based on the OOB. The external electronic device may be configured to, in response to receiving the passive scan request, check whether the external electronic device supports the 160 MHz bandwidth of the 5 GHz band.

According to an embodiment, an operating method of an electronic device (e.g., the electronic device 101 in FIG. 1, the electronic device 901 in FIG. 7, and the electronic device 3002 in FIG. 30) may include establishing a connection to an AP which is a DFS owner or receiving a beacon from the AP, in case extended bandwidth-based communication is required. The operating method may include establishing a Wi-Fi Direct connection to an external electronic device (e.g., the electronic device 102 in FIG. 1, the electronic device 801 in FIG. 7, and the electronic device 3001 in FIG. 30) connected to the AP, based on a DFS channel. The operating method may include performing Wi-Fi Direct communication supporting a 160 MHz bandwidth of a 5 GHz band with the external electronic device through the DFS channel.

According to an embodiment, the external electronic device connected to the AP may be configured to operate as a group owner, with a group owner intent greater than that of the electronic device.

According to an embodiment, the electronic device may be configured to operate as a group client, with a group owner intent less than or equal to that of the external electronic device.

According to an embodiment, the establishing of the connection to the AP or the receiving of the beacon from the AP may include checking whether the electronic supports the 160 MHz bandwidth of the 5 GHz band. The establishing of the connection to the AP or the receiving of the beacon from the AP may include performing passive scanning to find the DFS owner. The establishing of the connection to the AP or the receiving of the beacon from the AP may include connecting the AP found through the passive scanning or receiving the beacon from the AP.

According to an embodiment, the establishing of the connection to the AP or the receiving of the beacon from the AP may be triggered in response to a group owner negotiation request received from the external electronic device during the Wi-Fi Direct connection.

According to an embodiment, the performing of the Wi-Fi Direct connection may include performing peer device finding. The performing of the Wi-Fi Direct connection may include performing a group owner negotiation of a Wi-Fi Direct communication group with the external electronic device found through the peer device finding. The performing of the Wi-Fi Direct connection may include performing provisioning with the external electronic device. The performing of the group owner negotiation may include exchanging at least one of the group owner negotiation request, a group owner negotiation response, or a group owner negotiation confirmation. Each of the group owner negotiation request and the group owner negotiation response may include at least one of information about the AP, a group owner intent, a DFS channel list, or an available bandwidth.

According to an embodiment, the information about the AP may be embedded in a WLAN AP information attribute. The group owner intent may be embedded in a group owner intent attribute. The DFS channel list or the available bandwidth may be embedded in a channel list attribute.

According to an embodiment, the operating method may further include receiving a beacon by the external electronic device that has released the connection to the AP as the DFS owner or the group owner.

In a first example, there is provided a method of an electronic device (e.g. electronic device 102, 801, 3001), the method comprising: establishing a connection to an access point (AP) which is a dynamic frequency selection (DFS) owner; establishing, based on a DFS channel, a Wi-Fi Direct connection to an external electronic device (e.g. electronic device 101, 901, 3002) connected to the AP or configured to receive a beacon from the AP; and performing Wi-Fi Direct communication supporting a 160 megahertz (MHz) bandwidth of a 5 gigahertz (GHz) band with the external electronic device through the DFS channel.

In a second example, there is provided the method of the first example, wherein establishing the connection to the AP comprises: checking whether the electronic device supports the 160 MHz bandwidth of the 5 GHz band; performing passive scanning to find the DFS owner; and connecting to the AP found through the passive scanning.

In a third example, there is provided the method of the first example, wherein establishing the connection to the AP comprises checking whether the electronic device is connected to the AP.

In a fourth example, there is provided the method of any of the first to third examples, further comprising: transmitting a passive scan request to the external electronic device based on out-of-band (OOB); and receiving a response from the external electronic device based on the OOB.

In a fifth example, there is provided the method of any of the first to third examples, further comprising: transmitting channel information of the AP to the external electronic device based on out-of-band (OOB).

In a sixth example, there is provided the method of any of the first to fifth examples, further comprising: performing peer device finding; performing a group owner negotiation of a Wi-Fi Direct communication group with the external electronic device found through the peer device finding; and performing provisioning with the external electronic device; wherein the group owner negotiation comprises exchanging at least one of a group owner negotiation request, a group owner negotiation response, or a group owner negotiation confirmation, wherein each of the group owner negotiation request and the group owner negotiation response comprises at least one of: information about the AP, a group owner intent, a DFS channel list, or an available bandwidth.

In a seventh example, there is provided the method of the sixth example, wherein: the information about the AP is embedded in a wireless local-area network (WLAN) AP information attribute; the group owner intent is embedded in a group owner intent attribute; and the DFS channel list or the available bandwidth is embedded in a channel list attribute.

In an eighth example, there is provided the method of the fifth or sixth example, further comprising operating as a group owner in the case that the group owner intent of the electronic device is greater than the group owner intent of the external electronic device or in the case that the external electronic device is not connected to the AP.

In a ninth example, there is provided the method of the eighth example, further comprising operating as a group client in the case that the external electronic device is connected to the AP and the group owner intent of the electronic device is less than the group owner intent of the external electronic device.

In a tenth example, there is provided the method of any of the first to fifth examples, further comprising: operating as a group owner of a Wi-Fi Direct communication group in response to connecting to the AP; transmitting a beacon comprising at least one of the information about the AP or the available bandwidth; and performing provisioning with the external electronic device receiving the beacon.

In an eleventh example, there is provided the method of any of the first to fifth examples, further comprising: operating as a hotspot in response to connecting to the AP; transmitting a beacon comprising at least one of the information about the AP or the available bandwidth; and performing provisioning with the external electronic device receiving the beacon.

In a twelfth example, there is provided the method of any of the first to eleventh examples, further comprising: releasing the connection to the AP; and transmitting a beacon, as at least one of the DFS owner, the group owner, and the hotspot.

In a thirteenth example, there is provided the method of any of the first to twelfth examples, further comprising establishing the connection to the AP in response to determining that extended bandwidth based communication is required.

In a fourteenth example, there is provided a method of an electronic device (e.g. electronic device 101, 901, 3002), the method comprising: establishing a connection to an access point (AP) which is a dynamic frequency selection (DFS) owner or receiving a beacon from the AP; establishing, based on a DFS channel, a Wi-Fi Direct connection to an external electronic device (e.g. electronic device 102, 801, 3001) connected to the AP; and performing Wi-Fi Direct communication supporting a 160 megahertz (MHz) bandwidth of a 5 gigahertz (GHz) band with the external electronic device (102, 801, 3001) through the DFS channel.

In a fifteenth example, there is provided the method of the fourteenth example, wherein establishing the connection to the AP or receiving the beacon from the AP comprises: performing passive scanning to find the DFS owner; and connecting to the AP found through the passive scanning or receiving the beacon from the AP.

In a sixteenth example, there is provided the method of the fourteenth or fifteenth examples, wherein establishing the connection to the AP or receiving the beacon from the AP comprises: checking whether the electronic device (101, 901, 3002) supports the 160 MHz bandwidth of the 5 GHz band.

In a seventeenth example, there is provided the method of any of the fourteenth to sixteenth examples, further comprising: performing peer device finding; performing a group owner negotiation of a Wi-Fi Direct communication group with the external electronic device found through the peer device finding; and performing provisioning with the external electronic device, wherein the group owner negotiation comprises exchanging at least one of a group owner negotiation request, a group owner negotiation response, or a group owner negotiation confirmation, wherein each of the group owner negotiation request and the group owner negotiation response comprises at least one of: information about the AP, a group owner intent, a DFS channel list, or an available bandwidth.

In an eighteenth example, there is provided the method of the seventeenth example, wherein: the information about the AP is embedded in a wireless local-area network (WLAN) AP information attribute; the group owner intent is embedded in a group owner intent attribute; and the DFS channel list or the available bandwidth is embedded in a channel list attribute.

In a nineteenth example, there is provided the method of the seventeenth or eighteenth examples, further comprising operating as a group owner in the case that the group owner intent of the electronic device is greater than the group owner intent of the external electronic device and the electronic device is connected to the AP.

In a twentieth example, there is provided the method of the nineteenth example, further comprising operating as a group client in the case that the electronic device is not connected to the AP or in the case the that electronic device is connected to the AP and the group owner intent of the electronic device is less than the group owner intent of the external electronic device.

In a twenty-first example, there is provided the method of the twentieth example, further comprising receiving, from the external electronic device, a beacon comprising at least one of the information about the AP or the available bandwidth.

In a twenty-second example, there is provided the method of any of the fourteenth to twenty-first examples, wherein establishing the connection to the AP or receiving the beacon from the AP is triggered in response to at least one of: a group owner negotiation request received from the external electronic device during the Wi-Fi Direct connection, a passive scan request received from the external electronic device based on out-of-band (OOB), channel information of the AP received from the external electronic device based on OOB, or a beacon received from the external electronic device, the beacon comprising at least one of the information about the AP or the available bandwidth.

In a twenty-third example, there is provided the method of any of the fourteenth to twenty-second examples, further comprising establishing the connection to the AP or receiving the beacon from the AP in response to determining that extended bandwidth based communication is required.

In a twenty-fourth example, there is provided a method of a system comprising a first electronic device and a second electronic device, the method comprising the method of at least one of the first to twenty-third examples.

In a twenty-fifth example, there is provided an electronic device (e.g. electronic device 102, 801, 3001) comprising: a wireless communication circuit; a processor; and a memory storing instructions, wherein the instructions, when executed by the processor, cause the electronic device to operate according to the method of any of the first to thirteenth examples.

In a twenty-sixth example, there is provided an electronic device (e.g. electronic device 101, 901, 3002) comprising: a wireless communication circuit; a processor; and a memory storing instructions, wherein the instructions, when executed by the processor, cause the electronic device to operate according to the method of any of the fourteenth to twenty-third examples.

In a twenty-seventh example, there is provided a system comprising a first electronic device according to the twenty-fifth example and a second electronic device according to the twenty-sixth example.

## Claims

1. An electronic device (102, 801, 3001), comprising:
a wireless communication circuit (810);
a processor (820); and
a memory (830) storing instructions,
wherein the instructions, when executed by the processor (820), cause the electronic device (102, 801, 3001) to:
establish a connection to an access point (AP) which is a dynamic frequency selection (DFS) owner, in case extended bandwidth-based communication is required;
establish, based on a DFS channel, a Wi-Fi Direct connection to an external electronic device (101, 901, 3002) connected to the AP or configured to receive a beacon from the AP; and
perform Wi-Fi Direct communication supporting a 160 megahertz (MHz) bandwidth of a 5 gigahertz (GHz) band with the external electronic device (101, 901, 3002) through the DFS channel.

2. The electronic device (102, 801, 3001) of claim 1, wherein the instructions, when executed by the processor (820), cause the electronic device (102, 801, 3001) to:
check whether the electronic device (102, 801, 3001) supports the 160 MHz bandwidth of the 5 GHz band;
perform passive scanning to find the DFS owner; and
connect to the AP found through the passive scanning.

3. The electronic device (102, 801, 3001) of any one of claims 1 and 2, wherein the instructions, when executed by the processor (820), cause the electronic device (102, 801, 3001) to:
perform peer device finding;
perform a group owner negotiation of a Wi-Fi Direct communication group with the external electronic device (101, 901, 3002) found through the peer device finding; and
perform provisioning with the external electronic device (101, 901, 3002),
wherein the group owner negotiation comprises exchanging at least one of a group owner negotiation request, a group owner negotiation response, or a group owner negotiation confirmation,
wherein each of the group owner negotiation request and the group owner negotiation response comprises at least one of:
information about the AP, a group owner intent, a DFS channel list, or an available bandwidth.

4. The electronic device (102, 801, 3001) of claim 3, wherein:
the information about the AP is embedded in a wireless local-area network (WLAN) AP information attribute;
the group owner intent is embedded in a group owner intent attribute; and
the DFS channel list or the available bandwidth is embedded in a channel list attribute.

5. The electronic device (102, 801, 3001) of claim 3 or 4, wherein the electronic device (102, 801, 3001) connected to the AP is configured to:
operate as a group owner in the case that the group owner intent of the electronic device (102, 801, 3001) is greater than the group owner intent of the external electronic device (101, 901, 3002) or in the case that the external electronic device (101, 901, 3002) is not connected to the AP.

6. The electronic device (102, 801, 3001) of claim 5, wherein the instructions, when executed by the processor (820), cause the electronic device (102, 801, 3001) to:
release the connection to the AP; and
transmit a beacon, as the DFS owner and the group owner.

7. The electronic device (102, 801, 3001) of any one of claims 1 to 6, wherein the instructions, when executed by the processor (820), cause the electronic device (102, 801, 3001) to:
check whether the electronic device (102, 801, 3001) supports the 160 MHz bandwidth of the 5 GHz band;
transmit a passive scan request to the external electronic device (101, 901, 3002) based on out-of-band (OOB);
receive a response from the external electronic device (101, 901, 3002) based on the OOB;
perform passive scanning to find the DFS owner; and
connect to the AP found through the passive scanning.

8. The electronic device (102, 801, 3001) of any one of claims 1 to 7, wherein the instructions, when executed by the processor (820), cause the electronic device (102, 801, 3001) to:
transmit channel information of the AP to the external electronic device (101, 901, 3002) based on out-of-band (OOB),
wherein the external electronic device (101, 901, 3002) is configured to:
in response to receiving the channel information of the AP,
check whether the external electronic device (101, 901, 3002) supports the 160 MHz bandwidth of the 5 GHz band;
perform passive scanning to find the DFS owner; and
connect to the AP or receive a beacon from the AP.

9. The electronic device (102, 801, 3001) of any one of claims 1 to 8, wherein the instructions, when executed by the processor (820), cause the electronic device (102, 801, 3001) to:
check whether it is connected to the AP; and
transmit the channel information of the AP to the external electronic device (101, 901, 3002) based on the OOB,
wherein the external electronic device (101, 901, 3002) is configured to:
in response to receiving the channel information of the AP,
check whether the external electronic device (101, 901, 3002) supports the 160 MHz bandwidth of the 5 GHz band;
perform passive scanning to find the DFS owner; and
connect to the AP or receive a beacon from the AP.

10. The electronic device (102, 801, 3001) of any one of claims 1 to 9, wherein the instructions, when executed by the processor (820), cause the electronic device (102, 801, 3001) to:
transmit a beacon comprising at least one of the information about the AP or the available bandwidth; and
perform provisioning with the external electronic device (101, 901, 3002) receiving the beacon,
wherein the external electronic device (101, 901, 3002) is configured to:
in response to receiving the beacon, connect to the AP or receive a beacon from the AP.

11. The electronic device (102, 801, 3001) of any one of claims 1 to 10, wherein the instructions, when executed by the processor (820), cause the electronic device (102, 801, 3001) to:
transmit the passive scan request to the external electronic device (101, 901, 3002) based on the OOB; and
receive a response from the external electronic device (101, 901, 3002) based on the OOB,
wherein the external electronic device (101, 901, 3002) is configured to:
in response to receiving the passive scan request,
check whether the external electronic device (101, 901, 3002) supports the 160 MHz bandwidth of the 5 GHz band.

12. An operating method of an electronic device (101, 901, 3002), the method comprising:
establishing a connection to an access point (AP) which is a dynamic frequency selection (DFS) owner or receiving a beacon from the AP, in case extended bandwidth-based communication is required;
establishing, based on a DFS channel, a Wi-Fi Direct connection to an external electronic device (102, 801, 3001) connected to the AP; and
performing Wi-Fi Direct communication supporting a 160 megahertz (MHz) bandwidth of a 5 gigahertz (GHz) band with the external electronic device (102, 801, 3001) through the DFS channel.

13. The operating method of claim 12, wherein the establishing of the connection to the AP or the receiving of the beacon from the AP comprises:
checking whether the electronic device (101, 901, 3002) supports the 160 MHz bandwidth of the 5 GHz band;
performing passive scanning to find the DFS owner; and
connecting to the AP found through the passive scanning or receiving the beacon from the AP.

14. The operating method of any one of claims 12 and 13, wherein the establishing of the connection to the AP or the receiving of the beacon from the AP is triggered in response to a group owner negotiation request received from the external electronic device (102, 801, 3001) during the Wi-Fi Direct connection.

15. The operating method of any one of claims 12 to 14, wherein the performing of the Wi-Fi Direct connection comprises:
performing peer device finding;
performing a group owner negotiation of a Wi-Fi Direct communication group with the external electronic device (102, 801, 3001) found through the peer device finding; and
performing provisioning with the external electronic device (102, 801, 3001),
wherein the performing of the group owner negotiation comprises exchanging at least one of the group owner negotiation request, a group owner negotiation response, or a group owner negotiation confirmation,
wherein each of the group owner negotiation request and the group owner negotiation response comprises at least one of:
information about the AP, a group owner intent, a DFS channel list, or an available bandwidth.
